# EUROPEAN PATENT APPLICATION

(11) **EP 4 682 993 A1**
(43) Date of publication of application: **21.01.2026**
(21) Application number: 23935083.8
(22) Date of filing: 29.11.2023
(51) Int. Cl.: H01M 4/62, H01M 10/052, H01M 10/42

(54) **LITHIUM METAL NEGATIVE ELECTRODE MATERIAL, NEGATIVE ELECTRODE SHEET, LITHIUM METAL SECONDARY BATTERY, ELECTRIC DEVICE, PREPARATION METHOD AND USE**

(30) Priority: 28.04.2023 CN 202310477613
(71) Applicant: Contemporary Amperex Technology Co., Limited, Ningde, Fujian 352100 (CN)
(72) Inventor: XUE, Wenwen, Ningde, Fujian 352100 (CN); LIU, Chengyong, Ningde, Fujian 352100 (CN); HE, Xiaoning, Ningde, Fujian 352100 (CN); YANG, Wu, Ningde, Fujian 352100 (CN); SONG, Shaokang, Ningde, Fujian 352100 (CN); ZHAO, Yu, Ningde, Fujian 352100 (CN)
(74) Representative: Jacob, Reuben Ellis
(86) International application number: PCT/CN2023/135146
(87) International publication number: WO 2024/221916

(57) **Abstract**

The present application relates to a lithium metal negative electrode material, a negative electrode sheet, a lithium metal secondary battery, an electric device, a preparation method, and use. The lithium metal negative electrode material includes lithium-containing metal and a polymer Poly bonded to lithium metal in the lithium-containing metal, the polymer Poly has a linear carbon chain, and a first side chain and a second side chain that are grafted to a side group of the linear carbon chain, the first side chain contains a fluorinated aliphatic chain Rf, and the second side chain contains an EO block.

## Description

### CROSS-REFERENCE TO RELATED APPLICATIONS

The present application claims priority to Chinese Patent Application No. CN2023104776133, filed on April 28, 2023 and entitled "Lithium Metal Negative Electrode Material, Negative Electrode Sheet, Lithium Metal Secondary Battery, Electric device, Preparation Method, and Use", which is incorporated herein by reference in its entirety.

### TECHNICAL FIELD

The present application relates to the field of lithium metal secondary battery technologies, and in particular, to a lithium metal negative electrode material, a negative electrode sheet, a lithium metal secondary battery, an electric device, a preparation method, and use.

### BACKGROUND

The statement here merely provides the background information related to the present application and does not necessarily constitute the prior art.

With development of various electronic products such as smartphones, tablet computers, smart wearables, electric tools, and electric vehicles, lithium metal secondary batteries with high energy density are increasingly favored, and the high energy density is the irreversible trend in the future development of lithium metal secondary batteries in the future.

However, currently, the lithium metal secondary batteries on the market usually have a problem of a rapid decline in a cycle life and very severe problems of a short circuit and safety risk caused by lithium dendrites.

### SUMMARY

According to various embodiments and examples of the present application, the present application provides a lithium metal negative electrode material, a negative electrode sheet, a lithium metal secondary battery, an electric device, a preparation method, and use. The lithium metal negative electrode material comprises a polymer layer that is dense and uniform and that is firmly bonded to lithium metal, the polymer layer has specific elasticity, flexibility and swellability, a polymer component in the polymer layer comprises a fluorinated aliphatic chain and a flexible side chain, and the polymer layer can effectively inhibit contact reaction between an electrolyte solution and lithium, reduce consumption of the electrolyte solution and lithium metal, prolong a cycle life of a battery, and further inhibit a problem of lithium dendrite.

According to a first aspect, the present application provides a lithium metal negative electrode material, comprising lithium-containing metal and a polymer Poly bonded to lithium metal in the lithium-containing metal, wherein the polymer Poly has a linear carbon chain, and a first side chain and a second side chain that are grafted to a side group of the linear carbon chain, the first side chain contains a fluorinated aliphatic chain Rf, the second side chain contains an EO block, and the EO block has a structure of *-(CH₂CH₂O)_{z}-, wherein z is a positive integer, and * indicates an attachment site pointing to the linear carbon chain.

The lithium metal negative electrode material provided in the present application is coated with a dense and uniform polymer layer on a surface of the lithium-containing metal, the polymer layer can function as a protective layer at a negative electrode of a lithium metal secondary battery, which can effectively inhibit contact reaction between an electrolyte solution and lithium metal, reduce consumption of the electrolyte solution and the lithium metal, and prolong a cycle life of a battery. The linear carbon chain can impart specific flexibility to the polymer Poly and the polymer layer. The polymer component Poly in the polymer layer has a stable chemical connection to the lithium-containing metal, so that the polymer layer is firmly bonded to the surface of the lithium-containing metal, and the polymer layer can be prevented from peeling off from the surface of the lithium-containing metal when the volume on the negative electrode side changes during charge and discharge. The polymer Poly contains the fluorinated aliphatic chain Rf. In an aspect, introduction of fluorine can regulate and control deposition of lithium ions, promote uniform deposition of lithium ions, improve deposition morphology of lithium dendrites in the lithium metal secondary battery, inhibit formation of lithium dendrites, and alleviate volume expansion on the negative electrode side of the lithium metal. In another aspect, the presence of the fluorinated aliphatic chain Rf can impart specific elasticity to the polymer layer, which is beneficial to better adhesion between the polymer layer and the lithium-containing metal and between the protective layer and a separator. The polymer Poly further contains a flexible EO block, which not only can enhance flexibility of the polymer layer, strengthen tight adhesion between the polymer layer and a negative electrode sheet substrate and between the protective layer and the separator side, reduce interface impedance, but also can increase elasticity of the protective layer, so that the protective layer can better adapt to larger volume expansion on the negative electrode side, to reduce or avoid cracking of the polymer layer, and thus can exert a protective effect for a longer time. In addition, the dense and uniform polymer layer can alternatively be swollen by the electrolyte solution, and can provide good ionic conductivity after being swollen, so that lithium ions can be efficiently transferred in the polymer layer and at a lithium metal interface, interface polarization caused by introduction of the polymer layer is small, and charge/discharge cycle stability of the battery is good. The above-described features of the polymer layer are in cooperation with each other, which can excellently improve a cycle life of the lithium metal secondary battery, and can suppress the lithium dendrite problem.

In some implementations, in a structure of the polymer Poly, the quantity of the first side chains is m, and the quantity of the second side chains is n, wherein m and n each are independently an integer greater than or equal to 8.

Optionally, m and n each are independently an integer selected from 8 to 600.

In some implementations, the polymer Poly satisfies one or more of the following features:

The ratio of m to n satisfies 0.5 ≤ m/n ≤ 8, optionally 1 ≤ m/n ≤ 5, and further optionally 1 ≤ m/n ≤ 3;
m is an integer selected from 50 to 250, and optionally, m is an integer selected from 50 to 200; and
n is an integer selected from 25 to 200, and optionally, n is an integer selected from 40 to 150.

Introduction of the second side chain containing the EO block can improve the flexibility and swelling ratio of the polymer layer, and the presence of the first side chain containing the fluorinated aliphatic chain Rf helps improve the elasticity of the polymer layer. Further, the quantity of two types of copolymerization units in the polymer Poly is controlled, so that the flexibility and elasticity of the polymer layer can be regulated at the same time, thereby regulating the elastic deformation of the polymer layer, and regulating the degree of adhesion between the polymer layer and the substrate and between the polymer layer and the separator. Larger elastic deformation helps better adapt to larger volume expansion on the negative electrode side during charge, which can reduce or avoid cracking of the protective layer to achieve a protective effect for a long time. Better flexibility facilitates tight adhesion between the polymer layer and the lithium metal and between the polymer layer and the separator, reduces interface impedance, and helps improve energy density and power density of the battery.

The ratio of m/n is controlled, so that regulating of the elasticity, swelling ratio and ionic conductivity of the polymer Poly can be optimized. The elasticity, swelling ratio and ionic conductivity of the polymer are comprehensively controlled, so that the polymer protective layer can better and more permanently play the role of isolating contact of the electrolyte solution and regulating lithium deposition on the negative electrode side.

In some implementations, z is an integer selected from 2 to 10.

Optionally, z is an integer selected from 3 to 7.

The value of z is adjusted, i.e. the length of the EO block is adjusted, so that the flexibility of the polymer layer can be adjusted.

In some implementations, the polymer Poly comprises a repeating unit of a structure represented by (U1) and a repeating unit of a structure represented by formula (U2): 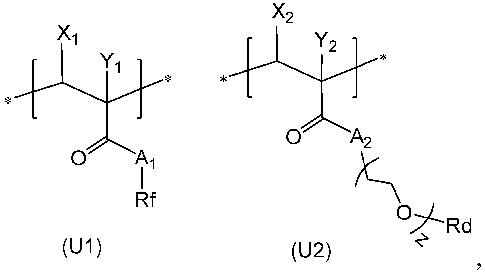 wherein
X₁ and X₂ each are independently H or an electron-withdrawing group;
Y₁ and Y₂ each are independently a cyano group, or a linking group formed by bonding a cyano group to lithium metal in the lithium-containing metal;
A₁ and A₂ each are independently O, S, or NR¹¹, and R¹¹ is H or C₁₋₃ alkyl;
Rd is hydrocarbyl or hydrocarbyl substituted by Q₁, Q₁ is selected from the following substituents: a cyano group, -C(=O)NH₂, -OC(=O)NHR⁶, and -S(=O)₂F, and R⁶ is H or C₁₋₆ alkyl; and
optionally, at least one of Y₁ and Y₂ is a linking group formed by bonding a cyano group to lithium metal in the lithium-containing metal.

In some implementations, in the structure of the polymer Poly, X₁ and X₂ each are independently H, or a cyano group, a nitro group, or -NR²¹R²² at each occurrence, and R²¹ and R²² each are independently H or C₁₋₃ alkyl.

Optionally, R²¹ and R²² each are independently H or methyl.

Further optionally, both R²¹ and R²² are methyl.

In some implementations, in the structure of the polymer Poly, A₁ and A₂ each are independently O, S, or NH at each occurrence.

Optionally, A₁ and A₂ each are independently O or NH at each occurrence.

In some implementations, Rd is C₁₋₄ hydrocarbyl.

Optionally, Rd is C₁₋₄ alkyl.

Further optionally, Rd is C₁₋₃ alkyl.

Still further optionally, Rd is methyl.

The polymer Poly may be a copolymer containing the repeating unit of the structure represented by (U1) and the repeating unit of the structure represented by formula (U2). The polymer Poly can form a chemical bonding effect between a large quantity of cyano groups located on the side groups of the backbone and the lithium metal, thereby realizing a stable chemical connection between the polymer layer and the lithium-containing metal, and further forming a covalent bond connection.

An electron-withdrawing group may be introduced into at least one of X₁ and X₂ in the polymer Poly, which helps increase reactivity of a carbon-carbon double bond in a cyanoalkenyl carboxylic acid derivative monomer (such as cyanoacrylic acid derivative monomer) during the formation of the polymer layer, promote the progress of the in-situ polymerization reaction, and helps achieve a tighter and more uniform coating of the polymer layer on the surface of the lithium-containing metal.

In addition, the fluorinated aliphatic chain Rf and the EO block can be each independently grafted to the linear carbon chain through an ester bond, an amido bond, or a thioester bond, so that a corresponding polymerization monomer can be flexibly selected.

Functional substituents may be further introduced at the ends of the EO block to better optimize performance of the polymer layer and the lithium metal secondary battery based on a requirement. For example, the introduction of cyano can further enhance a chemical bonding effect between the polymer Poly and the lithium metal, the introduction of fluorosulfonyl (-S(=O)₂F) can induce uniform deposition of lithium ions, the introduction of an amide group (-C(=O)NH₂) can enhance the elastic modulus of the protective layer, and the introduction of a urethane group (-OC(=O)-NHR⁶, wherein R⁶ may be H or alkyl) can improve the elasticity of the material through cooperation of soft and hard segments.

In some implementations, the structure of the polymer Poly comprises m repeating units represented by formula (U1) and n repeating units represented by formula (U2), and definitions of m and n are consistent with the foregoing definitions.

Optionally, the m repeating units represented by formula (U1) and the n repeating units represented by formula (U2) are linearly arranged.

Further optionally, the polymer Poly has a general structural formula represented by:

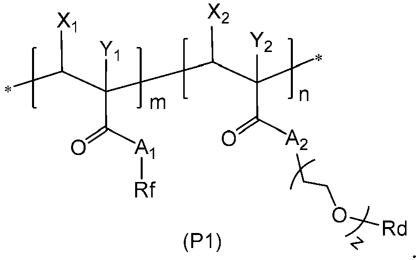

The first side chains may each be introduced by formula (U1), and the second side chains may each be introduced by formula (U2).

Further, formula (U1) and formula (U2) may jointly participate in the formation of the linear carbon chain in the polymer Poly.

In formula (P1), m + n is numerically equal to a degree of polymerization of the polymer Poly. m + n is controlled, so that the molecular weight of the polymer Poly can be controlled.

In some implementations, the polymer Poly satisfies one or more of the following features:
the fluorine substitution ratio in any fluorinated aliphatic chain Rf is independently greater than or equal to 50%;
the quantity of fluorine atoms in any fluorinated aliphatic chain Rf is independently greater than or equal to 4; and
the mass proportion of fluorine in the polymer Poly is 15% to 44%.

In some implementations, the polymer Poly satisfies one or more of the following features:
the fluorine substitution ratio in any fluorinated aliphatic chain Rf is independently greater than or equal to 55%;
the quantity of fluorine atoms in any fluorinated aliphatic chain Rf is independently greater than or equal to 5, and optionally, the quantity of fluorine atoms in any fluorinated aliphatic chain Rf is independently 5 to 15; and
the mass proportion of fluorine in the polymer Poly is 15% to 41%, optionally 20% to 41%.

In one or more manners of controlling the fluorine substitution ratio in the fluorinated aliphatic chain Rf, controlling the quantity of fluorine atoms in the fluorinated aliphatic chain Rf, and controlling the mass proportion of fluorine in the polymer Poly, uniform deposition of lithium ions can be preferably promoted, formation of lithium dendrite can be suppressed, a cycle life of lithium ion can be increased, a short-circuit risk can be reduced, and volume expansion on a negative electrode side of the lithium metal can be alleviated. In addition, the polymer layer can be further used in a lithium metal secondary battery that is subjected to charge and discharge cycles at a high current density.

For example, the mass proportion of fluorine in the polymer Poly is controlled, which helps improve the deposition morphology of lithium dendrite in the lithium metal battery and alleviate the volume expansion of the lithium metal negative electrode, and helps the polymer layer be used in the lithium metal secondary battery that is subjected to charge and discharge cycles at a high current density.

In some implementations, the polymer Poly satisfies one or more of the following features:
any fluorinated aliphatic chain Rf independently contains 2 to 10 backbone carbon atoms; and
the quantity of carbon atoms in any fluorinated aliphatic chain Rf is independently an integer selected from 2 to 10.

In some implementations, the polymer Poly satisfies one or more of the following features:
any fluorinated aliphatic chain Rf independently contains 2 to 8 backbone carbon atoms, and optionally, any fluorinated aliphatic chain Rf independently contains 3 to 8 backbone carbon atoms; and
the quantity of carbon atoms in any fluorinated aliphatic chain Rf is independently an integer selected from 2 to 8, and optionally, the quantity of carbon atoms in any fluorinated aliphatic chain Rf is independently an integer selected from 3 to 8.

The length of the side chain of fluorinated aliphatic chain Rf can be adjusted by controlling the quantity of carbon atoms in fluorinated aliphatic chain Rf, thereby imparting suitable elasticity to the polymer layer, and preferably inhibiting cracking of the polymer layer under large volume deformation.

In some implementations, in the structure of the polymer Poly, one, a plurality of, or all of fluorinated aliphatic chains Rf independently contain one or more heteroatoms selected from a group consisting of iodine, nitrogen, oxygen, sulfur, silicon, boron and phosphorus.

Optionally, the quantity of the heteroatoms in any one of one, a plurality of, or all of fluorinated aliphatic chains Rf is independently one or more.

Further optionally, the quantity of the heteroatoms in any one of one, a plurality of, or all of fluorinated aliphatic chains Rf is selected from 1, or 2 to 6.

In some implementations, in the structure of the polymer Poly, one, a plurality of, or all of fluorinated aliphatic chains Rf satisfy one or more of the following features:
the quantity of oxygen atoms in one, a plurality of, or all of fluorinated aliphatic chains Rf is 1, 2, 3, 4, or 5;
the quantity of nitrogen atoms in one, a plurality of, or all of fluorinated aliphatic chains Rf is 1, 2, or 3;
the quantity of sulfur atoms in one, a plurality of, or all of fluorinated aliphatic chains Rf is 1, 2, or 3;
the quantity of phosphorus atoms in one, a plurality of, or all of fluorinated aliphatic chains Rf is 1 or 2;
the quantity of iodine atoms in one, a plurality of, or all of fluorinated aliphatic chains Rf is 1, 2, 3, 4, 5, or 6;
the quantity of silicon atoms in one, a plurality of or all of fluorinated aliphatic chains Rf is 1 or 2; and
the quantity of boron atoms in one, a plurality of, or all of fluorinated aliphatic chains Rf is 1 or 2.

In some implementations, in the structure of the polymer Poly, one, a plurality of, or all of fluorinated aliphatic chains Rf contain one or more atoms or atomic groups selected from a group consisting of an iodine group, -NR¹²-, -O-, -S-, -S(O)₂ -, >Si<, >B-, and >P(=O)-, and R¹² is H or C₁₋₃ alkyl.

Optionally, R¹² is H or methyl.

Further optionally, R¹² is H.

In some implementations, in the structure of the polymer Poly, one, a plurality of, or all of fluorinated aliphatic chains Rf contain one or more atoms or atomic groups selected from the group consisting of -O-, -S(O)₂-, and -(O=)P(O-)₂.

Optionally, one, a plurality of, or all of fluorinated aliphatic chains Rf contain one or more -O-.

Optionally, one, a plurality of, or all of fluorinated aliphatic chains Rf contain -S(O)₂F.

Optionally, one, a plurality of, or all of fluorinated aliphatic chains Rf contain -(O=)P(O-)2.

Special properties can be imparted to the polymer layer by introducing heteroatoms other than fluorine atoms in fluorinated aliphatic chain Rf, such as one or more heteroatoms of iodine, nitrogen, oxygen, sulfur, silicon, boron, phosphorus, and the like. For example, phosphorus has a specific flame-retardant effect. For another example, iodine can also play a role in regulating deposition of lithium ions to some extent. For another example, fluorosulfonyl (-S(=O)₂F) has a specific effect on improving the ionic conductivity of the polymer layer and promoting uniform deposition of lithium ions.

In some implementations, in the structure of the polymer Poly, any fluorinated aliphatic chain Rf is independently a linear structure or a branched structure.

Rf of a linear chain is beneficial to increasing the elasticity of the polymer material. Rf of a side chain is beneficial to improve the swelling capacity of an electrolyte membrane, thereby improving the ionic conductivity.

In some implementations, in the structure of the polymer Poly, any fluorinated aliphatic chain Rf is independently a saturated structure or an unsaturated structure.

When the fluorine-substituted aliphatic chain has a saturated structure, the molecular chain of the polymer Poly can be provided with a higher mobility, which is beneficial to improving elastic regulation of the polymer layer. In addition, an unsaturated bond is introduced into Rf, so that the polymer layer can be crosslinked to enhance the elastic modulus of the polymer protective layer.

In some implementations, in the structure of the polymer Poly, a structure of any fluorinated aliphatic chain Rf is independently represented by formula (III-1), formula (III-2), or formula (III-3): 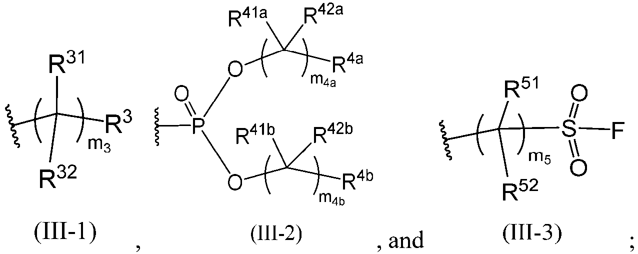 wherein
in formula (III-1), m₃ is an integer selected from 2 to 10, R³¹, R³², and R³ each are independently H or F at each occurrence, and the structure represented by formula (III-1) contains at least four F atoms;
in formula (III-2), m₄ₐ and m_{4b} each are independently an integer selected from 1 to 9, R^{41a}, R^{42a}, R^{4a}, R^{41b}, R^{42b}, and R^{4b} each are independently H or F at each occurrence, and the structure represented by formula (III-2) contains at least four F atoms; and
in formula (III-3), m₅ is an integer selected from 2 to 10, R⁵¹ and R⁵² each are independently H or F at each occurrence, and the structure represented by formula (III-3) contains at least four F atoms.

In some implementations, the polymer Poly satisfies one or more of the following features:
m₃ is an integer selected from 3 to 10, and optionally, m₃ is an integer selected from 3 to 8;
m₄ₐ and m_{4b} each are independently an integer selected from 2 to 9, optionally, m₄ₐ and m_{4b} each are independently an integer selected from 2 to 8, further optionally, m₄ₐ and m_{4b} each are independently an integer selected from 3 to 8, and still further optionally, m₄ₐ and m_{4b} each are independently an integer selected from 3 to 6.

m₅ is an integer selected from 3 to 10, and optionally, m₅ is an integer selected from 3 to 8.

In some implementations, in the structure of the polymer Poly, the structures of fluorinated aliphatic chains Rf are all represented by formula (III-1), or the structures of fluorinated aliphatic chains Rf are all represented by formula (III-2), or the structures of fluorinated aliphatic chains Rf are all represented by formula (III-3).

The structure of formula III-1 is a linear saturated fluorinated aliphatic chain. In an aspect, better elasticity can be imparted to the polymer layer, and cracking of the polymer layer under large volume deformation can be reduced or avoided. In another aspect, the uniform deposition of lithium ions can be effectively promoted through fluorine, the formation of lithium dendrites can be inhibited, and the volume expansion on the negative electrode side of the lithium metal can be alleviated.

The structure of formula III-2 can introduce phosphorus. In addition, the phosphate group therein has a flame-retardant effect, which is beneficial to improving the safety performance of the battery cell.

The structure of formula III-3 can introduce fluorosulfonyl. This has a specific positive effect on improving the ionic conductivity of the polymer layer.

In some implementations, in the structure of the polymer Poly, the quantity of H atoms at each occurrence of formula (III-1) is 0, 1, 2, 3, or 4, the quantity of H atoms at each occurrence of formula (III-2) is 0, 1, 2, 3, 4, 5, or 6, and the quantity of H atoms at each occurrence of formula (III-3) is 0, 1, 2, 3, or 4.

Optionally, the quantity of H atoms in formula (III-1) is 0.

Optionally, the quantity of H atoms in formula (III-2) is 0.

Optionally, the quantity of H atoms in formula (III-3) is 0.

The quantity of H atoms is controlled, so that the quantity of sites available for fluorine substitution can be regulated.

In some implementations, in the structure of the polymer Poly, any fluorinated aliphatic chain Rf is independently any one of the following structures:

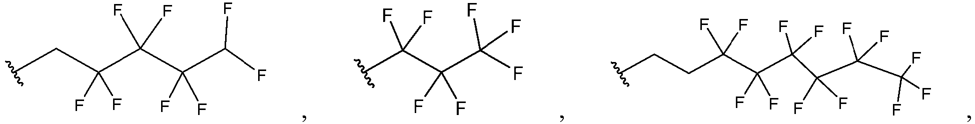

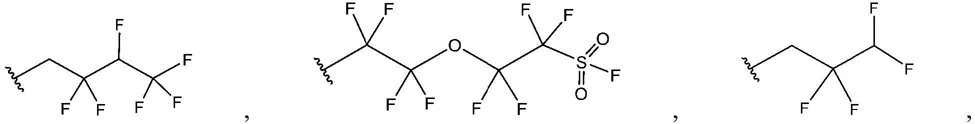

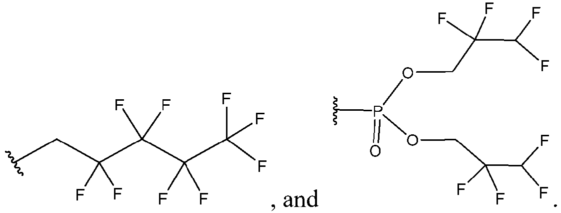

In some implementations, the number-average molecular weight of the polymer Poly is selected from 10 kDa to 200 kDa;
optionally, the number-average molecular weight of the polymer Poly is selected from 40 kDa to 100 kDa; and
further optionally, the number-average molecular weight of the polymer Poly is selected from 50 kDa to 80 kDa.

The degree of polymerization or molecular weight of the polymer Poly is adjusted, so that the molecular chain length of the polymer Poly can be adjusted, which not only can implement effective coating of lithium metal, but also maintain a stable chemical connection, and can further affect compactness and uniformity of the polymer layer.

In some implementations, the lithium-containing metal comprises a lithium simple substance or a lithium alloy; and
optionally, the lithium alloy contains lithium, and further contains one or more elements of silver, magnesium, aluminum, gold, zinc, tin, copper, nickel, and titanium.

In some implementations, the amount of the lithium metal in the lithium-containing metal relative to the polymer Poly is greater than or equal to a catalytic amount, and is measured by the molar ratio.

In the lithium metal negative electrode material provided in the present application, it only needs to be able to provide a catalytic amount of the lithium-containing metal to successfully catalyze the in-situ polymerization reaction of the cyanoalkenyl carboxylic acid derivative monomer (such as the cyanoacrylic acid derivative monomer) on the surface of the lithium-containing metal. The amount of the lithium metal relative to the polymer Poly only needs to be in contact with a catalytic amount, which can catalyze the in-situ polymerization reaction of the cyanoalkenyl carboxylic acid derivative monomer (such as cyanoacrylic acid derivative monomer) on the surface of lithium metal.

According to a second aspect, the present application provides a negative electrode sheet, comprising a lithium-containing layer and a polymer layer that are stacked, wherein the negative electrode sheet comprises the lithium metal negative electrode material according to the first aspect of the present application; and
the lithium-containing layer comprises lithium-containing metal in the lithium metal negative electrode material, and the polymer layer comprises a polymer Poly in the lithium metal negative electrode material.

The negative electrode sheet comprises a lithium metal negative electrode material distributed in both the lithium-containing layer and the polymer layer, on at least one side of the negative electrode sheet, the lithium-containing layer is stably connected with a dense and uniform polymer layer by chemical bonding, the polymer layer has specific elasticity, flexibility and swellability, so that the polymer layer and the lithium-containing layer, and the polymer layer and the separator can be firmly, tightly and permanently attached, which can better adapt to the large volume expansion of the negative electrode side during charging, and can play a role of a protective layer at the negative electrode of the lithium metal secondary battery for a long time. The polymer layer can effectively inhibit the contact reaction between the electrolyte solution and the lithium metal, reduce the consumption of the electrolyte solution and the lithium metal, improve the coulombic efficiency, prolong the cycle life, can further promote the uniform deposition of lithium ions by using the fluorinated aliphatic chain Rf in the lithium metal negative electrode material, inhibit the formation of lithium dendrites, and alleviate the volume expansion of the lithium metal negative electrode side. In addition, the comprehensive performance of elasticity, flexibility and swellability of the polymer layer not only can promote tight adhesion between the polymer layer and the lithium-containing layer, but also helps exert good ionic conductivity, and helps reduce interface polarization and reduce interface impedance, so that the lithium metal secondary battery can achieve a higher energy density, power density, charge/discharge cycle stability, and higher safety performance in the presence of the polymer layer.

In some implementations, the lithium-containing layer is substantially composed of the lithium-containing metal;
optionally, the lithium-containing layer is made of a lithium simple substance; and
alternatively optionally, the lithium-containing layer is made of a lithium alloy.

In some implementations, the polymer layer further comprises a first electrolyte solution, and the first electrolyte solution comprises a lithium salt and a first electrolyte solution solvent.

In some implementations, the negative electrode sheet satisfies any one or more of the following features:
the lithium salt comprises one or more of lithium hexafluorophosphate, tetrafluoroboric acid, lithium bisfluorosulfonylimide, lithium bis(trifluoromethanesulphonyl)imide, lithium difluoro(oxalato)borate, lithium perchlorate, and lithium bis(oxalate)borate; and
the first electrolyte solution solvent comprises one or more of ethylene carbonate, propylene carbonate, dimethyl carbonate, diethyl carbonate, ethyl methyl carbonate, dipropyl carbonate, diphenyl carbonate, dibutyl carbonate, butylene carbonate, dimethoxyethane, tetrahydrofuran, dioxolane, methyl nonafluoro-n-butyl ether, 1,1,2,2-tetrafluoroethyl-2,2,3,3-tetrafluoropropyl ether, octafluoropentyl-tetrafluoroethyl ether, 1,2-bis(cyanoethoxy)ethane, diphenyl ether, and 18-crown-6.

In some implementations, the concentration of the lithium salt in the first electrolyte solution is selected from 0.2 mol/L to 8 mol/L;
optionally, the concentration of the lithium salt in the first electrolyte solution is selected from 0.5 mol/L to 5 mol/L; and
further optionally, the concentration of the lithium salt in the first electrolyte solution is selected from 0.5 mol/L to 2 mol/L.

The polymer layer of the lithium metal negative electrode material contains an electrolyte solution (which may be denoted as the first electrolyte solution), and the concentration of the lithium salt in the first electrolyte solution may affect the deposition morphology of lithium ions. The concentration of the lithium salt can change the solvation of Li⁺ in the electrolyte solution, which in turn affects composition of a solid electrolyte interface film (SEI film) and the deposition morphology of lithium ions. The lithium salt in the electrolyte solution is controlled to be at a more suitable concentration, so that it is more beneficial to promoting dense and uniform deposition of lithium ions and reducing the volume expansion on the negative electrode side. In addition, the lithium salt in the electrolyte solution is controlled to be at a more suitable concentration, so that the polymer layer can have more suitable mechanical properties, such as flexibility and elasticity, and can further achieve a better lithium ion conduction capacity during charge and discharge. When the concentration of the lithium salt is relatively high, the mechanical properties of the polymer layer may deviate from a preferred range, and when the concentration of the lithium salt is relatively low, the lithium ion conduction capacity during charge and discharge may deviate from a preferred range.

In some implementations, the mass proportion of the first electrolyte solution in the polymer layer is 20% to 80%;
optionally, the mass proportion of the first electrolyte solution in the polymer layer is 30% to 60%;
further optionally, the mass proportion of the first electrolyte solution in the polymer layer is 40% to 60%; and
still further optionally, the mass proportion of the first electrolyte solution in the polymer layer is 40% to 55%.

In some implementations, the mass ratio of the polymer Poly to the first electrolyte solution is 4:1 to 0.25:1;
optionally, the mass ratio of the polymer Poly to the first electrolyte solution is 3:1 to 0.5:1;
further optionally, the mass ratio of the polymer Poly to the first electrolyte solution is 2.5:1 to 1:1; and
still further optionally, the mass ratio of the polymer Poly to the first electrolyte solution is 7:3 to 2:1.

By controlling the mass ratio of the first electrolyte solution in the polymer layer or controlling the mass ratio of the first electrolyte solution in the polymer layer to be in a more appropriate range, the electrolyte solution can be adjusted to have a more suitable mass proportion in the polymer layer. The mass proportion of the electrolyte solution in the polymer layer may affect the elastic modulus and the ionic conductivity of the protective layer. In the first electrolyte solution, the presence of a specific content of lithium salt and solvent (denoted as the first electrolyte solution solvent) can plasticize the polymer layer, which can improve the elasticity of the polymer layer. In addition, during the formation of the polymer layer by the in-situ polymerization reaction, the lithium salt and the solvent in the first electrolyte solution may be incorporated into the polymer layer, so that the polymer layer has a spongy loose porous structure on a microscopic scale, and the pores are filled with the electrolyte solution, which can provide a path for subsequent transport of lithium ions.

In some implementations, based on the first electrolyte solution, the swelling ratio of the polymer layer at 25°C is 8% to 65%;
further optionally, the swelling ratio of the polymer layer at 25°C is 15% to 55%;
still further optionally, the swelling ratio of the polymer layer at 25°C is 18% to 44%; and
yet further optionally, the swelling ratio of the polymer layer at 25°C is 30% to 40%.

In some implementations, based on the first electrolyte solution, ionic conductivity of the swollen polymer layer at 25°C is selected from 0.001 mS/cm to 5 mS/cm;
optionally, the ionic conductivity of the swollen polymer layer at 25°C is selected from 0.1 mS/cm to 5 mS/cm;
alternatively optionally, the ionic conductivity of the swollen polymer layer at 25°C is selected from 0.5 mS/cm to 5 mS/cm;
alternatively optionally, the ionic conductivity of the swollen polymer layer at 25°C is selected from 0.9 mS/cm to 4.8 mS/cm; and
alternatively optionally, the ionic conductivity of the swollen polymer layer at 25°C is selected from 0.95 mS/cm to 2.6 mS/cm.

In some implementations, the thickness of the polymer layer is 5 nm to 10 µm;
optionally, the thickness of the polymer layer is 0.02 µm to 8 µm;
further optionally, the thickness of the polymer layer is 0.05 µm to 8 µm;
still further optionally, the thickness of the polymer layer is 0.05 µm to 5 µm; and
yet further optionally, the thickness of the polymer layer is 0.1 µm to 5 µm.

The thickness of the polymer layer on the surface of the lithium-containing metal can be controlled to be at a thin nanoscale, which is more advantageous for an assembled battery cell to exhibit smaller interface impedance in this case.

In some implementations, the elastic modulus of the polymer layer at 25°C is 0.1 MPa to 65 MPa;
optionally, the elastic modulus of the polymer layer at 25°C is 0.5 MPa to 50 MPa;
further optionally, the elastic modulus of the polymer layer at 25°C is 10 MPa to 46 MPa;
still further optionally, the elastic modulus of the polymer layer at 25°C is 18 MPa to 41 MPa; and
yet further optionally, the elastic modulus of the polymer layer at 25°C is 29 MPa to 41 MPa.

In some implementations, the elastic deformation range of the polymer layer at 25°C is 55% to 350%;
optionally, the elastic deformation range of the polymer layer at 25°C is 150% to 350%;
further optionally, the elastic deformation range of the polymer layer at 25°C is 150% to 300%; and
still further optionally, the elastic deformation range of the polymer layer at 25°C is 168% to 280%.

The parameter such as the elastic modulus and elastic deformation range of the polymer layer is controlled to be in a more suitable range, so that the polymer layer have more suitable elasticity, which better promotes the close contact between the polymer layer and the lithium-containing metal layer, reduce the interface impedance, and facilitate achieving a better energy density and power density.

According to a third aspect, the present application provides a lithium metal secondary battery, comprising a positive electrode sheet, a separator, and the negative electrode sheet according to the second aspect of the present application, wherein the separator is disposed between the positive electrode sheet and the negative electrode sheet, and the polymer layer is disposed on a side that is of the negative electrode sheet and that is close to the separator.

The negative electrode sheet in the lithium metal secondary battery comprises a lithium metal negative electrode material distributed in both the lithium-containing layer and the polymer layer, on at least one side of the negative electrode sheet, the lithium-containing layer is stably connected with a dense and uniform polymer layer by chemical bonding, the polymer layer has specific elasticity, flexibility and swellability, so that the polymer layer and the lithium-containing layer, and the polymer layer and the separator can be firmly, tightly and permanently attached, which can better adapt to the large volume expansion of the negative electrode side during charging, and can play a role of a protective layer at the negative electrode of the lithium metal secondary battery for a long time. The polymer layer can effectively inhibit the contact reaction between the electrolyte solution and the lithium metal, reduce the consumption of the electrolyte solution and the lithium metal, improve the coulombic efficiency, prolong the cycle life, can further promote the uniform deposition of lithium ions by using the fluorinated aliphatic chain Rf in the lithium metal negative electrode material, inhibit the formation of lithium dendrites, and alleviate the volume expansion of the lithium metal negative electrode side. In addition, the comprehensive performance of elasticity, flexibility and swellability of the polymer layer not only can promote tight adhesion between the polymer layer and the lithium-containing layer, but also helps exert good ionic conductivity, and helps reduce interface polarization and reduce interface impedance, so that the lithium metal secondary battery can achieve a higher energy density, power density, charge/discharge cycle stability, and higher safety performance in the presence of the polymer layer.

In addition, the contact reaction between the electrolyte solution and the lithium metal is suppressed, so that the consumption of the electrolyte solution and the lithium metal is reduced, and the coulombic efficiency of the battery can also be improved.

In some implementations, the lithium metal secondary battery further comprises a second electrolyte, wherein a component of the second electrolyte may be the same as or different from that of the first electrolyte solution in the polymer layer.

According to a fourth aspect, the present application provides an electric device, comprising the lithium metal secondary battery according to the third aspect of the present application.

According to a fifth aspect, the present application provides use of a monomer composition in preparation of a negative electrode sheet or a lithium metal secondary battery, wherein the monomer composition comprises a first monomer represented by formula (M1) and a second monomer represented by formula (M2): 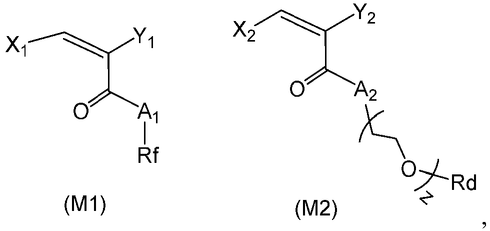
wherein X₁, X₂, Y₁, Y₂, A ₁, A ₂, Rf, and Rd each are as defined in the first aspect of the present application, z is as defined in the first aspect of the present application, and at least one of Y₁ and Y₂ is a cyano group;
the negative electrode sheet contains lithium metal; and
the first monomer and the second monomer are used to form a polymer layer bonded to the lithium metal in the negative electrode sheet.

Both the first monomer and the second monomer in the monomer composition are cyanoacrylic acid derivatives, a cyano group therein can be in contact with lithium in an outermost layer of the negative electrode sheet matrix to form a chemical connection, and a carbon-carbon double bond therein can undergo an in-situ polymerization reaction under lithium catalysis, thereby preparing the lithium metal negative electrode material according to the first aspect of the present application. In this case, a firmly connected, dense, and uniform polymer layer can be formed on a surface of the lithium-containing layer of the negative electrode, and the polymer layer has specific elasticity, flexibility and swellability, and can play a role of a protective layer for a long time.

In some implementations, the use comprises the following steps: the first monomer and the second monomer are jointly in contact with the lithium metal in the lithium-containing layer, and form the polymer layer through an in-situ polymerization reaction.

In some embodiments, the negative electrode sheet is as defined in the second aspect of the present application, and the lithium metal secondary battery is as defined in the third aspect of the present application.

According to a sixth aspect, the present application provides a preparation method for a negative electrode sheet, comprising the following steps:
providing a negative electrode sheet matrix, wherein an outermost layer of at least a side of the negative electrode sheet matrix is a lithium-containing layer, and the lithium-containing layer comprises lithium metal; and further providing a reaction mixture containing a monomer composition and a first electrolyte solution; and
coating the reaction mixture on a surface of the lithium-containing layer on at least a side of the negative electrode sheet matrix, so that the monomer composition is in contact with at least a catalytic amount of lithium metal, and the monomer composition forms a polymer Poly bonded to the lithium metal in the lithium-containing layer through an in-situ polymerization reaction, wherein
the monomer composition is as defined in the fifth aspect of the present application; and
the first electrolyte solution is as defined in the second aspect of the present application.

In the presence of the first electrolyte solution, a cyano group in the monomer composition can be in contact with lithium in an outermost layer of the negative electrode sheet matrix to form a chemical connection (further, a covalent connection), and a carbon-carbon double bond therein can undergo an in-situ polymerization reaction under lithium catalysis to form the foregoing polymer Poly, thereby preparing the lithium metal negative electrode material according to the first aspect of the present application. In this case, a firmly connected, dense, and uniform polymer layer can be formed on a surface of the lithium-containing layer of the negative electrode, and the polymer layer has specific elasticity, flexibility and swellability, and can play a role of a protective layer for a long time. Compared with a polymer coating in the physical coating manner in the conventional technology, the polymer layer formed in the present application is not only stably bonded to a surface of the lithium-containing layer through the chemical connection, but also can reduce, avoid or effectively delay falling off of the polymer layer from the surface of the lithium-containing layer during charge and discharge. In addition, the polymer layer in the present application is dense and uniform, and the thickness of the polymer layer can be controlled to be at a nanometer scale by using the in-situ polymerization reaction, so that an assembled battery cell can exhibit small interface impedance.

In some implementations, the reaction temperature of the in-situ polymerization is selected from 30°C to 100°C;
optionally, the reaction temperature of the in-situ polymerization is selected from 30°C to 60°C; and
alternatively optionally, the reaction temperature of the in-situ polymerization is selected from 40 °C to 80°C.

In some implementations, the reaction time of the in-situ polymerization is selected from 0.1h to 24h;
optionally, the reaction time of the in-situ polymerization is selected from 0.1h to 12h; and
further optionally, the reaction time of the in-situ polymerization is selected from 0.1h to 6h.

In some implementations, the polymer layer in the second aspect of the present application is formed on a surface of the negative electrode sheet matrix.

In some implementations, the negative electrode sheet matrix is a pure lithium sheet or a lithium alloy; and
optionally, the mass proportion of lithium in the lithium alloy is greater than or equal to 50%.

When the negative electrode sheet matrix is a pure lithium sheet or a lithium alloy, a negative electrode current collector may be additionally introduced in the negative electrode sheet of the battery to facilitate tab assembly, or a pure lithium sheet covered by the polymer layer may be used as the negative electrode sheet.

In some embodiments, the negative electrode sheet is as defined in the second aspect of the present application.

Details of one or a plurality of embodiments of the present application are set forth in the accompanying drawings and the description below. Other features, objectives, and advantages of the present application will be apparent from the specification, and the accompanying drawings, and the claims.

### DESCRIPTION OF DRAWINGS

In order to better describe and illustrate implementations, embodiments, or examples of those applications disclosed herein, reference may be made to one or a plurality of accompanying drawings. Additional details or examples used to describe the accompanying drawings should not be considered as limiting the scope of any of the disclosed application, the currently described implementations, embodiments, or examples, and best modes of these applications as currently understood. Moreover, the same reference numerals are used to denote the same components throughout the accompanying drawings. In the accompanying drawings:
FIG. 1 is a schematic diagram of a structure of a negative electrode sheet according to an embodiment of the present application, where a polymer layer is disposed on a single side of the negative electrode sheet;
FIG. 2 is a schematic diagram of a structure of a negative electrode sheet according to an embodiment of the present application, where a polymer layer and a negative electrode current collector are disposed on a single side of the negative electrode sheet;
FIG. 3 is a schematic diagram of a structure of a negative electrode sheet according to an embodiment of the present application, where a second negative electrode active material layer is further disposed between a lithium-containing layer and a negative electrode current collector;
FIG. 4 is a schematic diagram of a structure of a negative electrode sheet according to an embodiment of the present application, where polymer layers are disposed on two sides of the negative electrode sheet;
FIG. 5 is a schematic diagram of a structure of a negative electrode sheet according to an embodiment of the present application, where polymer layers are disposed on two sides of the negative electrode sheet, and second negative electrode active material layers are disposed between lithium-containing layers on two sides and a negative electrode current collector;
FIG. 6 is a schematic diagram of a secondary battery according to an embodiment of the present application;
FIG. 7 is an exploded view of the secondary battery according to an embodiment of the present application shown in FIG. 6; and
FIG. 8 is a schematic diagram of an electric device using the secondary battery as a power supply according to an embodiment of the present application.

Reference numerals: 100: negative electrode sheet matrix; 110: negative electrode current collector; 120: second negative electrode active material layer; 130: lithium-containing layer; 200: polymer layer; 5: secondary battery; 51: housing; 52: electrode assembly; 53: cover plate; 6: electric device.

### DESCRIPTION OF EMBODIMENTS

Some implementations of a lithium metal negative electrode material, a negative electrode sheet, a lithium metal secondary battery, an electric device, a preparation method, and use in the present application will be described below in detail with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The numerical "range" disclosed in the present application is limited in the form of a lower limit and an upper limit. A given range is limited by selecting a lower limit and an upper limit, which define the boundaries of the specific range. A range defined in this manner may include an end value or may not include an end value, any end value may be independently included or not included, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the smallest values 1 and 2 of a range are listed, and if the largest values 3, 4 and 5 of the range are listed, the following ranges are all expected: 1 to 3, 1 to 4, 1 to 5, 2 to 3, 2 to 4, and 2 to 5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12. For example, when a parameter is expressed as an integer sleeted from "2 to 10", it is equivalent to listing integers 2, 3, 4, 5, 6, 7, 8, 9, and 10.

Unless otherwise specified, all embodiments and optional embodiments of this application may be combined with each other to form new technical solutions.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present application may be performed sequentially or randomly, preferably sequentially. For example, a method M including steps (a) and (b) represents that the method M may include sequentially performed steps (a) and (b), or sequentially performed steps (b) and (a). For example, mentioning that the method M may further include step (c) represents that step (c) may be added to the method M in any order. For example, the method M may include steps (a), (b), and (c), or steps (a), (c), and (b), or steps (c), (a), and (b), etc.

In the present application, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, A includes a1, a2, and a3, and may further include another member or may not include an additional member unless otherwise specified, and it may be considered that both a feature or solution in which "A is composed of a1, a2, and a3" or "A is selected from a1, a2, and a3" and a feature or solution in which "A includes not only a1, a2, and a3 but also another member" are provided.

In the present application, unless otherwise specified, A (e.g., B) means that B is a non-limiting example of A, and it may be understood that A is not limited to B.

In the present application, unless otherwise specified, a feature or solution corresponding to "and/or" includes any one of two or more related listed items, and also includes any and all combinations of the related listed items, and the any and all combinations include any two related listed items, any more related listed items, or all related listed items. For example, "A and/or B" indicates a group consisting of A, B, and "a combination of A and B". Herein, "including A and/or B" may mean "including A, including B, and including A and B", and may also mean "including A, including B, or including A and B", which can be properly understood according to the sentence in which it is used.

Unless otherwise defined, "multiple", "a plurality of", "a plurality of items", "several", and the like related in the present application mean the quantity of two or more. For example, "one or more" means one or greater than or equal to (greater than or equal to, greater than or equal to) two. It can be understood that "any of a plurality of" items refers to any suitable combination of a plurality of items, that is, the combination of "any of a plurality of" items is performed in a manner that does not conflict and can implement the present application.

As used herein, "a combination thereof", "any combination thereof", "any combination mode thereof," and the like includes all suitable combination modes of any two or more of listed items.

Herein, "suitable" in "suitable combination mode", "suitable mode", "any suitable mode", and the like allows that the technical solution of the present application can be implemented.

Herein, "preferred", "better", "optimal", "good", and "comparatively good" are merely used to describe preferred embodiments or examples, and should not be construed to limit the scope of the present application. If "preferred" occurs repeatedly in a technical solution, each "preferred" is independent, unless otherwise specified without inconsistency or mutual restriction.

In the present application, "optionally", "optional", and "option" means that there is or not, that is, means any one of two parallel solutions: "with" or "without". If "option" occurs repeatedly in a technical solution, each "option" is independent, unless otherwise specified without inconsistency or mutual restriction. Unless otherwise specified, in the present application, descriptions such as "optionally include" and "optionally contain" are used, and "optionally include" is used as an example to indicate "may include or not include".

In the present application, "further", "even further", "particularly", "for example", "such as", "example", and "illustrative", and the like are used for descriptive purposes to indicate differences in content, but should not be construed to limit the scope of the present application.

In the present application, in "first aspect", "second aspect", "third aspect", "fourth aspect", and the like, terms "first", "second", "third", "fourth" and the like are used for descriptive purposes only, and should not be construed as indicating or implying relative importance or number, nor as implicitly indicating the importance or quantity of technical features indicated. Also, "first", "second", "third", "fourth" and the like are used merely for the purpose of describing a non-exhaustive list, and it should be understood that they do not constitute a closed limitation on the quantity.

In the present application, when the unit of a data range is related, the unit of a left end point and the unit of a right end point are the same if the unit is attached only after the right end point. For example, 3~5 h or 3-5 h each means that the unit of the left end point "3" and the unit of the right end point "5" are both h (hour), which has the same meaning as 3h to 5h. In addition, the unit description of other parameters such as temperature and molecular weight is also understood in a same manner.

A weight of a relevant component mentioned in the implementations or embodiments of the present application may not only indicate a content of each component, but also indicate a proportional relationship between weights of components. Therefore, it is within the scope disclosed in the present application to scale up or down the content of the relevant component according to the implementations or embodiments of the present application. Further, the weight or quality in the implementation or the embodiment of the present application may be a mass unit well-known in the chemical industry such as µg (µg), mg (mg), g (g), and kg (kg).

In the present application, unless otherwise specified, wt% represents a weight percentage by weight, which is equal to a corresponding mass percentage by mass in value.

In the present application, "molecular weight", "average molecular weight", and "number-average molecular weight" of a polymer refer to the molecular mass measured in Daltons (Da), unless otherwise specified, and 1 Da is equal to one twelfth of the atomic mass of 12C. Unless otherwise stated, the average molecular weight of the polymer is greater than or equal to 1000 Da. 1 kDa = 1000 Da.

In the present application, referring to parameter units, unless otherwise specified, the temperature unit °C represents "degree Celsius", the mass unit g represents "gram", the time unit h represents "hour", min represents "minute", the length unit mm represents "millimeter", µm represents "micrometer", the molecular weight unit Da represents "Dalton", kDa represents "kilodalton", the viscosity unit MPa·S represents "millipascals per second", the area unit mm² represents square millimeter, the areal density unit mg/cm² represents "milligram per square centimeter", the bulk density unit g/cm³ represents "gram per cubic centimeter", the molar concentration unit mol/L represents "mole per liter", the amount of substance unit mol represents "mole", the voltage unit V represents "volt", the battery capacity unit Ah represents "ampere-hour", the area capacity unit mAh/cm² represents "milliampere-hour per square centimeter", the current density unit mA/cm² represents "milliampere per square centimeter", the pressure unit MPa represents "megapascal", Pa represents "pascal", and the conductivity unit mS/cm represents "millisiemens per centimeter".

In the present application, "greater than or equal to" and "greater than or equal to" may both be expressed as "≥", "less than or equal to" and "less than or equal to" may both be expressed as "≤", "greater than" may be equivalently expressed as ">", and "less than" may be equivalently expressed as "<". In the present application, unless otherwise specified, "greater than or equal to" and "≥" may be considered as further providing two solutions of "greater than" and "equal to". In the present application, unless otherwise specified, "less than or equal to" and "≤" may be considered as further providing two solutions of "less than" and "equal to".

In the present application, exemplary descriptions related to "in some implementations (or embodiments)", "in one implementation (or embodiment)", and the like may cover but are not limited to the following meanings: these solutions may be combined with other solutions in a suitable manner to form a new technical solution.

In the present application, the term "hydrocarbyl" refers to a monovalent group composed of two elements of carbon and hydrogen. The hydrocarbyl group may be in the form of an alkyl group, an alkenyl group, an alkynyl group, or the like.

In the present application, the term "alkyl" refers to a monovalent residue generated by losing one hydrogen atom from saturated hydrocarbon containing a primary carbon atom, or a secondary carbon atom, or a tertiary carbon atom, or a quaternary carbon atom, or a combination thereof. A phrase containing the term, for example, "C₁~₁₀ alkyl" means alkyl containing 1 to 10 carbon atoms, which, each time it appears, may independently be C₁ alkyl, C₂ alkyl, C₃ alkyl, C₄ alkyl, C₅ alkyl, C₆ alkyl, C₇ alkyl, C₈ alkyl, C₉ alkyl, or C₁₀ alkyl. Suitable examples of alkyl include, but are not limited to, methyl (Me, -CH)₃, ethyl (Et, -CH₂CH₃), 1-propyl(n-Pr, n-propyl, -CH₂CH₂CH₃), 2-propyl(i-Pr, i-propyl, -CH(CH₃)₂), 1-butyl (n-Bu, n-butyl, -CH₂CH₂CH₂CH₃), 2-methyl-1-propyl (i-Bu, i-butyl, -CH₂CH(CH₃)₂), 2-butyl (s-Bu, s-butyl, -CH(CH₃)CH₂CH₃), 2-methyl-2-propyl (t-Bu, t-butyl, -C(CH₃)₃), 1-pentyl (n-pentyl, -CH₂CH₂CH₂CH₂CH₃), 2-pentyl (-CH(CH₃)CH₂CH₂CH₃), 3-pentyl (-CH(CH₂CH₃)₂), 2-methyl-2-butyl (-C(CH₃)₂CH₂CH₃), 3-methyl-2-butyl (-CH(CH₃)CH(CH₃)₂), 3-methyl-1-butyl (-CH₂CH₂CH(CH₃)₂), 2-methyl-1-butyl (-CH₂CH(CH₃)CH₂CH₃), 1-hexyl (-CH₂CH₂CH₂CH₂CH₂CH₃), 2-hexyl (-CH(CH₃)CH₂CH₂CH₂CH₃), 3-hexyl (-CH(CH₂CH₃)(CH₂CH₂CH₃)), 2-methyl-2-pentyl (-C(CH₃)₂CH₂CH₂CH₃), 3-methyl-2-pentyl (-CH(CH₃)CH(CH₃)CH₂CH₃), 4-methyl-2-pentyl (-CH(CH₃)CH₂CH(CH₃)₂), 3-methyl-3-pentyl (-C(CH₃)(CH₂CH₃)₂), 2-methyl-3-pentyl (-CH(CH₂CH₃)CH(CH₃)₂), 2, 3-dimethyl-2-butyl (-C(CH₃)₂CH(CH₃)₂), 3, 3-dimethyl-2-butyl (-CH(CH₃)C(CH₃)₃, and octyl (-(CH₂)₇CH₃).

In the present application, the term "alkenyl" refers to a monovalent residue generated by a hydrocarbon having at least one unsaturated site (i.e., a carbon-carbon sp² double bond) losing one hydrogen atom. A phrase including the term "alkenyl", e.g., "C₂~C₁₀ alkenyl" or "C₂₋₁₀ alkenyl" means alkenyl containing 2 to 10 carbon atoms, which may independently be, each time it appears, C₂ alkenyl, C₃ alkenyl, C₄ alkenyl, C₅ alkenyl, C₆ alkenyl, C₇ alkenyl, C₈ alkenyl, C₉ alkenyl, or C₁₀ alkenyl. Suitable examples include, but are not limited to, vinyl (-CH=CH₂), allyl (-CH₂CH=CH₂), cyclopentenyl (-C₅H₇), and 5-hexenyl (-CH₂CH₂CH₂CH₂CH=CH₂).

In the present application, the term "alkynyl" refers to a monovalent residue formed by a hydrocarbon having at least one unsaturated site, i.e., a carbon-carbon sp triple bond, losing one hydrogen atom. A phrase containing the term "alkynyl", for example, "C₂~C₁₀ alkynyl" means alkynyl containing 2 to 10 carbon atoms, which may independently be, each time it appears, C₂ alkynyl, C₃ alkynyl, C₄ alkynyl, C₅ alkynyl, C₆ alkynyl, C₇ alkynyl, C₈ alkynyl, C₉ alkynyl, or C₁₀ alkynyl. Suitable examples include, but are not limited to, ethynyl (-C≡CH) and propargyl (-CH₂C≡CH).

In the present application, a fluorosulfonyl group corresponds to -S(=O)₂F, and a nitro group corresponds to -NO₂.

High energy density is a trend of irreversible development of lithium metal batteries in the future, and lithium metal negative electrodes with high specific capacity (3860 mAh/g) and extremely low potential (-3.04 V vs. H₂/H⁺) have attracted extensive attention in the industry, while the high reaction activity and dendrite short circuit problems of lithium metal greatly limit its further development. Lithium metal has high reaction activity, and is easy to cause side reactions with the electrolyte solution, which consumes the electrolyte solution and lithium metal, and generates a thick passivation layer, resulting in a rapid decline in the cycle life of the battery. In addition, during charging, lithium ions are deposited unevenly due to regional differences in ion flow and electron flow, resulting in dendrite formation. On the one hand, lithium dendrites have a relatively high specific surface area, which will increase the consumption of the electrolyte solution and even cause the battery to jump out of water, and on the other hand, the rapid growth of lithium dendrites will penetrate the separator, bringing the risk of short circuit of the battery.

It has been reported that the protective layer is attached to the lithium metal surface by physical coating. The protective layer is bonded to lithium metal through intermolecular van der Waals forces, the force is weak, and the protective layer is easily separated from the lithium metal due to the volume change of the negative electrode side in a long cycle; In addition, if the protective layer is obtained separately in advance and then attached between the lithium metal and the separator, the operation is complicated and the flatness of the thin layer is not good. To improve the wettability of the surface of the lithium metal, the surface of the lithium metal is coated with a polymer solution with high viscosity, but a resulting protective layer is relatively thick.

In view of the above general technical problems, according to a first aspect, the present application provides a lithium metal negative electrode material.

The lithium metal negative electrode material provided in the first aspect of the present application includes a polymer layer having both flexibility and high elasticity, and the polymer layer has a lithium ion transport and regulation function and is tightly combined with lithium metal through a chemical connection manner, and can be used as a protective layer for lithium metal, which is expected to alleviate or solve the above technical problems. Firstly, the presence of the polymer layer can reduce the direct contact between the electrolyte solution and the lithium metal, inhibit the occurrence of side reactions, and reduce the consumption of the electrolyte solution and the lithium metal. Secondly, the polymer layer can introduce a higher ionic conductivity and a functional group design, which can not only promote the effective transfer of lithium ions inside the polymer layer and at the interface with the lithium metal, but also promote the uniform deposition of lithium ions, inhibit the generation of lithium dendrites, reduce the consumption of the electrolyte solution, and greatly inhibit the problem of short circuit caused by dendrite piercing the separator. Then, the close bonding between the polymer layer and the lithium metal can better adapt to the volume change of the negative electrode side during charge and discharge, and can avoid peeling off from the surface of the lithium metal as much as possible. In addition, the elastic polymer layer is compatible with the volume expansion of the lithium metal side during charging, is not easy to break, and can exert the protective effect for a longer time.

In some implementations, the present application provides a lithium metal negative electrode material, including lithium-containing metal and a polymer Poly bonded to lithium metal in the lithium-containing metal, where the polymer Poly has a linear carbon chain, and a first side chain and a second side chain that are grafted to a side group of the linear carbon chain, the first side chain contains a fluorinated aliphatic chain Rf, the second side chain contains an EO block, and the EO block has a structure of *-(CH₂CH₂O)_{z}-, where z is a positive integer, and * indicates an attachment site pointing to the linear carbon chain.

In the present application, unless otherwise specified, the term "lithium-containing metal" may be substantially composed of lithium (Li) metal, may be a lithium alloy, or may be a composition comprising lithium metal and a lithium alloy. The lithium-containing metal "substantially composed of lithium metal" means that the weight proportion of metallic lithium is high, and "substantially" described herein refers to, for example, 80% or more, 85% or more, 90% or more, 95% or more, 96% or more, 97% or more, 98% or more, 99% or more, 100% or more, etc.

In the present application, unless otherwise specified, the term "lithium metal" or "metallic lithium" refers to lithium in a metallic state.

In the present application, unless otherwise defined, the term "lithium" used independently refers to lithium in a metal state, for example, "lithium" in lithium-containing metal.

In the present application, unless otherwise specified, the term "lithium alloy" refers to an alloy containing lithium. The lithium alloy may contain one or more other kinds of metals in addition to lithium. All lithium alloys reported to be used as negative electrode active materials in lithium metal batteries fall within the scope of the present application. For example, the lithium alloy may be an alloy of lithium and one or more metals selected from the group consisting of silver, magnesium, aluminum, gold, zinc, tin, copper, nickel, and titanium. Non-limiting examples of the lithium alloy include a lithium magnesium alloy and a lithium aluminum alloy.

In the present application, unless otherwise specified, "polymer" refers to at least one type of polymer having an average molecular weight greater than 1000 Da, for example, at least one of the number-average molecular weight and the weight-average molecular weight may be greater than 1000 Da.

In the present application, unless otherwise specified, "linear carbon chain" refers to a linear chain carbon skeleton formed by sequentially connecting carbon atoms, for example, the following structure "...C-C-C-C-C...". The position of the non-hydrogen atom or group attached to the carbon atom at the non-terminal end of the linear carbon chain can be referred to as a "side chain". The side chain involved in the present application includes a first side chain and a second side chain. "First" and "second" herein are used for descriptive purposes only, and should not be construed as indicating or implying relative importance or number, nor as implicitly indicating the importance or quantity of technical features indicated.

In the present application, unless otherwise specified, the structural description "grafting" involved in the structure of the organic compound (such as the polymer Poly) represents a chemical connection manner, and further, unless otherwise specified, represents a covalent connection manner.

In the present application, unless otherwise specified, the term "aliphatic chain" may also be referred to as "aliphatic group", which refers to a group containing at least one carbon atom and not containing an aromatic group, and when the aliphatic chain contains only one carbon atom, the carbon atom is connected to four adjacent atoms through four single bonds, that is, excluding a methylene group substituted by a carbonyl atom or group. The aliphatic chain is allowed to contain one or more heteroatoms, and when there are a plurality of heteroatoms, the type of the heteroatom may be one or more, the heteroatom refers to an atom other than carbon and hydrogen, and examples of the heteroatom may include, but are not limited to, fluorine (F), iodine (I), nitrogen (N), oxygen (O), sulfur (S), silicon (Si), boron (B) and phosphorus (P). The aliphatic chain may be an aliphatic hydrocarbon group, may be an aliphatic hydrocarbon group in which one or more hydrogen atoms in the aliphatic hydrocarbon group are independently substituted with a non-fluorine heteroatom, or may be an aliphatic hydrocarbon group in which one or more carbon atoms in the aliphatic hydrocarbon group are independently substituted with a heteroatom. Substitution of hydrogen atoms and replacement of carbon atoms are allowed to occur simultaneously.

In the present application, unless otherwise specified, "EO block" refers to a segment having one or more EO units, wherein the EO unit is a unit having a structure of -CH₂CH₂O-.

In the present application, "*" marks at different structures or positions may have different meanings.

The lithium metal negative electrode material provided in the present application is coated with a dense and uniform polymer layer on a surface of the lithium-containing metal, the polymer layer can function as a protective layer at a negative electrode of a lithium metal secondary battery, which can effectively inhibit contact reaction between an electrolyte solution and lithium metal, reduce consumption of the electrolyte solution and the lithium metal, and prolong a cycle life of a battery. The linear carbon chain can impart specific flexibility to the polymer Poly and the polymer layer. The polymer component Poly in the polymer layer has a stable chemical connection to the lithium-containing metal, so that the polymer layer is firmly bonded to the surface of the lithium-containing metal, and the polymer layer can be prevented from peeling off from the surface of the lithium-containing metal when the volume on the negative electrode side changes during charge and discharge. The polymer Poly contains the fluorinated aliphatic chain Rf. In an aspect, introduction of fluorine can regulate and control deposition of lithium ions, promote uniform deposition of lithium ions, improve deposition morphology of lithium dendrites in the lithium metal secondary battery, inhibit formation of lithium dendrites, and alleviate volume expansion on the negative electrode side of the lithium metal. In another aspect, the presence of the fluorinated aliphatic chain Rf can impart specific elasticity to the polymer layer, which is beneficial to better adhesion between the polymer layer and the lithium-containing metal and between the protective layer and a separator. The polymer Poly further contains a flexible EO block, which not only can enhance flexibility of the polymer layer, strengthen tight adhesion between the polymer layer and a negative electrode sheet substrate and between the protective layer and the separator side, reduce interface impedance, but also can increase elasticity of the protective layer, so that the protective layer can better adapt to larger volume expansion on the negative electrode side, to reduce or avoid cracking of the polymer layer, and thus can exert a protective effect for a longer time. In addition, the dense and uniform polymer layer can alternatively be swollen by the electrolyte solution, and can provide good ionic conductivity after being swollen, so that lithium ions can be efficiently transferred in the polymer layer and at a lithium metal interface, interface polarization caused by introduction of the polymer layer is small, and charge/discharge cycle stability of the battery is good. The above-described features of the polymer layer are in cooperation with each other, which can excellently improve a cycle life of the lithium metal secondary battery, and can suppress the lithium dendrite problem.

In some implementations, in the structure of the polymer Poly, the quantity of the first side chains is m, and the quantity of the second side chains is n, where m and n each are independently an integer greater than or equal to 8.

In some implementations, m and n each are independently an integer selected from 8 to 600, for example, may be any one of the following values or an interval formed by any two of the following values selected from 8, 9, 10, 11, 12, 15, 16, 18, 20, 22, 24, 25, 30, 40, 50, 60, 70, 80, 100, 150, 200, 250, 300, 400, 500, 600, 700, 800, and the like, and m and n may alternatively be each independently selected from any suitable range of 8 to 300, 8 to 250, 8 to 200, 8 to 180, 10 to 300, 10 to 250, 10 to 200, 10 to 180, 20 to 300, 20 to 250, 20 to 200, 20 to 180, 25 to 300, 25 to 250, 25 to 200, 25 to 180, 30 to 300, 30 to 250, 30 to 200, 30 to 180, 50 to 300, 50 to 250, 50 to 200, 50 to 180, 60 to 300, 60 to 250, 60 to 200, 60 to 180, 80 to 300, 80 to 250, 80 to 200, 80 to 180, 8 to 150, 10 to 150, 20 to 150, 25 to 150, 30 to 150, 35 to 150, 36 to 150, 8 to 125, 10 to 125, 20 to 125, 25 to 125, 30 to 125, 35 to 125, 36 to 125, and the like.

In some implementations, m is an integer selected from 8 to 300, and may alternatively be selected from any suitable range of 8 to 300, 8 to 250, 8 to 200, 8 to 180, 10 to 300, 10 to 250, 10 to 200, 10 to 180, 20 to 300, 20 to 250, 20 to 200, 20 to 180, 25 to 300, 25 to 250, 25 to 200, 25 to 180, 30 to 300, 30 to 250, 30 to 200, 30 to 180, 50 to 300, 50 to 250, 50 to 200, 50 to 180, 60 to 300, 60 to 250, 60 to 200, 60 to 180, 80 to 300, 80 to 250, 80 to 200, 80 to 180, etc.

In some implementations, m is an integer selected from 50 to 250, and optionally, m is an integer selected from 50 to 200.

In some implementations, n is an integer selected from 8 to 300, and may alternatively be selected from any suitable range of 8 to 300, 8 to 250, 8 to 200, 8 to 180, 10 to 300, 10 to 250, 10 to 200, 10 to 180, 20 to 300, 20 to 250, 20 to 200, 20 to 180, 25 to 300, 25 to 250, 25 to 200, 25 to 180, 30 to 300, 30 to 250, 30 to 200, 30 to 180, 50 to 300, 50 to 250, 50 to 200, 50 to 180, 60 to 300, 60 to 250, 60 to 200, 60 to 180, 80 to 300, 80 to 250, 80 to 200, 80 to 180, 8 to 150, 10 to 150, 20 to 150, 25 to 150, 30 to 150, 35 to 150, 36 to 150, 8 to 125, 10 to 125, 20 to 125, 25 to 125, 30 to 125, 35 to 125, 36 to 125, etc.

In some implementations, n is an integer selected from 25 to 200, and optionally, n is an integer selected from 40 to 150.

The value ranges of m and n may be combined in any suitable manner. In some implementations, m is an integer selected from 50 to 250, and n is an integer selected from 25 to 200. In some other embodiments, m is an integer selected from 50 to 200, and n is an integer selected from 40 to 150.

In some implementations, the ratio of m to n (denoted as m/n) satisfies 0.5 ≤ m/n ≤ 8, optionally, 1 ≤ m/n ≤ 5, and further optionally, 1 ≤ m/n ≤ 3. m/n may be any one of the following values or an interval formed by any two of the following values, such as 0.5, 1, 1.5, 2, 2.5, 3, 3.5, 4, 4.5, 5, 5.5, 6, 6.5, 7, 7.5, 8, and the like. m/n may alternatively be selected from any suitable range of 1 to 8, 2 to 8, 2 to 5, etc.

In some implementations, the polymer Poly satisfies one or more of the following features:

The ratio of m to n satisfies 0.5 ≤ m/n ≤ 8, optionally 1 ≤ m/n ≤ 5, and further optionally 1 ≤ m/n ≤ 3;
m is an integer selected from 50 to 250, and optionally, m is an integer selected from 50 to 200; and
n is an integer selected from 25 to 200, and optionally, n is an integer selected from 40 to 150.

Introduction of the second side chain containing the EO block can improve the flexibility and swelling ratio of the polymer layer, and the presence of the first side chain containing the fluorinated aliphatic chain Rf helps improve the elasticity of the polymer layer. Further, the quantity of two types of copolymerization units in the polymer Poly is controlled, so that the flexibility and elasticity of the polymer layer can be regulated at the same time, thereby regulating the elastic deformation of the polymer layer, and regulating the degree of adhesion between the polymer layer and the substrate and between the polymer layer and the separator. Larger elastic deformation helps better adapt to larger volume expansion on the negative electrode side during charge, which can reduce or avoid cracking of the protective layer to achieve a protective effect for a long time. Better flexibility facilitates tight adhesion between the polymer layer and the lithium metal and between the polymer layer and the separator, reduces interface impedance, and helps improve energy density and power density of the battery.

The ratio of m/n is controlled, so that regulating of the elasticity, swelling ratio and ionic conductivity of the polymer Poly can be optimized. The elasticity, swelling ratio and ionic conductivity of the polymer are comprehensively controlled, so that the polymer protective layer can better and more permanently play the role of isolating contact of the electrolyte solution and regulating lithium deposition on the negative electrode side.

In some implementations, in the EO block structure, z is a positive integer. Further, z is a positive integer less than or equal to 10. z may alternatively be an integer selected from 2 to 10, and further optionally, z is an integer selected from 3 to 7. z may alternatively be 2, 3, 4, 5, 6, 7, 8, 9, or 10, and z may alternatively be selected from the interval formed by any two of the foregoing integers, for example, 2 to 8, 3 to 7, etc.

In some implementations, in the polymer Poly, z is independently 1, 2, 3, 4, 5, 6, 7, 8, 9, or 10 at each occurrence.

In some implementations, in the polymer Poly, z is independently 2, 3, 4, 5, 6, 7, 8, 9, or 10 at each occurrence.

In some implementations, in the polymer Poly, z is independently 2, 3, 4, 5, 6, 7, or 8 at each occurrence.

In some implementations, in the polymer Poly, z is independently 3, 4, 5, 6, or 7 at each occurrence.

z in the EO block structure reflects the quantity of EO units (oxyethylene units) having a structure of "CH₂CH₂O" in the EO block. The value of z is adjusted, that is, the length of the EO block is adjusted, so that the flexibility of the polymer layer can be adjusted, thereby adjusting the elastic deformation of the polymer layer and the degree of adhesion of the polymer layer to the substrate and the separator. z is controlled to be in a more suitable range or value, so that z can further act in cooperation with other structural units (such as the fluorinated aliphatic chain Rf chain) of the polymer Poly, to achieve the above-mentioned comprehensive excellent effect in multiple dimensions. When the polymer Poly is prepared by in-situ polymerization, z is controlled to be in a more suitable range or value, so that the flexibility of the polymer layer can be more effectively adjusted, and meanwhile, a higher reaction rate and an effective grafting density are maintained, thereby maintaining the high compactness of the polymer layer.

In the present application, unless otherwise specified, "maintain" means that there is at least still a beneficial effect relative to the reference solution, and it is understandable that strict equivalence in numerical values is not required.

In some implementations, the polymer Poly includes a repeating unit of a structure represented by (U1) and a repeating unit of a structure represented by formula (U2): 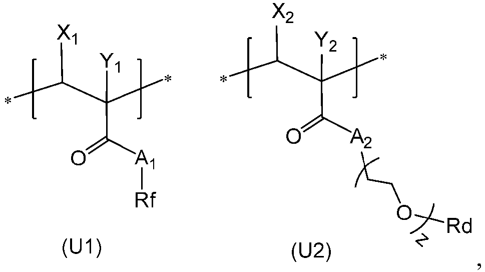 wherein
X₁ and X₂ each are independently H or an electron-withdrawing group;
Y₁ and Y₂ each are independently a cyano group or a linking group formed by bonding a cyano group to the lithium metal in the lithium-containing metal;
A₁ and A₂ each are independently O, S, or NR¹¹, and R¹¹ is H or C₁₋₃ alkyl;
Rd is a hydrocarbyl or hydrocarbyl substituted by Q₁, Q₁ is selected from the following substituents: a cyano group, -C(=O)NH₂, -OC(=O)NHR⁶, and -S(=O)₂ F, R⁶ is H or alkyl, optionally R⁶ is H or C₁₋₆ alkyl, and further optionally, R⁶ is H or C₁₋₃ alkyl.

In some implementations, at least one of Y₁ and Y₂ is a linking group formed by bonding a cyano group to lithium metal in the lithium-containing metal. In the present application, the asterisk "*" in the repeating unit of the structure represented by (U1) and the repeating unit of the structure represented by formula (U2) is a conventional representation method in the art, and the position marked by "*" represents an attachment site with an adjacent, identical or different repeating unit.

In the present application, the "bonding" manner or "chemical connection" between cyano and lithium refers to covalent connection, unless otherwise specified.

In the backbone of the polymer Poly, a cyano group may be simultaneously connected to at least one backbone carbon atom of the backbone carbon atom connected to the fluorinated aliphatic chain Rf side group and the backbone carbon atom connected to the EO block. In this case, the cyano group at this position is beneficial to the polymerization reaction of the cyanoacrylic acid derivative monomer, because the cyano group is an electron-withdrawing group, and during the polymerization reaction, the carbon atom connected to the cyano group can form a relatively stable anionic active center, and then the chain growth continues until the chain is terminated. On the other hand, the cyano group at this position can undergo a bonding reaction with lithium metal in the lithium metal, thereby forming a stable chemical connection between the polymer Poly and the lithium-containing metal. As a non-limiting example, at least one type of Y₁ and Y₂ is a cyano group. In some embodiments, both Y₁ and Y₂ are cyano groups. As a non-limiting example, at least one of Y₁ and Y₂ is a cyano group. In some embodiments, both Y₁ and Y₂ are cyano groups. As a non-limiting example, at least one type of Y₁ and Y₂ is a linking group formed by bonding a cyano group to the lithium metal in the lithium-containing metal. As a non-limiting example, at least one of Y₁ and Y₂ is a linking group formed by bonding a cyano group to the lithium metal in the lithium-containing metal.

In the present application, the term "cyanoacrylic acid derivative monomer" refers to a monomer having derivative of the skeleton represented by 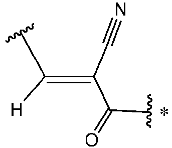 is used as a monomer for the in-situ polymerization reaction in the present application, and the end marked with the asterisk "*" can be connected to the foregoing Rf or EO block through a linking group such as an ester group or an amide group. Here, for A₁ and A₂, O corresponds to an ester bond linkage type, S corresponds to a thioester bond linkage type, and NH corresponds to an amido bond linkage type.

In the present application, the term "C₁₋₃ alkylene" refers to an alkylene containing 1, 2 or 3 carbon atoms, and suitable examples include methylene (-CH₂-), ethylene (-CH₂CH₂- or - CH(CH₃)-), and propylene (-CH₂CH₂CH₂-, -CH₂CH(CH₃)-, or -C(CH₃)₂-).

The polymer Poly may be a copolymer containing the repeating unit of the structure represented by (U1) and the repeating unit of the structure represented by formula (U2). The polymer Poly can form a chemical bonding effect between a large quantity of cyano groups located on the side groups of the backbone and the lithium metal, thereby realizing a stable chemical connection between the polymer layer and the lithium-containing metal.

In some implementations, in the structure of the polymer Poly, X₁ and X₂ each are independently H, or a cyano group, a nitro group or -NR²¹R²² at each occurrence, and R²¹ and R²² each are independently H or C₁₋₃ alkyl. R²¹ and R²² may each independently be H or methyl. In some implementations, both R²¹ and R²² are methylene.

An electron-withdrawing group may be introduced into at least one of X₁ and X₂ in the polymer Poly, which helps increase reactivity of a carbon-carbon double bond in a cyanoalkenyl carboxylic acid derivative monomer (such as cyanoacrylic acid derivative monomer) during the formation of the polymer layer, promote the progress of the in-situ polymerization reaction, and helps achieve a tighter and more uniform coating of the polymer layer on the surface of the lithium-containing metal.

In some implementations, in the structure of the polymer Poly, A₁ and A₂ each are independently O, S, or NH at each occurrence. In some implementations, A₁ and A₂ each are independently O or NH at each occurrence. In some implementations, A₁ is O. In some implementations, A₁ is NH. In some implementations, A₂ is O. In some implementations, A₂ is NH. In some implementations, both A₁ and A₂ are O. In some implementations, both A₁ and A₂ are NH.

The fluorinated aliphatic chain Rf and the EO block can be each independently grafted to the linear carbon chain through an ester bond, an amido bond, or a thioester bond, so that a corresponding polymerization monomer can be flexibly selected.

In the present application, the polymerizing monomer refers to a monomer that can be used to perform a polymerization reaction. Unless otherwise specified, the monomer refers to a monomer that can be polymerized to form the polymer Poly described in the present application.

In some implementations, Rd is C₁₋₄ hydrocarbyl, optionally, Rd is C₁₋₄ alkyl, which may be methyl, ethyl, propyl or butyl, further optionally, Rd is C₁₋₃ alkyl, which may be methyl, ethyl or propyl, and still further optionally, Rd is methyl.

In some implementations, Rd is a Q₁ substituted hydrocarbyl group, Q₁ may be selected from the following substituents: a cyano group, -C(=O)NH₂, -OC(=O)NHR⁶, and -S(=O)₂F, and R⁶ may be H or alkyl.

In some embodiments, Rd is C₁₋₄ alkyl substituted by Q₁. In some embodiments, Rd is C₁₋₄ alkyl substituted by Q₁, herein the substituted C₁₋₄ alkyl may further be methyl, ethyl, propyl or butyl, and may further be C₁₋₃ alkyl (such as methyl, ethyl or propyl). In some embodiments, Rd is methyl substituted by Q₁.

In some implementations, Q₁ is a cyano group, -C(=O)NH₂, -OC(=O)NHR⁶, or - S(=O)₂F, and R⁶ may be H or alkyl. In some embodiments, R⁶ is H. In some embodiments, R⁶ is alkyl, further, may be C₁₋₆ alkyl, further, may be C₁₋₃ alkyl, and further, may be methyl, ethyl or propyl. In some embodiments, R⁶ is methyl.

Functional substituents may further be introduced at the ends of the EO block to better optimize performance of the polymer layer and the lithium metal secondary battery based on a requirement. For example, the introduction of cyano can further enhance a chemical bonding effect between the polymer Poly and the lithium metal, the introduction of fluorosulfonyl (-S(=O)₂F) can induce uniform deposition of lithium ions, the introduction of an amide group (-C(=O)NH₂) can enhance the elastic modulus of the protective layer, and the introduction of a urethane group (such as -OC(=O)-NHR⁶, where R⁶ can be H or alkyl) can improve the elasticity of the material through cooperation of soft and hard segments.

In some implementations, the structure of the polymer Poly includes m repeating units represented by formula (U1) and n repeating units represented by formula (U2).

The quantity of the two repeating units represented by formula (U1) and formula (U2) in the polymer Poly is controlled, so that the flexibility and elasticity of the polymer layer can be regulated at the same time, thereby regulating the elastic deformation of the polymer layer, and regulating the degree of adhesion between the polymer layer and the substrate and between the polymer layer and the separator. Larger elastic deformation helps better adapt to larger volume expansion on the negative electrode side during charge, which can reduce or avoid cracking of the protective layer to achieve a protective effect for a long time. Better flexibility facilitates tight adhesion between the polymer layer and the lithium metal and between the polymer layer and the separator, reduces interface impedance, and helps improve energy density and power density of the battery.

In some implementations, in the structure of the polymer Poly, the m repeating units of formula (U1) and the n repeating units of formula (U2) are linearly arranged. In this case, the two repeating units represented by formula (U1) and formula (U2) form a linear carbon chain, which has good flexibility and is more beneficial to the flexibility control of the polymer Poly.

In some implementations, formula (U1) and formula (U2) jointly participate in the formation of the linear carbon chain in the polymer Poly.

In some implementations, the polymer Poly has a general structural formula represented by formula (P1): 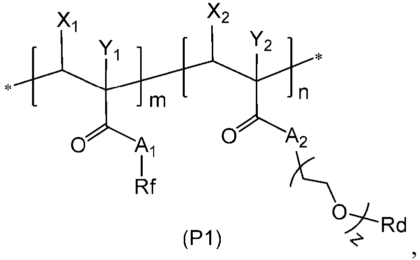 where definitions of m and n are consistent with the foregoing definitions.

In the present application, the asterisks "*" on two sides of the general structural formula of formula (P1) are conventional representation methods in the art, indicating the end groups of the linear carbon chain of the polymer Poly. In the present application, the terminal group of the polymer Poly, if not particularly limited, refers to a terminal group formed by a polymerization reaction of a carbon-carbon double bond, the type of the terminal group is related to factors such as the initiator used and the terminal blocking group in the termination reaction, and when the terminal group of the polymer Poly is described by " *", it can be understood in conjunction with the description related to the polymerization reaction in the present application, and those skilled in the art can correctly understand the structure of the polymer Poly.

In formula (P1), m + n is numerically equal to a degree of polymerization of the polymer Poly. m + n is controlled, so that the molecular weight of the polymer Poly can be controlled. The ratio of the quantity of the two repeating units in the polymer Poly can be adjusted by controlling m/n. The polymer Poly represented by formula (P1) has a controllable quantity of repeating units represented by formula (U1) and repeating units represented by formula (U2), and has a flexible linear carbon chain, which is more advantageous for the flexible control of the polymer Poly, and is also more advantageous for the cyano group of the backbone side group to be fully in contact with the metal lithium in the lithium-containing metal, so that the polymer Poly and the lithium-containing metal are more closely attached, the quantity of chemical bonding sites is more, and the bonding is firmer.

In some implementations, the first side chains in the polymer Poly are all introduced by formula (U1). In this case, Rf is present only in the repeating unit represented by the formula (U1).

In some implementations, the second side chains in the polymer Poly are all introduced by formula (U2). In this case, the EO block is present only in the repeating unit represented by the formula (U2).

In some implementations, in the polymer Poly, the first side chains are all introduced by formula (U1), and the second side chains are all introduced by formula (U2).

In some implementations, in the polymer Poly, the fluorine substitution ratio in any fluorinated aliphatic chain Rf is independently greater than or equal to 50%. In the polymer Poly, the fluorine substitution ratio in any fluorinated aliphatic chain Rf may alternatively be independently any one of the following percentages, or independently selected from an interval formed by any one of the following percentages and 100%, or independently selected from an interval formed by any two of the following percentages: 50%, 55%, 60%, 65%, 70%, 75%, 80%, 90%, 95%, 96%, 97%, 98%, and 99%. The interval between any one of the percentages and 100% is, for example, 50% to 100%, 55% to 100%, 60% to 100%, 65% to 100%, 70% to 100%, 80% to 100%, or the like. Non-limiting examples of the interval formed by any two percentages include 50% to 99%, 55% to 99%, etc. In some implementations, in the polymer Poly, the fluorine substitution ratio in at least one Rf is 100%. In some implementations, in the polymer Poly, the fluorine substitution ratio in any fluorinated aliphatic chain Rf is 100%.

In some embodiments, in the polymer Poly, the fluorine substitution ratio in any fluorinated aliphatic chain Rf is independently greater than or equal to 55%.

In the present application, the "fluorine substitution ratio in fluorinated aliphatic chain Rf" is the molar proportion of fluorine atoms based on the quantity of hydrogen atoms that can be substituted in the fluorinated aliphatic chain Rf group. The "number of hydrogen atoms that can be substituted" can be understood as the quantity of sites that can be substituted in the fluorinated aliphatic chain Rf group, that is, the maximum quantity of hydrogen atoms that can be linked to carbon atoms and possible heteroatoms (such as phosphorus atoms, nitrogen atoms, sulfur atoms, and the like). The hydrogen atoms may also be substituted by other elements (in this case, the sites occupied by other elements are also counted in the quantity of groups).

As non-limiting examples of fluorinated aliphatic chain Rf, the fluorine substitution ratio in 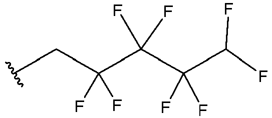 is 8/11, which is about 72.7%. The fluorine substitution ratio in 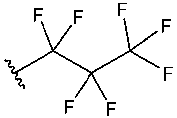 is 100%. The fluorine substitution ratio in 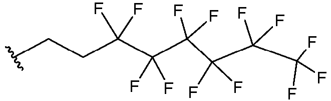 is 13/17, which was about 76.5%. The fluorine substitution ratio in 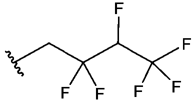 is 6/9, which is about 66.7%. The fluorine substitution ratio in 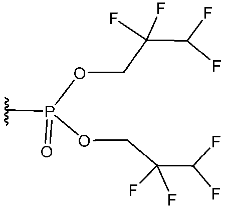 is 8/14, which is about 57.1%. The fluorine substitution ratio in 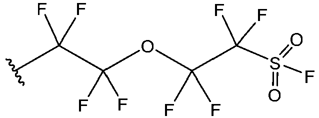 is 100%.

In some embodiments, at least 50% of the quantity of fluorinated aliphatic chains Rf in the polymer Poly satisfies a fluorine substitution ratio greater than or equal to 80%, or greater than or equal to 90%.

In some embodiments, at least 60% of the quantity of fluorinated aliphatic chains Rf in the polymer Poly satisfies a fluorine substitution ratio greater than or equal to 70%, or greater than or equal to 80%, or greater than or equal to 90%.

In some embodiments, at least 70% of the quantity of fluorinated aliphatic chains Rf in the polymer Poly satisfies a fluorine substitution ratio greater than or equal to 60%, or greater than or equal to 70%, or greater than or equal to 80%, or greater than or equal to 90%.

In some embodiments, at least 80% of the quantity of fluorinated aliphatic chains Rf in the polymer Poly satisfies a fluorine substitution ratio greater than or equal to 50%, or greater than or equal to 60%, or greater than or equal to 70%, or greater than or equal to 80%, or greater than or equal to 90%.

In the present application, for the percentage interval defined by "greater than or equal to", such as greater than or equal to 50%, greater than or equal to 60%, if there is no other limitation, the upper limit is 100%, that is, greater than or equal to 50% and greater than or equal to 60% have the same meaning as 50% to 100% and 60% to 100%, respectively. This definition is applicable to, but not limited to, the value range of the fluorine substitution ratio.

In some implementations, in the polymer Poly, the quantity of fluorine atoms in any fluorinated aliphatic chain Rf is independently greater than or equal to 4. In the polymer Poly, the quantity of fluorine atoms in any fluorinated aliphatic chain Rf may alternatively be independently any one of the following values, or independently greater than or equal to any one of the following values, or independently an interval formed by any two of the following values: 4, 5, 6, 7, 8, 9, 10, 11, 12, 13, 14, 15, 16, 17, 18, 19, and 20. Non-limiting examples of the interval formed by any two of the above values include 4 to 20, 4 to 16, 4 to 15, 4 to 13, 5 to 20, 5 to 16, 5 to 15, 5 to 13, 6 to 20, 6 to 16, 6 to 15, 6 to 13, 8 to 20, 8 to 16, 8 to 15, 8 to 13, 4 to 10, etc.

In some embodiments, in the polymer Poly, the quantity of fluorine atoms in any fluorinated aliphatic chain Rf is independently greater than or equal to 5.

In some embodiments, in the polymer Poly, the quantity of fluorine atoms in any fluorinated aliphatic chain Rf is independently an integer selected from 4 to 20.

In some embodiments, in the polymer Poly, the quantity of fluorine atoms in any fluorinated aliphatic chain Rf is independently an integer selected from 4 to 16.

In some embodiments, in the polymer Poly, the quantity of fluorine atoms in any fluorinated aliphatic chain Rf is independently an integer selected from 4 to 15.

In some embodiments, in the polymer Poly, the quantity of fluorine atoms in any fluorinated aliphatic chain Rf is independently an integer selected from 5 to 15.

In some embodiments, in the polymer Poly, the quantity of fluorine atoms in any fluorinated aliphatic chain Rf is independently an integer selected from 4 to 13.

In some embodiments, in the polymer Poly, the quantity of fluorine atoms in any fluorinated aliphatic chain Rf is independently an integer selected from 4 to 10.

In some embodiments, the mass proportion of fluorine in the polymer Poly is 15% to 44%. The mass proportion of fluorine element in the polymer Poly may alternatively be any one of the following percentages or selected from an interval formed by any two of the following percentages: 15%, 20%, 25%, 30%, 35%, 40%, and 44%. Non-limiting examples of the interval formed by any two percentages include 15% to 44%, 20% to 44%, 25% to 44%, 30% to 44%, 15% to 41%, 20% to 41%, 25% to 41%, 30% to 41%, etc.

In some embodiments, the mass proportion of fluorine in the polymer Poly is 15% to 41%.

In some embodiments, the mass proportion of fluorine element in the polymer Poly is 20% to 41%.

In some implementations, the polymer Poly satisfies one or more of the following features:
the fluorine substitution ratio in any fluorinated aliphatic chain Rf is independently greater than or equal to 50%;
the quantity of fluorine atoms in any fluorinated aliphatic chain Rf is independently greater than or equal to 4; and
The mass proportion of fluorine in the polymer Poly is 15% to 44%.

In some implementations, the polymer Poly satisfies one or more of the following features:
the fluorine substitution ratio in any fluorinated aliphatic chain Rf is independently greater than or equal to 55%;
the quantity of fluorine atoms in any fluorinated aliphatic chain Rf is independently greater than or equal to 5, and optionally, the quantity of fluorine atoms in any fluorinated aliphatic chain Rf is independently 5 to 15; and
The mass proportion of fluorine element in the polymer Poly is 15% to 41%, optionally 20% to 41%.

In one or more manners of controlling the fluorine substitution ratio in the fluorinated aliphatic chain Rf, controlling the quantity of fluorine atoms in the fluorinated aliphatic chain Rf, and controlling the mass proportion of fluorine in the polymer Poly, uniform deposition of lithium ions can be preferably promoted, formation of lithium dendrite can be suppressed, a cycle life of lithium ion can be increased, a short-circuit risk can be reduced, and volume expansion on a negative electrode side of the lithium metal can be alleviated. In addition, the polymer layer can be further used in a lithium metal secondary battery that is subjected to charge and discharge cycles at a high current density.

For example, the mass proportion of fluorine in the polymer Poly is controlled, which helps improve the deposition morphology of lithium dendrite in the lithium metal battery and alleviate the volume expansion of the lithium metal negative electrode, and helps the polymer layer be used in the lithium metal secondary battery that is subjected to charge and discharge cycles at a high current density.

In some implementations, in the polymer Poly, any fluorinated aliphatic chain Rf independently contains 2 to 10 backbone carbon atoms, that is, in the polymer Poly, the quantity of backbone carbon atoms contained in any fluorinated aliphatic chain Rf is independently 2 to 10. In the polymer Poly, the quantity of backbone carbon atoms contained in any fluorinated aliphatic chain Rf may alternatively be independently any one of the following values or independently selected from an interval formed by any two of the following values: 2, 3, 4, 5, 6, 7, 8, 9, and 10.

In some embodiments, in the polymer Poly, any fluorinated aliphatic chain Rf independently contains 2 to 8 backbone carbon atoms.

In some embodiments, in the polymer Poly, any fluorinated aliphatic chain Rf independently contains 3 to 8 backbone carbon atoms.

In some embodiments, in the polymer Poly, any fluorinated aliphatic chain Rf independently contains 3, 4, 5, 6, 7, or 8 backbone carbon atoms.

In some embodiments, in the polymer Poly, the quantity of carbon atoms in any fluorinated aliphatic chain Rf is independently an integer selected from 2 to 10. In the polymer Poly, the quantity of carbon atoms in any fluorinated aliphatic chain Rf may alternatively be independently any one of the following values or independently selected from an interval formed by any two of the following values: 2, 3, 4, 5, 6, 7, 8, 9, and 10.

In some embodiments, in the polymer Poly, the quantity of carbon atoms in any fluorinated aliphatic chain Rf is independently an integer selected from 2 to 8.

In some embodiments, in the polymer Poly, the quantity of carbon atoms in any fluorinated aliphatic chain Rf is independently an integer selected from 3 to 8.

In some implementations, the polymer Poly satisfies one or more of the following features:
any fluorinated aliphatic chain Rf independently contains 2 to 10 backbone carbon atoms; and
the quantity of carbon atoms in any fluorinated aliphatic chain Rf is independently an integer selected from 2 to 10.

In some implementations, the polymer Poly satisfies one or more of the following features:
any fluorinated aliphatic chain Rf independently contains 2 to 8 backbone carbon atoms, and optionally, any fluorinated aliphatic chain Rf independently contains 3 to 8 backbone carbon atoms; and
the quantity of carbon atoms in any fluorinated aliphatic chain Rf is independently an integer selected from 2 to 8, and optionally, the quantity of carbon atoms in any fluorinated aliphatic chain Rf is independently an integer selected from 3 to 8.

In some embodiments, at least one Rf may independently be a fluoro-substituted C₂₋₁₀ alkyl. In some embodiments, any fluorinated aliphatic chain Rf may independently be a fluoro-substituted C₂₋₁₀ alkyl. Further, based on any one of the above embodiments, the quantity of carbon atoms of any fluorinated aliphatic chain Rf may alternatively be independently any one of the following values or independently selected from an interval formed by any two of the following values: 2, 3, 4, 5, 6, 7, 8, 9, and 10.

In some embodiments, the C₂₋₁₀ alkyl may be, but is not limited to, for example, ethyl propyl, butyl, pentyl, hexyl, heptyl, octyl, isopropyl, isobutyl, tert-butyl, isopentyl, tert-pentyl, neopentyl, 2-methylpentyl, 3-methylpentyl, 2,2-dimethylbutyl, 2,3-dimethylbutyl, 2-methylhexyl, 3-methylhexyl, 2,2-dimethylpentyl, 3,3-dimethylpentyl, 2,3-dimethylpentyl, 2,4-dimethylpentyl, 3-ethylpentyl, 2,2,3,-trimethylbutyl, 2-methylheptyl, 3-methylheptyl, 4-methylheptyl, 2,2-dimethylhexyl, 3,3-dimethylhexyl, 2,3-dimethylpentyl, 2,4-dimethylpentyl, 2,5-dimethylpentyl, 3,4-dimethylpentyl, 3-ethylpentyl, 2,2,3-trimethylpentyl, 2,2,4-trimethylpentyl, 2,3,3-trimethylpentyl, 2,3,4-trimethylpentyl, 2-methyl-3-ethylpentyl, 3-methyl-3-ethylpentyl, 2,2,3,3-tetramethylbutanyl, nonyl, and decyl.

The length of the side chain of fluorinated aliphatic chain Rf can be adjusted by controlling the quantity of carbon atoms in fluorinated aliphatic chain Rf, thereby imparting suitable elasticity to the polymer layer, and preferably inhibiting cracking of the polymer layer under large volume deformation.

In some implementations, in the structure of the polymer Poly, one, a plurality of, or all of fluorinated aliphatic chains Rf independently contain one or more heteroatoms selected from a group consisting of iodine, nitrogen, oxygen, sulfur, silicon, boron and phosphorus. Optionally, the quantity of any type of heteroatoms in one, a plurality of, or all of fluorinated aliphatic chains Rf is independently one or more. Further optionally, the quantity of any type of heteroatoms in one, a plurality of, or all of fluorinated aliphatic chains Rf is selected from 1 or 2 to 6. Further optionally, the quantity of any type of heteroatoms in one, a plurality of, or all of fluorinated aliphatic chains Rf is selected from 1 or 2 to 5. In some embodiments, the quantity of oxygen atoms in one, a plurality of, or all of fluorinated aliphatic chains Rf is 1, 2, 3, 4, or 5. In some embodiments, the quantity of nitrogen atoms in one, a plurality of, or all of fluorinated aliphatic chains Rf is 1, 2, or 3. In some embodiments, the quantity of sulfur atoms in one, a plurality of, or all of fluorinated aliphatic chains Rf is 1, 2, or 3. In some embodiments, the quantity of phosphorus atoms in one, a plurality of, or all of fluorinated aliphatic chains Rf is 1 or 2. In some embodiments, the quantity of iodine atoms in one, a plurality of, or all of fluorinated aliphatic chains Rf is 1, 2, 3, 4, 5, or 6. In some embodiments, the quantity of silicon atoms in one, a plurality of, or all of fluorinated aliphatic chains Rf is 1 or 2. In some embodiments, the quantity of boron atoms in one, a plurality of, or all of fluorinated aliphatic chains Rf is 1 or 2.

In some implementations, in the structure of the polymer Poly, one, a plurality of, or all of fluorinated aliphatic chains Rf satisfy one or more of the following features:
the quantity of oxygen atoms in one, a plurality of, or all of fluorinated aliphatic chains Rf is 1, 2, 3, 4, or 5;
the quantity of nitrogen atoms in one, a plurality of, or all of fluorinated aliphatic chains Rf is 1, 2, or 3;
the quantity of sulfur atoms in one, a plurality of, or all of fluorinated aliphatic chains Rf is 1, 2, or 3;
the quantity of phosphorus atoms in one, a plurality of, or all of fluorinated aliphatic chains Rf is 1 or 2;
the quantity of iodine atoms in one, a plurality of, or all of fluorinated aliphatic chains Rf is 1, 2, 3, 4, 5, or 6;
the quantity of silicon atoms in one, a plurality of or all of fluorinated aliphatic chains Rf is 1 or 2; and
the quantity of boron atoms in one, a plurality of, or all of fluorinated aliphatic chains Rf is 1 or 2.

In some implementations, in the structure of the polymer Poly, one, a plurality of, or all of fluorinated aliphatic chains Rf contain one or more atoms or atomic groups selected from a group consisting of an iodine group, -NR¹²-, -O-, -S-, -S(O)₂-, >Si<, >B-, and >P(=O)-, and R¹² is H or C₁₋₃ alkyl. Optionally, R¹² is H or methyl. Further optionally, R¹² is H.

In some implementations, in the structure of the polymer Poly, one, a plurality of, or all of fluorinated aliphatic chains Rf contain one or more atoms or atomic groups selected from a group consisting of -O-, -S(O)₂-, and -(O=)P(O-)₂. In some implementations, one, a plurality of, or all of fluorinated aliphatic chains Rf contain one or more -O-. In some implementations, one, a plurality of, or all of fluorinated aliphatic chains Rf contain -S(O)₂F. In some implementations, one, a plurality of, or all of fluorinated aliphatic chains Rf contain -(O=)P(O-)₂.

In the present application, the term "atomic group" refers to a group having two or more atoms.

Special properties can be imparted to the polymer layer by introducing heteroatoms other than fluorine atoms in fluorinated aliphatic chain Rf, such as one or more heteroatoms of iodine, nitrogen, oxygen, sulfur, silicon, boron, phosphorus, and the like. For example, phosphorus has a specific flame-retardant effect. For another example, iodine can also play a role in regulating deposition of lithium ions to some extent. For another example, fluorosulfonyl (-S(=O)₂F) has a specific effect on improving the ionic conductivity of the polymer layer and promoting uniform deposition of lithium ions.

In some implementations, in the structure of the polymer Poly, any fluorinated aliphatic chain Rf is independently a linear structure or a branched structure.

Rf of a linear chain is beneficial to increasing the elasticity of the polymer material. Rf of a side chain is beneficial to improve the swelling capacity of an electrolyte membrane, thereby improving the ionic conductivity.

In some implementations, in the structure of the polymer Poly, any fluorinated aliphatic chain Rf is independently a saturated structure or an unsaturated structure.

When the fluorine-substituted aliphatic chain has a saturated structure, the molecular chain of the polymer Poly can be provided with a higher mobility, which is beneficial to improving elastic regulation of the polymer layer. In addition, an unsaturated bond is introduced into Rf, so that the polymer layer can be crosslinked to enhance the elastic modulus of the polymer protective layer.

In some implementations, in the structure of the polymer Poly, a structure of any fluorinated aliphatic chain Rf is independently represented by formula (III-1), formula (III-2), or formula (III-3): 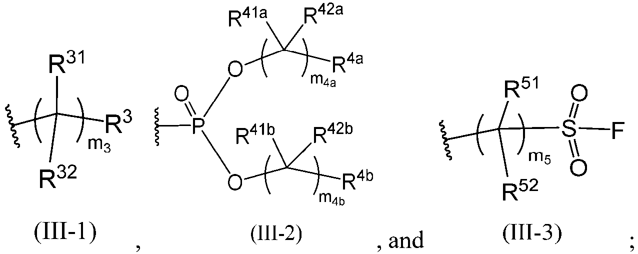 wherein
in formula (III-1), m₃ is an integer selected from 2 to 10, R³¹, R³², and R³ each are independently H or F at each occurrence, and the structure represented by formula (III-1) contains at least four F atoms;
in formula (III-2), m₄ₐ and m_{4b} each are independently an integer selected from 1 to 9, R^{41a}, R^{42a}, R^{4a}, R^{41b}, R^{42b}, and R^{4b} each are independently H or F at each occurrence, and the structure represented by formula (III-2) contains at least four F atoms; and
in formula (III-3), m₅ is an integer selected from 2 to 10, R⁵¹ and R⁵² each are independently H or F at each occurrence, and the structure represented by formula (III-3) contains at least four F atoms.

In formula (III-1), m₃ is an integer selected from 2 to 10. m₃ may alternatively be any one of the following values or selected from an interval formed by any two of the following values: 2, 3, 4, 5, 6, 7, 8, 9, and 10, and m₃ may alternatively be selected from any range of 3 to 10, 3 to 8, etc.

In formula (III-1), R³¹, R³² and R³ each are independently H or F at each occurrence, and the structure represented by formula (III-1) contains at least four F atoms. The quantity of fluorine atoms in the structure represented by formula (III-1) can further be any suitable value as defined above, which can be referred to, but not limited to, the quantity of fluorine atoms in fluorinated aliphatic chain Rf, the fluorine substitution ratio in fluorinated aliphatic chain Rf, the mass proportion of fluorine element in the polymer Poly, the quantity of backbone carbon atoms contained in fluorinated aliphatic chain Rf, the quantity of carbon atoms in fluorinated aliphatic chain Rf, and the like.

The structure of formula III-1 is a linear saturated fluorinated aliphatic chain, which, on the one hand, can impart better elasticity to the polymer layer and reduce or avoid the polymer layer from being broken under large volume deformation, and on the other hand, can effectively promote the uniform deposition of lithium ions through fluorine element, inhibit the formation of lithium dendrites, and alleviate the volume expansion of the lithium metal negative electrode side.

In formula (III-2), m₄ₐ and m_{4b} each are independently an integer selected from 1 to 9, and may be each independently any one of the following values or each independently selected from an interval formed by any two of the following values: 1, 2, 3, 4, 5, 6, 7, 8, and 9. m₄ₐ and m_{4b} may each independently be selected from any one of the ranges of 2 to 9, 2 to 8, 3 to 8, 3 to 6, and the like.

In formula (III-2), R^{41a}, R^{42a}, R^{4a}, R^{41b}, R^{42b} and R^{4b} each are independently H or F at each occurrence, and the structure represented by formula (III-2) contains at least four F atoms. The quantity of fluorine atoms in the structure represented by formula (III-2) can further be any suitable value as defined above, which can be referred to, but not limited to, the quantity of fluorine atoms in fluorinated aliphatic chain Rf, the fluorine substitution ratio in fluorinated aliphatic chain Rf, the mass proportion of fluorine element in the polymer Poly, the quantity of backbone carbon atoms contained in fluorinated aliphatic chain Rf, the quantity of carbon atoms in fluorinated aliphatic chain Rf, and the like.

The structure of formula III-2 can introduce phosphorus. In addition, the phosphate group therein has a flame-retardant effect, which is beneficial to improving the safety performance of the battery cell.

In formula (III-3), m₅ is an integer selected from 2 to 10, and may be any one of the following values or selected from an interval formed by any two of the following values: 2, 3, 4, 5, 6, 7, 8, 9, and 10. m₅ may be selected from any range of 3 to 10, 3 to 8, and the like.

In formula (III-3), R⁵¹ and R⁵² each are independently H or F at each occurrence, and the structure represented by formula (III-3) contains at least four F atoms. The quantity of fluorine atoms in the structure represented by formula (III-3) can further be any suitable value as defined above, which can be referred to, but not limited to, the quantity of fluorine atoms in fluorinated aliphatic chain Rf, the fluorine substitution ratio in fluorinated aliphatic chain Rf, the mass proportion of fluorine element in the polymer Poly, the quantity of backbone carbon atoms contained in fluorinated aliphatic chain Rf, the quantity of carbon atoms in fluorinated aliphatic chain Rf, and the like.

The structure of formula III-3 can introduce fluorosulfonyl. This has a specific positive effect on improving the ionic conductivity of the polymer layer.

In some implementations, the polymer Poly satisfies one or more of the following features:
m₃ is an integer selected from 3 to 10, and optionally, m₃ is an integer selected from 3 to 8;
m₄ₐ and m_{4b} each are independently an integer selected from 2 to 9, optionally, m₄ₐ and m_{4b} each are independently an integer selected from 2 to 8, further optionally, m₄ₐ and m_{4b} each are independently an integer selected from 3 to 8, and still further optionally, m₄ₐ and m_{4b} each are independently an integer selected from 3 to 6.

m₅ is an integer selected from 3 to 10, and optionally, m₅ is an integer selected from 3 to 8.

In some implementations, in the structure of the polymer Poly, the structures of fluorinated aliphatic chains Rf are all represented by formula (III-1), or the structures of fluorinated aliphatic chains Rf are all represented by formula (III-2), or the structures of fluorinated aliphatic chains Rf are all represented by formula (III-3).

In some implementations, in the structure of the polymer Poly, the quantity of H atoms at each occurrence of formula (III-1) is 0, 1, 2, 3, or 4, the quantity of H atoms at each occurrence of formula (III-2) is 0, 1, 2, 3, 4, 5, or 6, and the quantity of H atoms at each occurrence of formula (III-3) is 0, 1, 2, 3, or 4.

In some implementations, the quantity of H atoms in formula (III-1) is 0.

In some implementations, the quantity of H atoms in formula (III-2) is 0.

In some implementations, the quantity of H atoms in formula (III-3) is 0.

The quantity of H atoms is controlled, so that the quantity of sites available for fluorine substitution can be regulated.

In some implementations, in the structure of the polymer Poly, any fluorinated aliphatic chain Rf is independently any one of the following structures: 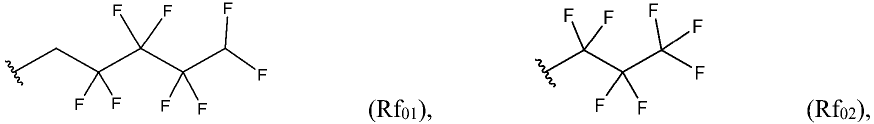 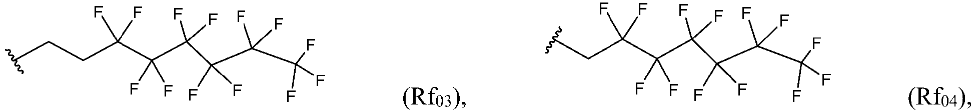 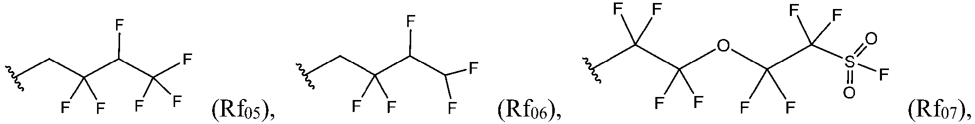 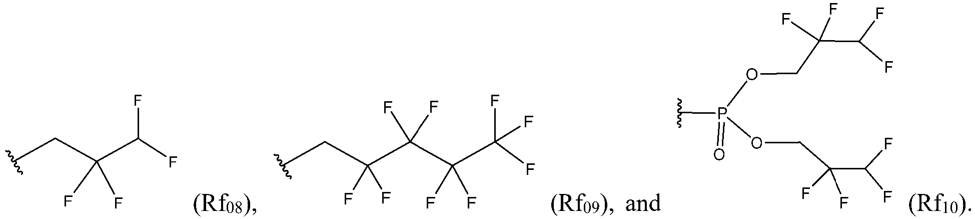 Rf₁₀ is a Rf of a branched structure. Rf₀₁, Rf₀₂, Rf₀₃, Rf₀₄, Rf₀₅, Rf₀₆, Rf₀₇, Rf₀₈, and Rf₀₉ are all linear structures. In some implementations, in the structure of the polymer Poly, any fluorinated aliphatic chain Rf is independently any one of the following structures: Rf₀₁, Rf₀₂, Rf₀₃, Rf₀₅, Rf₀₇, Rf₀₈, Rf₀₉, and Rf₁₀.

In some implementations, the number-average molecular weight of the polymer Poly is selected from 10 kDa to 200 kDa, optionally, the number-average molecular weight of the polymer Poly is selected from 40 kDa to 100 kDa, and optionally, the number-average molecular weight of the polymer Poly is selected from 50 kDa to 80 kDa.

The number-average molecular weight of the polymer Poly may alternatively be any one of the following molecular weights or selected from an interval formed by any two molecular weights: 10, 11, 12, 13, 14, 15, 16, 17, 18, 19, 20, 22, 25, 26, 28, 30, 35, 40, 44, 45, 46, 48, 50, 55, 60, 65, 70, 75, 80, 85, 90, 95, 100, 110, 120, 130, 140, 150, 160, 170, 180, 190, 200, and the like (all in unit of kDa).

The degree of polymerization or molecular weight of the polymer Poly is adjusted, so that the molecular chain length of the polymer Poly can be adjusted, which not only can implement effective coating of lithium metal, but also maintain a stable chemical connection, and can further affect compactness and uniformity of the polymer layer.

In some implementations, the lithium-containing metal includes a lithium simple substance or a lithium alloy. The lithium alloy contains lithium, and may further contain, but is not limited to, one or more elements of silver, magnesium, aluminum, gold, zinc, tin, copper, nickel, and titanium.

Lithium metal has the highest specific capacity (3860 mAh/g) and the lowest electrochemical potential (-3.04 V, a relative standard hydrogen electrode) among all negative electrode materials of lithium-based batteries, and is a preferred negative electrode material of lithium metal batteries, which helps to achieve high energy density.

In some implementations, the amount of the lithium metal in the lithium-containing metal relative to the polymer Poly is greater than or equal to a catalytic amount, and is measured by the molar ratio.

In the lithium metal negative electrode material provided in the present application, it only needs to be able to provide a catalytic amount of the lithium-containing metal to successfully catalyze the in-situ polymerization reaction of the cyanoalkenyl carboxylic acid derivative monomer (such as the cyanoacrylic acid derivative monomer) on the surface of the lithium-containing metal. The amount of the lithium metal relative to the polymer Poly only needs to be in contact with a catalytic amount, which can catalyze the in-situ polymerization reaction of the cyanoalkenyl carboxylic acid derivative monomer (such as cyanoacrylic acid derivative monomer) on the surface of lithium metal.

According to a second aspect, the present application provides a negative electrode sheet, including a lithium-containing layer and a polymer layer that are stacked, where the negative electrode sheet comprises the lithium metal negative electrode material according to the first aspect of the present application.

The lithium-containing layer includes lithium-containing metal in the lithium metal negative electrode material, and the polymer layer includes a polymer Poly in the lithium metal negative electrode material.

In the present application, "active material" and "active substance" have the same meaning and can be used interchangeably, "positive active substance" and "positive active material" have the same meaning and can be used interchangeably, and "negative active substance" and "negative active material" have the same meaning and can be used interchangeably.

In the present application, the "negative electrode sheet matrix" can provide a negative active material of a lithium metal battery. The negative electrode sheet matrix in the negative electrode sheet includes at least a lithium-containing layer in contact with the polymer layer, that is, the lithium-containing layer is located on the outermost layer of the negative electrode sheet matrix. In other words, the outermost layer on at least one side of the negative electrode sheet matrix is the lithium-containing layer. In an embodiment, the negative electrode sheet matrix is composed of one lithium-containing layer. The polymer layer is chemically connected to at least a portion of lithium in the lithium-containing layer, and further, the "chemical connection" herein refers to a covalent connection. The thickness of the negative electrode sheet matrix may be the thickness of a lithium negative electrode in a common lithium metal battery. The "lithium negative electrode" herein refers to the thickness of the negative electrode active material layer provided by the lithium metal or the lithium alloy. A non-limiting example of the thickness of the lithium-containing layer is 5 µm to 40 µm. The thickness of the lithium-containing layer may alternatively be selected from any one of the following thicknesses or an interval formed by any two of the following thicknesses: 6 µm, 7 µm, 8 µm, 9 µm, 10 µm, 15 µm, 20 µm, 25 µm, 30 µm, 40 µm, and the like.

In the present application, the term "lithium-containing layer" refers to a structural layer containing metallic lithium. The lithium-containing layer may be substantially composed of lithium (Li) metal, or may be a lithium alloy, or may be a composition including lithium metal and a lithium alloy (e.g., a composition substantially composed of lithium metal and a lithium alloy). Lithium in the lithium-containing layer can play multiple roles. In an aspect, lithium in the lithium-containing layer can catalyze the in-situ polymerization reaction of cyanoalkenyl carboxylic acid derivative monomers. In another aspect, lithium in the lithium-containing layer can form a stable covalent connection to the cyano group carried by the polymer Poly. In still another aspect, lithium in the lithium-containing layer can further serve as a lithium source of the negative active material. The thickness of the lithium-containing layer may be any suitable thickness as long as it is sufficient to provide a catalytic amount that can support the in-situ polymerization reaction of the cyanoalkenyl carboxylic acid derivative monomer, and may be, for example, the thickness of the lithium negative electrode in a general lithium metal battery. When the thickness of the lithium-containing layer is thin, a second negative electrode active material layer may be further disposed on a side that is of the lithium-containing layer and that is away from the polymer layer. In this case, the negative electrode sheet matrix includes the lithium-containing layer and the second negative electrode active material layer. The compositions and contents of the lithium-containing layer and the second negative electrode active material layer may be the same or different.

In the present application, the lithium-containing layer "substantially composed of lithium metal" means that the weight percentage of metallic lithium is high, and "substantially" described herein refers to, for example, 80% or more, 85% or more, 90% or more, 95% or more, 96% or more, 97% or more, 98% or more, 99% or more, 100% or more, etc.

The negative electrode sheet comprises a lithium metal negative electrode material distributed in both the lithium-containing layer and the polymer layer, on at least one side of the negative electrode sheet, the lithium-containing layer is stably connected with a dense and uniform polymer layer by chemical bonding, the polymer layer has specific elasticity, flexibility and swellability, so that the polymer layer and the lithium-containing layer, and the polymer layer and the separator can be firmly, tightly and permanently attached, which can better adapt to the large volume expansion of the negative electrode side during charging, and can play a role of a protective layer at the negative electrode of the lithium metal secondary battery for a long time. The polymer layer can effectively inhibit the contact reaction between the electrolyte solution and the lithium metal, reduce the consumption of the electrolyte solution and the lithium metal, prolong the cycle life, can further promote the uniform deposition of lithium ions by using the fluorinated aliphatic chain Rf in the lithium metal negative electrode material, inhibit the formation of lithium dendrites, and alleviate the volume expansion of the lithium metal negative electrode side. In addition, the comprehensive performance of elasticity, flexibility and swellability of the polymer layer not only can promote tight adhesion between the polymer layer and the lithium-containing layer, but also helps exert good ionic conductivity, and helps reduce interface polarization and reduce interface impedance, so that the lithium metal secondary battery can achieve a higher energy density, power density, charge/discharge cycle stability, and higher safety performance in the presence of the polymer layer.

In some implementations, the lithium-containing layer is substantially composed of the lithium-containing metal. In some implementations, the lithium-containing layer is made of a lithium simple substance. In some other embodiments, the lithium-containing layer is made of a lithium alloy.

In the present application, the lithium-containing layer "substantially composed of lithium-containing metal" means that the weight proportion of the lithium-containing metal is high, and "substantially" described herein refers to, for example, 80% or more, 85% or more, 90% or more, 95% or more, 96% or more, 97% or more, 98% or more, 99% or more, 100% or more, etc.

In some implementations, the polymer layer further includes a first electrolyte solution, and the first electrolyte solution includes a lithium salt (denoted as a first electrolyte solution lithium salt) and a solvent (denoted as a first electrolyte solution solvent).

In some implementations, the lithium salt is selected from one or more of lithium hexafluorophosphate (LiPF₆), tetrafluoroboric acid (LiBF₄), lithium bisfluorosulfonylimide (LiFSI), lithium bis(trifluoromethanesulphonyl)imide (LiTFSI), lithium difluoro(oxalato)borate (LiDFOB), lithium perchlorate (LiClO₄), and lithium bis(oxalate)borate (LiBOB).

In some implementations, the first electrolyte solution solvent is selected from one or more of ethylene carbonate (EC), propylene carbonate (PC), dimethyl carbonate (DMC), diethyl carbonate (DEC), ethyl methyl carbonate (EMC), dipropyl carbonate (DPC), diphenyl carbonate (DPhC), dibutyl carbonate (DBC), butylene carbonate (BC), dimethoxyethane (DME), tetrahydrofuran (THF), dioxolane (DOL), methyl nonafluoro-n-butyl ether (MFE), 1,1,2,2-tetrafluoroethyl-2,2,3,3-tetrafluoropropyl ether (HFE-458), octafluoropentyl-tetrafluoroethyl ether (F-EAE), 1,2-bis (cyanoethoxy)ethane (DENE), diphenyl ether (DPE), and 18-crown-6.

In some implementations, the negative electrode sheet satisfies any one or more of the following features:
the lithium salt includes one or more of lithium hexafluorophosphate, tetrafluoroboric acid, lithium bisfluorosulfonylimide, lithium bis(trifluoromethanesulphonyl)imide, lithium difluoro(oxalato)borate, lithium perchlorate, and lithium bis(oxalate)borate; and
the first electrolyte solution solvent includes one or more of ethylene carbonate, propylene carbonate, dimethyl carbonate, diethyl carbonate, ethyl methyl carbonate, dipropyl carbonate, diphenyl carbonate, dibutyl carbonate, butylene carbonate, dimethoxyethane, tetrahydrofuran, dioxolane, methyl nonafluoro-n-butyl ether, 1,1,2,2-tetrafluoroethyl-2,2,3,3-tetrafluoropropyl ether, octafluoropentyl-tetrafluoroethyl ether, 1,2-bis(cyanoethoxy)ethane, diphenyl ether, and 18-crown-6.

In some implementations, the concentration of the lithium salt in the first electrolyte solution is selected from 0.2 mol/L to 8 mol/L, optionally, the concentration of the lithium salt in the first electrolyte solution is selected from 0.5 mol/L to 5 mol/L, and further optionally, the concentration of the lithium salt in the first electrolyte solution is selected from 0.5 mol/L to 2 mol/L. The concentration of the lithium salt in the first electrolyte solution may alternatively be any one of the following concentrations or selected from an interval formed by any two of the following concentrations: 0.2, 0.3, 0.4, 0.5, 0.6, 0.7, 0.8, 0.9, 1, 1.5, 2, 2.5, 3, 3.5, 4, 4.5, 5, 5.5, 6, 6.5, 7, 7.5, 8, or the like (all in unit of mol per liter (mol/L)).

The polymer layer of the lithium metal negative electrode material contains an electrolyte solution (which may be denoted as the first electrolyte solution), and the concentration of the lithium salt in the first electrolyte solution may affect the deposition morphology of lithium ions. The concentration of the lithium salt can change the solvation of Li⁺ in the electrolyte solution, which in turn affects composition of a solid electrolyte interface film (SEI film) and the deposition morphology of lithium ions. The lithium salt in the electrolyte solution is controlled to be at a more suitable concentration, so that it is more beneficial to promoting dense and uniform deposition of lithium ions and reducing the volume expansion on the negative electrode side. In addition, the lithium salt in the electrolyte solution is controlled to be at a more suitable concentration, so that the polymer layer can have more suitable mechanical properties, such as flexibility and elasticity, and can further achieve a better lithium ion conduction capacity during charge and discharge. When the concentration of the lithium salt is relatively high, the mechanical properties of the polymer layer may deviate from a preferred range, and when the concentration of the lithium salt is relatively low, the lithium ion conduction capacity during charge and discharge may deviate from a preferred range.

In some implementations, the mass proportion of the first electrolyte solution in the polymer layer is 20% to 80%, optionally, the mass proportion of the first electrolyte solution in the polymer layer is 30% to 60%, further optionally, the mass proportion of the first electrolyte solution in the polymer layer is 40% to 60%, and still further optionally, the mass proportion of the first electrolyte solution in the polymer layer is 40% to 55%. The mass proportion of the first electrolyte solution in the polymer layer may alternatively be any one of the following percentages or selected from an interval formed by any two of the following percentages: 20%, 25%, 30%, 35%, 40%, 45%, 50%, 55%, 60%, 65%, 70%, 80%, and the like. Non-limiting examples of the interval formed by any two percentages include 30% to 80%, 40% to 80%, 30% to 60%, 40% to 60%, 30% to 55%, 40% to 55%, and the like.

In some implementations, the mass ratio of the polymer Poly to the first electrolyte solution is 4:1 to 0.25:1. Optionally, the mass ratio of the polymer Poly to the first electrolyte solution is 3:1 to 0.5:1. Further optionally, the mass ratio of the polymer Poly to the first electrolyte solution is 2.5:1 to 1:1. Still further optionally, the mass ratio of the polymer Poly to the first electrolyte solution is 7:3 to 2:1. The mass ratio of the polymer Poly to the first electrolyte solution may alternatively be 4:1, 3.5:1, 3:1, 2.5:1, 7:3, 2:1, 1.5:1, 1:1, 0.9:1, 0.8:1, 0.7:1, 0.6:1, 0.5:1, 0.4:1, 0.3:1, 1:3, 1:3.5, 0.25:1, and the like. The mass ratio may alternatively be selected from an interval formed by any two of the above ratios.

By controlling the mass ratio of the first electrolyte solution in the polymer layer or controlling the mass ratio of the first electrolyte solution in the polymer layer to be in a more appropriate range, the electrolyte solution can be adjusted to have a more suitable mass proportion in the polymer layer. The mass proportion of the electrolyte solution in the polymer layer may affect the elastic modulus and the ionic conductivity of the protective layer. In the first electrolyte solution, the presence of a specific content of lithium salt (denoted as the first electrolyte solution lithium salt) and solvent (denoted as the first electrolyte solution solvent) can plasticize the polymer layer, and can improve the elasticity of the polymer layer. In addition, during the formation of the polymer layer by the in-situ polymerization reaction, the lithium salt and the solvent in the first electrolyte solution may be incorporated into the polymer layer, so that the polymer layer has a spongy loose porous structure on a microscopic scale, and the pores are filled with the electrolyte solution, which can provide a path for subsequent transport of lithium ions.

In some embodiments, based on the first electrolyte solution, the swelling ratio of the polymer layer may be any one of the following percentages or selected from an interval formed by any two of the following percentages: 8%, 10%, 11%, 12%, 14%, 15%, 16%, 18%, 20%, 25%, 30%, 35%, 40%, 45%, 50%, 55%, 60%, 65%, and the like. Non-limiting examples of the swelling ratio of the polymer layer based on the first electrolyte solution alternatively include 15% to 65%, 18% to 65%, 30% to 65%, 15% to 55%, 18% to 55%, 30% to 55%, 15% to 40%, 18% to 40%, 30% to 40%, and the like.

In the present application, the "swelling ratio of the polymer layer" generally refers to a test value under the condition of 20°C to 30°C, unless otherwise specified. In some embodiments, the swelling ratio of the polymer layer refers to the swelling ratio at 25 degrees Celsius (°C). Refer to a test method of "Structure and performance test" in the Embodiment section below.

In some implementations, based on the first electrolyte solution, the swelling ratio of the polymer layer at 25°C is 8% to 65%, further optionally, the swelling ratio of the polymer layer at 25°C is 15% to 55%, still further optionally, the swelling ratio of the polymer layer at 25°C is 18% to 44%, and still further optionally, the swelling ratio of the polymer layer at 25°C is 30% to 40%.

In some implementations, based on the first electrolyte solution, the ionic conductivity of the swollen polymer layer may be any one of the following values or selected from an interval formed by any two of the following values: 5 mS/cm, 4.5 mS/cm, 4 mS/cm, 3.5 mS/cm, 3 mS/cm, 2.6 mS/cm, 2.5 mS/cm, 2 mS/cm, 1.5 mS/cm, 1 mS/cm, 0.95 mS/cm, 0.9 mS/cm, 0.8 mS/cm, 0.7 mS/cm, 0.6 mS/cm, 0.5 mS/cm, 0.4 mS/cm, 0.3 mS/cm, 0.2 mS/cm, 0.1 mS/cm, 0.09 mS/cm, 0.08 mS/cm, 0.07 mS/cm, 0.06 mS/cm, 0.05 mS/cm, 0.04 mS/cm, 0.03 mS/cm, 0.02 mS/cm, 0.01 mS/cm, 0.005 mS/cm, 0.001 mS/cm, and the like, and may alternatively be selected from any one of the following ranges: 0.001 mS/cm to 5 mS/cm, 0.1 mS/cm to 5 mS/cm, 0.5 mS/cm to 5 mS/cm, 0.9 mS/cm to 4.8 mS/cm, and 0.95 mS/cm to 2.6 mS/cm.

In the present application, 1 mS/cm means 1 × 10⁻³ S/cm.

In the present application, the "ionic conductivity of the swollen polymer layer" generally refers to a test value under the condition of 20°C to 30°C, unless otherwise specified. In some embodiments, the ionic conductivity of the swollen polymer layer refers to the ionic conductivity at 25°C. Refer to a test method of "Structure and performance test" in the Embodiment section below.

In some implementations, based on the first electrolyte solution, the ionic conductivity of the swollen polymer layer at 25°C is selected from 0.001 mS/cm to 5 mS/cm, optionally, the ionic conductivity of the swollen polymer layer at 25°C is selected from 0.1 mS/cm to 5 mS/cm, alternatively optionally, the ionic conductivity of the swollen polymer layer at 25°C is selected from 0.5 mS/cm to 5 mS/cm, alternatively optionally, the ionic conductivity of the swollen polymer layer at 25°C is selected from 0.9 mS/cm to 4.8 mS/cm, and alternatively optionally, the ionic conductivity of the swollen polymer layer at 25°C is selected from 0.95 mS/cm to 2.6 mS/cm.

In some implementations, the thickness of the polymer layer is 5 nm to 10 µm, optionally, the thickness of the polymer layer is 0.02 µm to 8 µm, further optionally, the thickness of the polymer layer is 0.05 µm to 8 µm, further optionally, the thickness of the polymer layer is 0.05 µm to 5 µm, and still further optionally, the thickness of the polymer layer is 0.1 µm to 5 µm. The thickness of the polymer layer may alternatively be any one of the following thicknesses or selected from an interval formed by any two of the following thicknesses: 5 nm, 5.5 nm, 6 nm, 6.5 nm, 7 nm, 7.5 nm, 8 nm, 8.5 nm, 9 nm, 9.5 nm, 10 nm, 20 nm, 30 nm, 40 nm, 50 nm, 60 nm, 70 nm, 80 nm, 90 nm, 100 nm, 150 nm, 200 nm, 250 nm, 300 nm, 400 nm, 500 nm, 600 nm, 700 nm, 800 nm, 900 nm, 1 µm, 1.5 µm, 2 µm, 2.5 µm, 3 µm, 3.5 µm, 4 µm, 4.5 µm, 5 µm, 6 µm, 7 µm, 8 µm, 9 µm, 9.5 µm, 10 µm, and the like.

The thickness of the polymer layer on the surface of the lithium-containing metal can be controlled to be at a thin nanoscale, which is more advantageous for an assembled battery cell to exhibit smaller interface impedance in this case.

In some embodiments, the elastic modulus of the polymer layer may be any one of the following values or selected from an interval formed by any two of the following values: 0.1 MPa, 0.2 MPa, 0.5 MPa, 0.8 MPa, 1 MPa, 2 MPa, 3 MPa, 4 MPa, 5 MPa, 6 MPa, 7 MPa, 8 MPa, 9 MPa, 10 MPa, 12 MPa, 14 MPa, 15 MPa, 16 MPa, 18 MPa, 20 MPa, 25 MPa, 29 MPa, 30 MPa, 35 MPa, 40 MPa, 41 MPa, 45 MPa, 46 MPa, 50 MPa, 60 MPa, 65 MPa, and the like. Non-limiting examples of the elastic modulus of the polymer layer alternatively include 0.1 MPa to 65 MPa, 0.5 MPa to 65 MPa, 1 MPa to 65 MPa, 10 MPa to 65 MPa, 15 MPa to 65 MPa, 18 MPa to 65 MPa, 20 MPa to 65 MPa, 29 MPa to 65 MPa, 0.1 MPa to 50 MPa, 0.5 MPa to 50 MPa, 1 MPa to 50 MPa, 10 MPa to 50 MPa, 15 MPa to 50 MPa, 18 MPa to 50 MPa, 20 MPa to 50 MPa, 29 MPa to 50 MPa, 0.1 MPa to 46 MPa, 0.5 MPa to 46 MPa, 1 MPa to 46 MPa, 10 MPa to 46 MPa, 15 MPa to 46 MPa, 18 MPa to 46 MPa, 20 MPa to 46 MPa, 29 MPa to 46 MPa, 0.1 MPa to 41 MPa, 0.5 MPa to 41 MPa, 1 MPa to 41 MPa, 10 MPa to 41 MPa, 15 MPa to 41 MPa, 18 MPa to 41 MPa, 20 MPa to 41 MPa, 29 MPa to 41 MPa, and the like.

In the present application, the "elastic modulus of the polymer layer" generally refers to a test value under the condition of 20°C to 30°C, unless otherwise specified. In some embodiments, the elastic modulus of the polymer layer refers to the elastic modulus at 25°C. Refer to a test method of "Structure and performance test" in the Embodiment section below.

In some implementations, the elastic modulus of the polymer layer at 25°C is 0.1 MPa to 65 MPa, optionally, the elastic modulus of the polymer layer at 25°C is 0.5 MPa to 50 MPa, further optionally, the elastic modulus of the polymer layer at 25°C is 10 MPa to 46 MPa, still further optionally, the elastic modulus of the polymer layer at 25°C is 18 MPa to 41 MPa, and yet further optionally, the elastic modulus of the polymer layer at 25°C is 29 MPa to 41 MPa.

In some embodiments, the elastic deformation range of the polymer layer may be selected from any one of the following percentages or an interval formed by any two of the following percentages: 55%, 60%, 65%, 70%, 80%, 90%, 100%, 150%, 200%, 220%, 240%, 250%, 260%, 265%, 270%, 280%, 300%, 350%, and the like. Non-limiting examples of the elastic deformation range of the polymer layer further include 55% to 350%, 55% to 300%, 55% to 280%, 150% to 350%, 150% to 300%, 150% to 280%, 160% to 350%, 160% to 300%, 160% to 280%, 168% to 350%, 168% to 300%, 168% to 280%, and the like.

In the present application, the "elastic deformation range of the polymer layer" generally refers to a test value under the condition of 20°C to 30°C, unless otherwise specified. In some embodiments, the elastic deformation range of the polymer layer refers to the elastic deformation range at 25°C. Refer to a test method of "Structure and performance test" in the Embodiment section below.

In some implementations, the elastic deformation range of the polymer layer at 25°C is 55% to 350%, optionally, the elastic deformation range of the polymer layer at 25°C is 150% to 350%, further optionally, the elastic deformation range of the polymer layer at 25°C is 150% to 300%, and still further optionally, the elastic deformation range of the polymer layer at 25°C is 168% to 280%.

The parameter such as the elastic modulus and elastic deformation range of the polymer layer is controlled to be in a more suitable range, so that the polymer layer have more suitable elasticity, which better promotes the close contact between the polymer layer and the lithium-containing metal layer, reduce the interface impedance, and facilitate achieving a better energy density and power density.

In some embodiments, the volume expansion ratio of the negative electrode sheet is less than 130%, and further, may be selected from 5% to 130%. The volume expansion ratio of the negative electrode sheet may alternatively be any one of the following percentages or selected from an interval formed by any two of the following percentages: 6%, 7%, 8%, 9%, 10%, 11%, 12%, 14%, 15%, 16%, 18%, 20%, 25%, 30%, 35%, 40%, 45%, 50%, 55%, 60%, 65%, 70%, 75%, 80%, 85%, 90%, 92%, 95%, 100%, 102%, and the like. In some embodiments, the volume expansion ratio of the negative electrode sheet is 5% to 128%. In some embodiments, the volume expansion ratio of the negative electrode sheet is 5% to 102%.

In the present application, the "volume expansion ratio of the electrode sheet" generally refers to a test value under the condition of 20°C to 30°C, unless otherwise specified. In some embodiments, the volume expansion ratio of the electrode sheet refers to the volume expansion ratio at 25°C. Refer to a test method of "Structure and performance test" in the Embodiment section below.

In some embodiments, the negative electrode sheet matrix further includes a negative electrode current collector, and the negative electrode current collector is located on a side that is of the lithium-containing layer and that is away from the polymer layer.

In some embodiments, a second negative electrode active material layer is disposed or no second negative electrode active material layer is disposed between the negative electrode current collector and the lithium-containing layer, and further, the components in the second negative electrode active material layer and the lithium-containing layer may be the same or different.

In some embodiments, the negative electrode sheet includes the negative electrode current collector, and the second negative electrode active material layer is disposed between the negative electrode current collector and the lithium-containing layer.

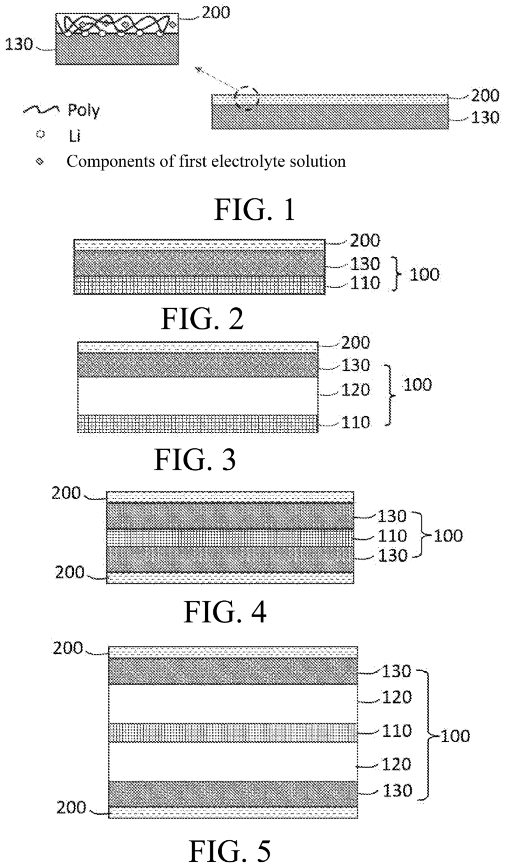

In some embodiments, the lithium-containing layer is disposed only on the outermost layer on a single side of the negative electrode sheet matrix (refer to FIG. 1, FIG. 2, and FIG. 3).

In some embodiments, lithium-containing layers are disposed on both outermost layers on two sides of the negative electrode sheet matrix (refer to FIG. 4 and FIG. 5). The lithium-containing layers on two sides may contain the same content of lithium or different contents of lithium. The lithium content in the lithium-containing layer may refer to the foregoing definition. The lithium content in the second negative electrode active material layer may be selected from a lithium content in a negative electrode active material layer of a common lithium metal battery. Non-limiting examples of the second negative electrode active material layer include lithium metal, a lithium alloy, or a combination thereof. In a case of the combination, for example, different regions of the negative electrode active material layer may have different component compositions.

In the present application, the "second negative electrode active material layer" may be any suitable negative electrode active material layer in the reported active material layers of the lithium metal battery. The second negative electrode active material layer may be substantially composed of lithium (Li) metal, or may be a lithium alloy, or may be a composition substantially composed of lithium metal and a lithium alloy.

In some embodiments, lithium-containing layers are disposed on both outermost layers on two sides of the negative electrode sheet matrix, and polymer layers are disposed on surfaces of the lithium-containing layers on two sides (refer to FIG. 4 and FIG. 5). The chemical compositions and contents of the polymer layers on two sides may be the same or different.

In some embodiments, the negative electrode sheet has the structure shown in FIG. 1, including a lithium-containing layer 130 and a polymer layer 200 that are stacked. The lithium-containing layer contains lithium, a lithium alloy or a combination thereof. The lithium-containing layer herein serves as at least a part of the negative electrode active material layer. The polymer layer contains a polymer Poly, and the polymer Poly is covalently bonded to lithium in the lithium-containing layer (for example, through a reaction between a cyano group and lithium in Poly) to form a stable chemical connection, so that the polymer layer is firmly connected to the surface of the lithium-containing layer. The polymer Poly may be selected from the polymers Poly described in any embodiment of the first aspect. The definition of the first electrolyte solution is as described above.

In some embodiments, the negative electrode sheet has a structure shown in FIG. 2, including a negative electrode sheet matrix 100 and the polymer layer 200 that are stacked. The negative electrode sheet matrix 100 includes a negative current collector 110 and the lithium-containing layer 130 that are sequentially stacked, and the polymer layer 200 is located on a surface that is of the lithium-containing layer 130 and that is away from the negative current collector 110. Further, the polymer layer includes the polymer Poly and the first electrolyte solution. The lithium-containing layer contains lithium, a lithium alloy or a combination thereof, the polymer layer contains polymer Poly, and the polymer Poly is covalently bonded to the lithium in the lithium-containing layer to form a stable chemical connection, so that the polymer layer is firmly connected to the surface of the negative electrode sheet matrix.

In some embodiments, the negative electrode sheet includes a structure shown in FIG. 3, including the negative electrode sheet matrix 100 and the polymer layer 200 that are stacked. The negative electrode sheet matrix 100 includes the negative electrode current collector 110, the second negative electrode active material layer 120, and the lithium-containing layer 130 that are sequentially stacked, and the polymer layer is located on a surface that is of the lithium-containing layer 130 and that is away from the negative electrode current collector 110.

In some embodiments, the negative electrode sheet includes a structure shown in FIG. 4, including the negative electrode sheet matrix 100 and two polymer layers 200 respectively disposed on surfaces on two side of the negative electrode sheet matrix 110. The negative electrode sheet matrix includes the negative electrode current collector 110 and two lithium-containing layers 130 respectively disposed on surfaces on two side of the negative electrode current collector 110, and the lithium-containing layers 130 on two sides of the negative electrode sheet are respectively directly connected to corresponding polymer layers 200 (where the chemical connection is implemented through covalent interaction). The chemical compositions and contents of the polymer layers 130 on two sides may be the same or different. The chemical compositions and contents of the lithium-containing layers 130 on two sides may be the same or different.

In some embodiments, the negative electrode sheet has a structure shown in FIG. 5, including the negative electrode sheet matrix 100 and two polymer layers 200 respectively disposed on surfaces on two side of the negative electrode sheet matrix 110. The negative electrode base plate substrate includes the negative electrode current collector 110, two second negative electrode active material layers 120 respectively disposed on surfaces on two side of the negative electrode current collector 110, and two lithium-containing layers 130 respectively disposed on surfaces on sides that are of the two second negative electrode active material layers 120 and that are away from the negative electrode current collector 110, and the lithium-containing layers 130 on two sides of the negative electrode sheet are respectively directly connected to corresponding polymer layers 200 (where the chemical connection is implemented through covalent interaction). The chemical compositions and contents of the polymer layers 130 on two sides may be the same or different. The chemical compositions and contents of the second negative electrode active material layers 120 on two sides may be the same or different. The chemical compositions and contents of the lithium-containing layers 130 on two sides may be the same or different.

In some embodiments, the negative electrode sheet usually includes a negative electrode current collector and a negative electrode film layer disposed on at least one surface of the negative electrode current collector. The negative electrode film layer includes the foregoing lithium-containing layer, and further includes a polymer layer formed on a surface on at least one side that is of the lithium-containing layer and that is away from the inside of the negative electrode film layer, that is, the polymer layer is located on the surface on the side that is of the lithium-containing layer and that is away from the negative electrode current collector, the polymer layer is located on the outermost layer of the negative electrode sheet, and further, the polymer layer is chemically connected to the lithium-containing layer through covalent interaction.

As an example, the negative pole current collector has two surfaces opposite in its own thickness direction, and the negative pole film layer is disposed on either one or both of the two opposite surfaces of the negative pole current collector.

In some implementations, the negative electrode current collector may employ a metal foil or composite current collector. For example, a copper foil may be used as the metal foil. The composite current collector may include a polymer material base layer and a metal layer formed on at least one surface of a polymer material substrate. The composite current collector may be obtained by forming a metal material on a polymer material substrate. A non-limiting example of the metal material may include one or more of copper, a copper alloy, nickel, a nickel alloy, titanium, a titanium alloy, silver, a silver alloy, or the like. A non-limiting example of the polymer material substrate may include one or more of substrates such as polypropylene (PP), polyethylene terephthalate (PET), polybutylene terephthalate (PBT), polystyrene (PS), and polyethylene (PE).

In some implementations, the negative electrode active substance in the negative electrode active material layer may be a negative electrode active substance, for lithium metal batteries, well-known in the art. As an example, the negative active material applicable to the present application may include one or more of lithium metal and a lithium alloy. The lithium alloy may contain one or more of silver, magnesium, aluminum, gold, zinc, tin, copper, nickel, titanium, and the like in addition to lithium. The lithium-containing layer in the present application can serve as a first negative electrode active material layer, and a second negative electrode active material layer can be further disposed between the lithium-containing layer and the negative electrode current collector. The composition and content of the second negative electrode active material layer may be the same as or different from the composition and content of the lithium-containing layer.

According to a third aspect, the present application provides a secondary battery (also referred to as a lithium metal secondary battery), including a positive electrode sheet, a separator, and the negative electrode sheet according to the second aspect of the present application, where the separator is disposed between the positive electrode sheet and the negative electrode sheet, and the polymer layer is disposed on a side that is of the negative electrode sheet and that is close to the separator. Because the negative electrode sheet includes a lithium-containing layer, the secondary battery according to the third aspect is also referred to as a lithium metal secondary battery.

The negative electrode sheet in the lithium metal secondary battery comprises a lithium metal negative electrode material distributed in both the lithium-containing layer and the polymer layer, on at least one side of the negative electrode sheet, the lithium-containing layer is stably connected with a dense and uniform polymer layer by chemical bonding, the polymer layer has specific elasticity, flexibility and swellability, so that the polymer layer and the lithium-containing layer, and the polymer layer and the separator can be firmly, tightly and permanently attached, which can better adapt to the large volume expansion of the negative electrode side during charging, and can play a role of a protective layer at the negative electrode of the lithium metal secondary battery for a long time. The polymer layer can effectively inhibit the contact reaction between the electrolyte solution and the lithium metal, reduce the consumption of the electrolyte solution and the lithium metal, prolong the cycle life, can further promote the uniform deposition of lithium ions by using the fluorinated aliphatic chain Rf in the lithium metal negative electrode material, inhibit the formation of lithium dendrites, and alleviate the volume expansion of the lithium metal negative electrode side. In addition, the comprehensive performance of elasticity, flexibility and swellability of the polymer layer not only can promote tight adhesion between the polymer layer and the lithium-containing layer, but also helps exert good ionic conductivity, and helps reduce interface polarization and reduce interface impedance, so that the lithium metal secondary battery can achieve a higher energy density, power density, charge/discharge cycle stability, and higher safety performance in the presence of the polymer layer.

In addition, the contact reaction between the electrolyte solution and the lithium metal is suppressed, so that the consumption of the electrolyte solution and the lithium metal is reduced, and the coulombic efficiency of the battery can also be improved.

In some implementations, the lithium metal secondary battery further includes a second electrolyte, where a component of the second electrolyte may be the same as or different from that of the first electrolyte solution in the polymer layer.

Generally, the secondary battery includes a positive electrode sheet, a negative electrode sheet, a battery cell electrolyte, and a separator. During charge and discharge of the battery, active ions are intercalated and deintercalated back and forth between the positive electrode sheet and the negative electrode sheet. The battery cell electrolyte functions to conduct active ions between the positive electrode sheet and the negative electrode sheet. The separator is provided between the positive electrode sheet and the negative electrode sheet to mainly prevent the positive and negative electrodes from being short-circuited and allow active ions to pass therethrough. The active ions in the secondary battery provided in the present application may be lithium ions, but may not be limited thereto.

### Positive electrode sheet

In the present application, the positive electrode sheet includes a positive electrode current collector and a positive electrode film layer arranged on at least one surface of the positive electrode current collector. The positive electrode film layer includes a positive electrode active material layer, and further, the positive electrode active material layer includes a positive electrode active substance.

Without limitation, the weight percentage of the positive electrode active substance in the positive electrode active material layer may be greater than or equal to 80 wt%, and further may be greater than or equal to 90 wt%.

As a non-limiting example, the positive electrode current collector has two surfaces opposed in its own thickness direction, and the positive pole film layer is provided on either one or both of the two opposed surfaces of the positive electrode current collector.

In some implementations, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be obtained by forming a metal material on a polymer material substrate. Without limitation, in the positive electrode current collector, the metal material may include one or more of aluminum, an aluminum alloy, nickel, a nickel alloy, titanium, a titanium alloy, silver, a silver alloy, or the like. Without limitation, in the positive electrode current collector, a non-limiting example of the polymer material substrate includes one or more of polypropylene (PP), polyethylene terephthalate (PET), polybutylene terephthalate (PBT), polystyrene (PS), and polyethylene (PE).

In some implementations, the secondary battery may be a lithium-ion secondary battery. The lithium-ion secondary battery implements a charge and discharge process by using the intercalation and deintercalation of lithium ions at the electrode and the transport of lithium ions in the electrolyte. In general, the active ions in the lithium-ion secondary battery are lithium ions, but may not be limited thereto.

The positive electrode active material may be a positive electrode active material for a battery commonly known in the art. As a non-limiting example, a positive electrode active substance may include one or more of the following materials or substances: olivine-structured lithium-containing phosphate, a lithium transition metal oxide, and their respective modified compounds. However, the present application is not limited to these materials or substances, and another conventional material or substance that can be used as a positive electrode active substance of a battery may also be used. These positive pole active substances may be used alone or in combination of two or more thereof. A non-limiting example of the lithium transition metal oxide may include, but is not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. A non-limiting example of the lithium cobalt oxide includes LiCoO₂; a non-limiting example of the lithium nickel oxide includes LiNiO₂; a non-limiting example of the lithium manganese oxide includes LiMnO₂, LiMn₂O₄, or the like; a non-limiting example of the lithium nickel cobalt manganese oxide includes LiNi_{1/3}Co_{1/3}Mn_{1/3}O₂ (or may be referred to as NCM₃₃₃ for short), LiNi_{0.5}Co_{0.2}Mn_{0.3}O₂ (or may be referred to as NCM₅₂₃ for short), LiNi_{0.5}Co_{0.25}Mn_{0.25}O₂ (or may be referred to as NCM₂₁₁ for short), LiNi_{0.6}Co_{0.2}Mn_{0.2}O₂ (or may be referred to as NCM₆₂₂ for short), LiNi_{0.8}Co_{0.1}Mn_{0.1}O₂ (or may be referred to as NCM₈₁₁ for short), or the like. Non-limiting examples of the lithium nickel cobalt aluminum oxide include LiNi_{0.80}Co_{0.15}Al_{0.05}O₂. Non-limiting examples of the olivine-structured lithium-containing phosphate may include, but are not limited to, one or more of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, and their respective modified compounds. Non-limiting examples of lithium iron phosphate include LiFePO₄ (or may be referred to as LFP for short). Non-limiting examples of lithium manganese phosphate include LiMnPO₄.

It may be understood that deintercalation and consumption of lithium (Li) occur during charge and discharge of the battery, and the content of Li in the positive electrode sheet varies when the battery is discharged to different states. In an example description of the positive electrode active substance in the present application, unless otherwise specified, the Li content may be an initial state of a material, or may be a non-initial state after a charging/discharging cycle. When the positive electrode active substance is applied to a positive electrode sheet in a battery system, the content of Li in the positive electrode active substance contained in the positive electrode sheet usually changes after a charge and discharge cycle. The content of Li may be measured by using an atomic molar content, but is not limited thereto. For "the content of Li is in an initial state of the material", the initial state of the material means a state before the material is added to a positive electrode slurry. It may be understood that a new material or a new substance obtained by performing appropriate modification on the enumerated positive electrode active substance is also within the scope of the positive electrode active substance, the foregoing appropriate modification refers to an acceptable modification manner for the positive electrode active substance, such as coating modification, and a non-limiting example of the acceptable modification manner is, for example, coating modification.

In an example description of the positive electrode active substance in the present application, the content of oxygen (O) is only a theoretical state value, the atomic molar content of oxygen changes due to the release of oxygen from a lattice, and the actual molar content of O fluctuates. The content of O may be measured by using an atomic molar content, but is not limited thereto.

In some implementations, the positive active material may include, but is not limited to, one or more of lithium iron phosphate, lithium manganese iron phosphate, lithium cobalt oxide, lithium nickel oxide, lithium manganese oxide, lithium nickel manganese oxide, lithium nickel cobalt manganese oxide, lithium nickel cobalt aluminum oxide, sodium oxide, potassium oxide, and a material composed of any of the foregoing substances and a doping element, and further, the doping element in any positive active material independently includes one or more of a transition metal element and a non-transition metal element.

In some implementations, the active material layer optionally further includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. Generally, the weight percentage of the binder in the positive electrode active material layer may be 0 to 10 wt%, further may be 0 to 8 wt%, and further may be 1 wt% to 5 wt%, based on the total weight of the positive electrode active material layer.

In some implementations, the positive electrode active material layer further optionally includes a conductive agent. As a non-limiting example, the conductive agent may include one or more of superconducting carbon, acetylene black, carbon black, ketjen black, carbon dots, carbon nanotubes, graphene, and carbon nanofibers. Generally, the weight percentage of the conductive agent in the positive electrode active material layer may be 0 to 10 wt%, further may be 0 to 8 wt%, and further may be 0 to 5 wt%, based on the total weight of the positive electrode active material layer.

In some implementations, the positive electrode sheet may be prepared in the following manner: dispersing the foregoing components such as the positive pole active material, the conductive agent, the aqueous binder, and any other components for preparing the aqueous positive electrode sheet into a solvent (for example, water) to form an aqueous positive pole paste; and coating the positive pole paste on a positive electrode current collector, and performing procedures such as drying and cold pressing, to obtain the positive electrode sheet. The type of solvent in the positive electrode slurry may be selected from any one of the foregoing embodiments, for example, N-methylpyrrolidone (NMP). The surface of the positive electrode current collector to which the positive electrode slurry is applied may be a single surface of the positive electrode current collector or both surfaces of the positive electrode current collector. The solid content of the positive electrode slurry may be 40 wt% to 80 wt%. The viscosity of the positive electrode slurry at room temperature may be adjusted to 5000 mPa·s to 25000 mPa·s. The compaction density of the positive electrode sheet may be 3.0 g/cm³ to 3.6 g/cm³, and may be 3.3 g/cm³ to 3.5 g/cm³.

As used herein, the "compacted density" has the meaning well-known in the art and is one reference index of the energy density of a material. The compacted density of the positive electrode sheet refers to the ratio of the mass of the positive electrode active material layer to the volume thereof. In the present application, unless otherwise specified, for the positive electrode sheet, the area of the positive electrode sheet does not change much before and after cold pressing, and the corresponding calculation formula of the compacted density is: 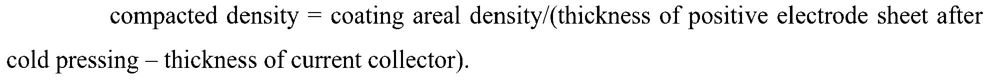
compacted density = coating areal density/(thickness of positive electrode sheet after cold pressing - thickness of current collector). 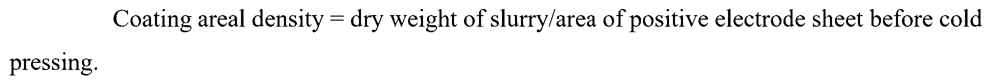 Coating areal density = dry weight of slurry/area of positive electrode sheet before cold pressing.

### Battery cell electrolyte

The battery cell electrolyte functions to conduct ions between the positive electrode sheet and the negative electrode sheet. The type of the battery cell electrolyte is not particularly limited in the present application, and may be selected according to a requirement. For example, the battery cell electrolyte may be liquid, gelled or all solid.

In some implementations, the battery cell electrolyte uses a second electrolyte solution. The second electrolyte solution includes an electrolyte salt and a solvent (which may be denoted as a second electrolyte solution solvent).

Without limitation, the concentration of the electrolyte salt in the second electrolyte solution may be 0.5 mol/L to 5 mol/L.

In some embodiments, the composition of the cell electrolyte (e.g., the second electrolyte solution) and the first electrolyte solution in the polymer layer may be the same or different.

When the electrolyte (such as the second electrolyte solution) of the cell in the secondary battery and the first electrolyte solution in the polymer layer have the same composition, the consistency of lithium ion transmission in the cell can be maintained, and the interference of multiple factors such as electrolyte solvation and interface side reactions can be reduced.

When the electrolyte of the cell in the secondary battery and the first electrolyte solution in the polymer layer have different components, the formation of a stable SEI can be directionally induced on the lithium-containing layer side, thereby regulating the deposition morphology of lithium ions.

In some implementations, the electrolyte salt in the second electrolyte solution may include one or more of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the electrolyte salt in the second electrolyte solution includes an electrolyte lithium salt. Without limitation, the electrolyte lithium salt may include one or more of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent in the second electrolyte solution may include one or more of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some implementations, the solvent in the second electrolyte solution may include one or more of fluoroethylene carbonate (FEC), ethylene carbonate (EC, 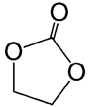 ), propylene carbonate (PC, 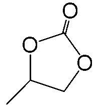 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC, 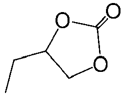 ), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and ethyl sulfonyl ethane (ESE).

In some implementations, the battery cell electrolyte optionally further includes an additive. For example, the additive may include a negative pole film-forming additive or a positive pole film-forming additive, and may further include an additive capable of improving specific performance of a battery, for example, an additive for improving overcharge performance of a battery, or an additive for improving high-temperature or low-temperature performance of a battery.

In some implementations, the additive in the cell electrolyte may include one or more of vinylene carbonate (VC), vinyl ethylene carbonate (VEC), fluoroethylene carbonate (FEC), difluoroethylene carbonate (DFEC), trifluoromethyl ethylene carbonate (TFPC), methylene methanedisulfonate (MMDS), 1-propene-1, 3-sultone (PST), ethylene sulfite (ES), propylene sulfite (PS), ethylene sulfate (DTD), succinonitrile (SN), adiponitrile (AND), sulfonic ester cyclic quaternary ammonium salt, tris (trimethylsilyl) phosphate (TMSP), tris (trimethylsilyl) borate (TMSB), and anisole.

### Separator

In the present application, unless otherwise specified, the "separator" and the "membrane" have the same meaning and can be used interchangeably.

In some embodiments, the secondary battery further includes a separator. The type of the separator is not particularly limited in the present application, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the thickness of the separator is 6 µm to 40 µm, optionally 12 µm to 20 µm.

In some embodiments, the positive electrode sheet, the negative electrode sheet, and the separator may be manufactured into the pole assembly through a winding process or a lamination process.

In some embodiments, the secondary battery may include an outer package. The outer package may be used to package the pole assembly and the electrolyte.

In some implementations, the outer package of the secondary battery may be a hard case, such as a hard plastic case, an aluminum case, a steel case, or the like. The outer package of the secondary battery may also be a pouch, such as a bag-type pouch. A material of the pouch may be plastic, and further, non-limiting examples of the plastic may include one or more of polypropylene, polybutylene terephthalate, and polybutylene succinate.

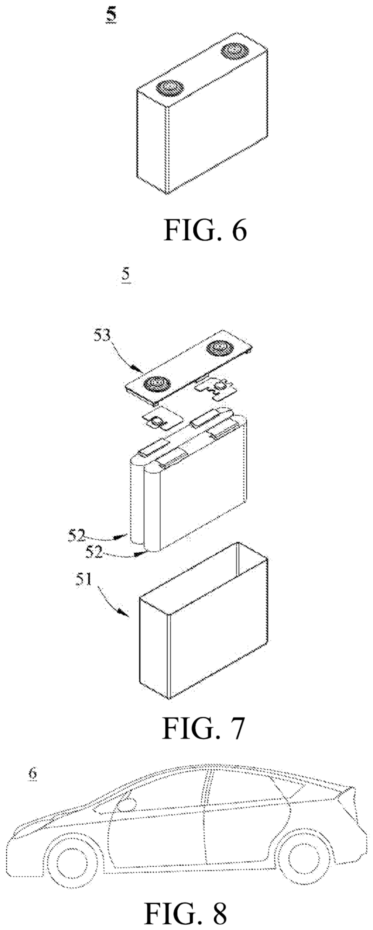

The shape of the secondary battery is not limited in this application, and may be a cylindrical shape, a square shape, or any other shape. For example, FIG. 6 shows a secondary battery 5 of a square structure as an example.

In some implementations, referring to FIG. 7, the outer package may include a housing 51 and a cover plate 53. The housing 51 may include a bottom plate and side plates connected to the bottom plate, and the bottom plate and the side plates may define an accommodating chamber. The housing 51 has an opening communicating with the accommodating chamber, and the cover plate 53 can cover on the opening to close the accommodating chamber. The positive electrode sheet, the negative electrode sheet, and the separator may be formed into an electrode assembly 52 through a winding process or a lamination process. The electrode assembly 52 is packaged in the accommodating chamber. The electrolyte solution is impregnated into the electrode assembly 52. There may be one or a plurality of electrode assemblies 52 included in the secondary battery 5, and the quantity may be selected by those skilled in the art according to specific practical requirements. The secondary battery provided in the present application can be cycled under a condition of a specific charging current density.

In some embodiments, the charging current density of the secondary battery may be selected from any one of the following values or an interval formed by any two of the following values: 0.1 mA/cm², 0.2 mA/cm², 0.3 mA/cm², 0.4 mA/cm², 0.5 mA/cm², 0.6 mA/cm², 0.7 mA/cm², 8 mA/cm², 0.9 mA/cm², 1 mA/cm², 1.5 mA/cm², 2 mA/cm², 2.5 mA/cm², 3 mA/cm², 3.5 mA/cm², 4 mA/cm², 4.5 mA/cm², 5 mA/cm², 5.5 mA/cm², 6 mA/cm², 7 mA/cm², 8 mA/cm², 9 mA/cm^{2,} 10 mA/cm^{2,} 11 mA/cm², 12 mA/cm², and the like.

In some embodiments, the applicable charging current density may alternatively be selected from any one of the following ranges: 0.1 mA/cm² to 3.5 mA/cm², 1 mA/cm² to 3.5 mA/cm², 0.1 mA/cm² to 12 mA/cm², 1 mA/cm² to 12 mA/cm², 0.1 mA/cm² to 4 mA/cm², and 1 mA/cm² to 4 mA/cm², and the like.

The secondary battery provided by the present application can be cycled under the foregoing charging current density conditions.

In some embodiments, the capacity retention ratio of the secondary battery after a specific quantity of cycles (such as 50 cycles) is very high. In some embodiments, the capacity retention ratio of the secondary battery after 50 cycles is higher than 80%.

In the present application, the "capacity retention ratio after 50 cycles" of the secondary battery generally refers to a test value under the condition of 20°C to 30°C, unless otherwise specified. In some embodiments, the capacity retention ratio of the secondary battery after 50 cycles refers to the volume expansion ratio at 25°C. Refer to a test method of "Structure and performance test" in the Embodiment section below.

The present application can further provide a battery module, including the secondary battery according to the fourth aspect of the present application.

The present application may further provide a battery pack, including the foregoing battery module of the present application. In some implementations, the secondary batteries may be assembled into a battery module, and there may be one or a plurality of secondary batteries included in the battery module, and the quantity of secondary batteries may be selected by those skilled in the art according to the application and capacity of the battery module.

In some implementations, the battery modules may be further assembled into a battery pack, and there may be one or a plurality of battery modules included in the battery pack, and the quantity of the battery modules may be selected by those skilled in the art according to the application and capacity of the battery pack.

According to a fourth aspect, the present application provides an electric device, including the lithium metal secondary battery according to the third aspect of the present application.

The secondary battery may be used as a power supply for the electric device, or as an energy storage unit for the electric device. The electric device may include, but is not limited thereto, a mobile device, an electric vehicle, an electric train, a ship, a satellite, an energy storage system, and the like. For example, the mobile device may be a mobile phone or a notebook computer. For example, the electric vehicle may be, but is not limited thereto, a full electric vehicle, a hybrid electric vehicle, a plug-in hybrid electric vehicle, an electric bicycle, an electric scooter, an electric golf cart, or an electric truck.

As an electric device, the secondary battery may be selected according to use requirements of the electric device.

FIG. 8 shows an electric device 6 as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. This electric device is generally required to be thin and lightweight, and may use a secondary battery as a power supply.

According to a fifth aspect, the present application provides use of a monomer composition in preparation of a negative electrode sheet or a lithium metal secondary battery, where the monomer composition includes a first monomer represented by formula (M1) and a second monomer represented by formula (M2): 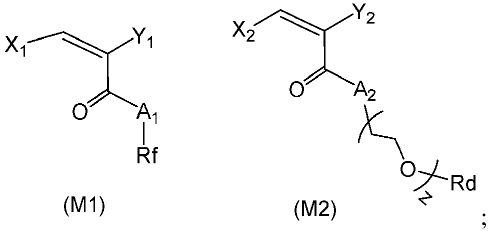 where X₁, X₂, Y₁, Y₂, A ₁, A ₂, Rf, and Rd are separately as defined in the first aspect of the present application, z is as defined in the first aspect of the present application, and at least one of Y₁ and Y₂ is a cyano group.

The negative electrode sheet includes a lithium-containing layer, and the lithium-containing layer contains lithium metal.

The first monomer and the second monomer are used to form a polymer layer bonded to lithium metal in the negative electrode sheet.

In the present application, the first monomer may alternatively be denoted as a monomer compound M1, and the second monomer may alternatively be denoted as a monomer compound M2.

Both the first monomer and the second monomer in the monomer composition are cyanoacrylic acid derivatives, a cyano group therein can be in contact with lithium in an outermost layer of the negative electrode sheet matrix to form a chemical connection, and a carbon-carbon double bond therein can undergo an in-situ polymerization reaction under lithium catalysis, thereby preparing the lithium metal negative electrode material according to the first aspect of the present application. In this case, a firmly connected, dense, and uniform polymer layer can be formed on a surface of the lithium-containing layer of the negative electrode, and the polymer layer has specific elasticity, flexibility and swellability, and can play a role of a protective layer for a long time.

In some embodiments, both Y1 and Y2 are cyano groups.

In some implementations, the use of a monomer composition in preparation of a negative electrode sheet or a lithium metal secondary battery includes the following steps: the first monomer and the second monomer are jointly in contact with the lithium metal in the lithium-containing layer, and form the polymer layer through an in-situ polymerization reaction.

In some implementations, the negative electrode sheet is as defined in the second aspect of the present application, and the lithium metal secondary battery is as defined in the third aspect of the present application.

According to a sixth aspect, the present application provides a preparation method for a negative electrode sheet, including the following steps:
providing a negative electrode sheet matrix, where an outermost layer of at least a side of the negative electrode sheet matrix is a lithium-containing layer, and the lithium-containing layer includes lithium metal; and further providing a reaction mixture containing a monomer composition and a first electrolyte solution; and
coating the reaction mixture on a surface of the lithium-containing layer on at least a side of the negative electrode sheet matrix, so that the monomer composition is in contact with at least a catalytic amount of lithium metal, and the monomer composition forms a polymer Poly bonded to the lithium metal in the lithium-containing layer through an in-situ polymerization reaction.

Herein, the monomer composition is as defined in the fifth aspect of the present application.

The first electrolyte solution is as defined in the second aspect of the present application.

In the presence of the first electrolyte solution, a cyano group in the monomer composition can be in contact with lithium in an outermost layer of the negative electrode sheet matrix to form a chemical connection (further, a covalent connection), and a carbon-carbon double bond therein can undergo an in-situ polymerization reaction under lithium catalysis to form the foregoing polymer Poly, thereby preparing the lithium metal negative electrode material according to the first aspect of the present application. In this case, a firmly connected, dense, and uniform polymer layer can be formed on a surface of the lithium-containing layer of the negative electrode, and the polymer layer has specific elasticity, flexibility and swellability, and can play a role of a protective layer for a long time. Compared with a polymer coating in the physical coating manner in the conventional technology, the polymer layer formed in the present application is not only stably bonded to a surface of the lithium-containing layer through the chemical connection, but also can reduce, avoid or effectively delay falling off of the polymer layer from the surface of the lithium-containing layer during charge and discharge. In addition, the polymer layer in the present application is dense and uniform, and the thickness of the polymer layer can be controlled to be at a nanometer scale by using the in-situ polymerization reaction, so that an assembled battery cell can exhibit small interface impedance.

In some embodiments, a lithium sheet or a lithium alloy sheet may be used as the negative electrode sheet matrix. Here, the lithium sheet may be substantially composed of lithium simple substance in addition to inevitable impurities. Here, the lithium alloy sheet may be substantially composed of a lithium alloy in addition to inevitable impurities.

In some embodiments, a lithium layer or a lithium alloy layer may be formed on the negative electrode current collector to prepare the negative electrode sheet matrix. The lithium layer is substantially composed of lithium in addition to inevitable impurities. Wherein the lithium alloy layer is substantially composed of a lithium alloy, in addition to inevitable impurities.

In the preparation method of the negative electrode sheet, the monomer composition provided in the present application is in contact with at least a catalytic amount of lithium metal in the lithium-containing layer. In an aspect, chemical attachment sites of the polymer layer are provided. In another aspect, the in-situ polymerization reaction of the polymerizing monomer (such as the cyanoalkenyl carboxylic acid derivative monomer, and further such as the cyanoacrylic acid derivative monomer) is effectively catalyzed.

The mass ratio of the polymer Poly to the first electrolyte solution in the formed polymer layer may be adjusted by adjusting the mass ratio of the monomer composition to the first electrolyte solution. Numerically, it can be estimated and converted as the mass ratio of the monomer composition raw material to the first electrolyte solution raw material is equal to the mass ratio of the polymer Poly in the polymer layer to the first electrolyte solution. In the preparation method of the negative electrode sheet, the mass ratio of the polymer Poly raw material to the first electrolyte solution raw material may refer to any suitable ratio in the foregoing or the following of the present application, including but not limited to the definition in the second aspect.

In some implementations, in the step of coating the reaction mixture on the surface of the lithium-containing layer on at least one side of the negative electrode sheet matrix, the coating method may include at least one of a coating method, a spraying method, a spin coating method and a vapor deposition method. The coating thickness may be controlled according to the thickness of the desired polymer layer.

In some implementations, the in-situ polymerization reaction temperature is selected from 30°C to 100°C, optionally, the in-situ polymerization reaction temperature is selected from 30°C to 60°C, and optionally, the in-situ polymerization reaction temperature is selected from 40°C to 80°C. The in-situ polymerization reaction temperature may alternatively be any one of the following temperatures or selected from an interval formed by any two of the following temperatures: 30°C, 35°C, 40°C, 45°C, 50°C, 55°C, 60°C, 65°C, 70°C, 75°C, 80°C, 85°C, 90°C, 95°C, 100°C, and the like.

In some implementations, the in-situ polymerization reaction time is selected from 0.1 h to 24 h, optionally, the in-situ polymerization reaction time is selected from 0.1 h to 12 h, and further optionally, the in-situ polymerization reaction time is selected from 0.1 h to 6 h. The in-situ polymerization reaction time may be any one of the following duration or selected from an interval formed by any two of the following duration: 0.1 h, 0.2 h, 0.3 h, 0.4 h, 0.5 h, 0.6 h, 0.8 h, 1 h, 1.5 h, 2 h, 2.5 h, 3 h, 3.5 h, 4 h, 4.5 h, 5 h, 5.5 h, 6 h, 6.5 h, 7 h, 7.5 h, 8 h, 8.5 h, 9 h, 9.5 h, 10 h, 11 h, 12 h, 14 h, 15 h, 16 h, 18 h, 20 h, 21 h, 22 h, 24 h, and the like.

In some implementations, the polymer layer formed by the in-situ polymerization reaction is as defined in the second aspect of the present application.

In some implementations, the polymer layer according to the second aspect of the present application is formed on the surface of the negative electrode sheet matrix.

In some implementations, the negative electrode sheet matrix is a pure lithium sheet or a lithium alloy. For the definition of the lithium alloy applicable to the present application, refer to the foregoing description. In some implementations, the mass proportion of lithium in the lithium alloy is greater than or equal to 50%. The mass proportion of lithium in the lithium alloy may alternatively be independently any one of the following percentages, or independently greater than or equal to any one of the following percentages and less than 100%, or independently selected from an interval formed by any two of the following percentages: 50%, 55%, 60%, 65%, 70%, 75%, 80%, 90%, 95%, 96%, 97%, 98%, 99%.

When the negative electrode sheet matrix is a pure lithium sheet or a lithium alloy, the negative electrode sheet of the battery may be additionally introduced with a negative electrode current collector to facilitate the assembly of the tab, or a pure lithium sheet covered with a polymer layer may be used as the negative electrode sheet.

In some implementations, the negative electrode sheet is as defined in the second aspect of the present application.

According to a seventh aspect, the present application provides a preparation method for the lithium metal secondary battery according to the third aspect of the present application, the preparation method includes the following step: injecting a battery cell electrolyte into a battery housing equipped with the foregoing positive electrode sheet, negative electrode sheet, and separator. The separator is disposed between the positive electrode sheet and the negative electrode sheet, and the polymer layer in the negative electrode sheet is disposed on a side that is of the negative electrode sheet and that is close to the separator.

Examples of the present application are described below.

The foregoing parameter representation, including but not limited to elastic modulus, an elastic deformation range, a polymer swelling ratio, ionic conductivity, a flexibility test, a negative electrode sheet expansion ratio, battery cycle performance, etc., can be implemented by or with reference to the following test methods, including but not limited to the "Structure and performance test" section.

The example described below are illustrative only and are not to be construed as limiting the present application. In the example, specific techniques or conditions are not indicated, and they are performed according to techniques or conditions described above, in documents in the art or according to the specification of the product. The reagents or instruments used without specifying the manufacturer(s) are commercially available conventional products, or can be synthesized from commercially available products by a conventional mode.

In the following examples, a "room temperature" refers to 20°C to 30°C, and further, may be 25°C.

In the following examples, the measurement parameters related to the raw material components may have slight deviations within a range of weighing accuracy unless otherwise specified. Parameters related to temperature and time allows acceptable deviations caused by instrument test accuracy or operational accuracy.

In the following examples, unless otherwise specified, the coating manner of the monomer-electrolyte solution mixture is a coating method. When the thickness of the polymer layer is expressed as an approximate number, it may indicate that a deviation does not exceed ± 10%, For example, 0.1 ± 0.01 µm, 1 ± 0.05 µm.

### Preparation of Monomer Compound M1 (First Monomer) and Monomer Compound M2 (Second Monomer)

The monomer compounds used in the following examples can be commercially available (e.g., 2,2,3,3,4,4,5,5-octafluoropentane-2-cyanoacrylate, CH₂=C(-CN)-C(=O)-OH), or can be prepared by the following method. For the preparation of intermediates and synthetic products, those skilled in the art can perform structural characterization according to (but not limited to) Fourier infrared spectroscopy (FT-IR) test, ¹H NMR test, gel permeation chromatography (GPC), X-ray photoelectron spectroscopy (XPS) and other methods to confirm whether the structure of the synthetic product conforms to the structural design, which can be achieved by those skilled in the art.

### 1. X₁ or X₂ is H

When X₁ in the monomer compound M1 is H, corresponding to the compound M11 in the following formula, the structure is CH₂=C(-CN)-C(=O)-A₁-Rf, which is a cyanoacrylic acid derivative, and can be prepared by a condensation reaction between the compound C10 (2-cyanoacrylic acid) and the compound C21 (Rf-A₁H), and the reaction generates a linking group C(=O)-A₁. When A ₁ is O, an ester bond (C(=O)-O) is generated by a condensation reaction between a carboxyl group and a hydroxyl group, and when A₁ is NH, an amido bond (C(=O)-NH) is generated by a condensation reaction between a carboxyl group and -NH₂.

When X₂ in the monomer compound M2 is H, corresponding to the compound M21 in the following formula, a structure is CH₂=C(-CN)-C(=O)-A₂-(CH₂CH₂O)_{z}-pRd, which can be prepared by a condensation reaction between the compound C10 (2-cyanoacrylic acid) and the compound C22 (H-A₂-(CH₂CH₂O)_{z}-pRd), and the reaction forms a linking group. When A₂ is O, an ester bond (C(=O)-O) is generated by a condensation reaction between a carboxyl group and a hydroxyl group, and when A₂ is NH, an amido bond (C(=O)-NH) is generated by a condensation reaction between a carboxyl group and -NH₂.

z is a positive integer. When z greater than or equal to 2, the monomer compound M2 is an ether derivative of cyanoacrylic acid. The "ether derivative" refers to a compound containing an ether bond (-O-).

pRd is Rd or a protected form of Rd as defined above. In the process of reacting compound C10 with compound C22, when Rd does not undergo an irreversible side reaction, the reaction can be carried out when Rd is not protected, that is, pRd is Rd. For example, Rd is alkyl. In the process of reacting compound C10 and compound C22, when Rd may undergo an irreversible side reaction, the reaction may be carried out when Rd is protected, that is, pRd is a protected form of Rd. The "irreversible side reaction" means that it is difficult to convert back to the Rd group according to a general organic chemical synthesis method after the occurrence of the irreversible side reaction. In contrast, if a new group Rd' formed by the conversion of Rd can be converted back to Rd by using a common chemical modification and demodification method such as protection, de-protection, complexation, de-complexation, salification, de-salification, ionisation, de-ionisation, etc., when C10 is reacted with compound C22, it is considered that reversible change occurs, which does not fall into the category of "irreversible side reaction".

The reaction conditions for preparing monomers M11 and M21 can be combined with the structure of the raw materials with reference to the existing methods in the field of organic chemistry. This can be easily implemented by those skilled in the art.

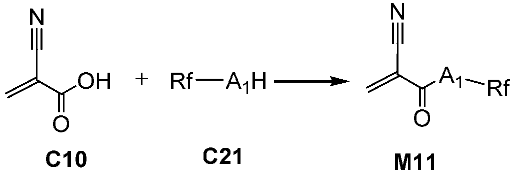

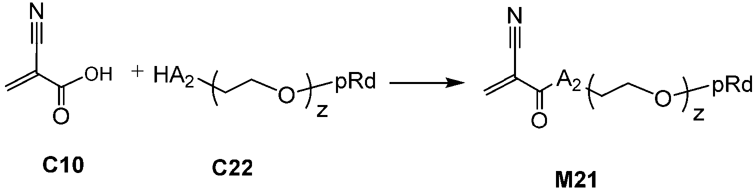

### 2. X₁ or X₂ is not H

When X₁ or X₂ is not H, X₁ or X₂-modified cyanoacrylate X₁-CH=C(-CN)-C(=O)-OH (denoted as compound C11) or X₂-CH=C(-CN)-C(=O)-OH (denoted as compound C12) can be prepared first, and then reacted with the corresponding compound C21 or compound C22 according to the preparation method when X₁ or X₂ is H, to prepare corresponding monomer compound M12 or M22.

The structural formula of M12 is X₁-CH=C(-CN)-C(=O)-A₁-Rf, where the definitions of X₁, A₁ and Rf are consistent with the above.

The structural formula of M22 is X₂-CH=C(-CN)-C(=O)-A₂-(CH₂CH₂O)_{z}-pRd, where the definitions of z, X₂, A₂ and pRd are consistent with the above.

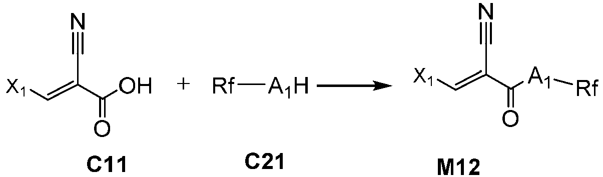

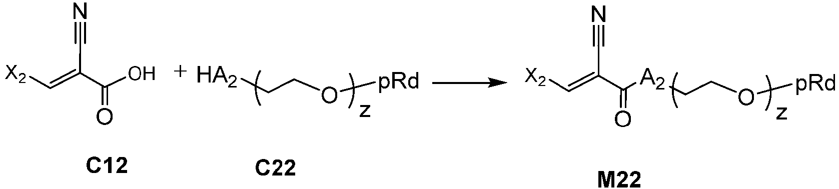

In an example in which the compounds C11 and X₁ are -N(CH₃)₂, reference may be made to a method for synthesizing in "Bredereck, Hellmut, et al. Chemische Berichte, 1964, 97(12), 3397-3406". An acetal compound C31 and a cyanoacrylate compound C4 (such as ethyl 2-cyanoacrylate) are used to prepare an X₁-modified cyanoacrylate derivative (compound C51, such as 1-X₁-2-ethyl cyanoacrylate) to hydrolyze to form an X₁-modified cyanoacrylic acid (compound C11).

In an example in which the compounds C12 and X₂ are -N(CH₃)₂, reference may be made to a method in "Bredereck, Hellmut, et al. Chemische Berichte, 1964, 97(12), 3397-3406". An acetal compound C32 and a cyanoacrylate compound C4 (such as ethyl 2-cyanoacrylate) are used to prepare an X₂-modified cyanoacrylate derivative (compound C52, such as 1-X₂-2-ethyl cyanoacrylate) to hydrolyze to form X₂-modified cyanoacrylic acid (compound C12).

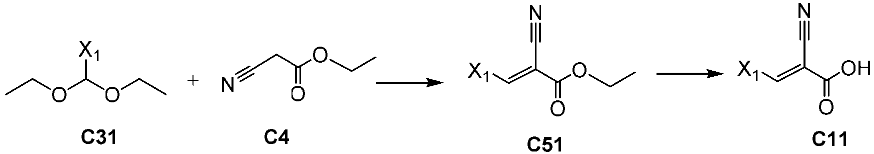

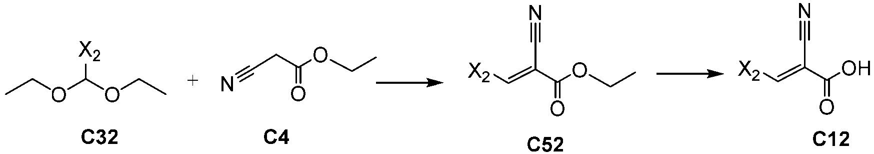

Whether the target compound is formed may be determined based on at least one of, but not limited to, the results of nuclear magnetic resonance spectroscopy ¹H NMR and gas chromatography-mass spectrometry (GC-MS), and whether the polymer Poly is formed may be determined based on at least one of the results of molecular weight and viscosity tests.

### Example 1

The monomer compound M1 is 2,2,3,3,4,4,5,5-octafluoropentane-2-cyanoacrylate, the monomer compound M2 is pentaethylene glycol monomethyl ether cyanoacrylate, the first electrolyte solution lithium salt is lithium bisfluorosulfonylimide, the first electrolyte solution solvent is dimethoxyethane, and the negative electrode sheet matrix is a pure lithium sheet.

### (1) Preparation of a polymer layer reaction mixture

2,2,3,3,4,4,5,5-octafluoropentane-2-cyanoacrylate, pentaethylene glycol monomethyl ether cyanoacrylate, lithium bisfluorosulfonylimide (LiFSI) and dimethoxyethane (DME) were stirred uniformly at a room temperature of 25°C to obtain a monomer-electrolyte solution mixture, and the amounts of raw materials are shown in Tables 1-3. The electrolyte solution here is denoted as a first electrolyte solution. The concentration of LiFSI in the first electrolyte solution is 1.0 mol/L.

### (2) Preparation of a negative electrode sheet

The obtained monomer-electrolyte solution mixture is coated on a surface on a single side of the lithium sheet, and stands at 30°C for 3 h to react, to obtain a lithium sheet containing a transparent and dense polymer layer on a single side. Operating parameters may be shown in Tables 1-3. The lithium sheet is cut into a wafer with a diameter of Φ16 mm as the negative electrode sheet.

### (3) Preparation of a positive electrode sheet

A positive active substance LiNi_{0.8}Co_{0.1}Mn_{0.1}O₂, a conductive agent acetylene black, and a binder polyvinylidene fluoride (PVDF) were mixed at a mass ratio of 98:1:1, a solvent N-methylpyrrolidone (NMP) was added, and the mixture was stirred until the system became uniform to give a positive electrode slurry; and the positive electrode slurry was uniformly coated on a side of a positive electrode current collector aluminum foil, dried at a room temperature, transferred to an oven and further dried, and then cut into a wafer with the diameter of Φ14 mm as the positive electrode sheet with a positive area capacity of 3 mAh/cm².

### (4) Preparation of an electrolyte solution

Lithium bisfluorosulfonylimide (LiFSI) was slowly added to dimethoxyethane (DME) to prepare an electrolyte solution with a LiFSI concentration of 1 mol/L.

### (5) Separator: polypropylene (PE) film

### (6) Preparation of a lithium metal secondary battery

The positive electrode sheet, the separator, and the negative electrode sheet are placed in sequence, so that the isolation film is isolated between the positive electrode sheet and the negative electrode sheet, and the electrolyte solution prepared in the foregoing (4) is injected, and assembled into a buckle battery.

In **Example 2-23,** a method is basically the same as that in Example 1, and a difference lies in that step (1) is different. Refer to a parameter difference in Tables 1-3.

In **Comparative Examples 1-9,** a method is basically the same as that in Example 1, and a difference lies in that step (1) and/or step (2) are/is different. Refer to a parameter difference in Tables 1-3.

In Examples 2-23 and Comparative Examples 1-9, the types and molar ratios m/n of the monomer compound M1 and the monomer compound M2 in the monomer composition, the fluorine substitution ratio in fluorinated aliphatic chain Rf in the monomer compound M1, the type, concentration and amount of the lithium salt (corresponding to the first electrolyte solution lithium salt) in the first electrolyte solution, the type and amount of the solvent (corresponding to the first electrolyte solution solvent) in the first electrolyte solution, the amounts of the monomer compound M1 and the monomer compound M2, the temperature and time of the in-situ polymerization reaction, the thickness of the polymer layer, the molecular weight, PDI and glass transition temperature (Tg) of the polymer Poly, the mass proportion of the fluorine in the polymer Poly, and the mass proportion of the first electrolyte solution in the polymer layer can be seen in Tables 1-3. The amounts of the first electrolyte solution lithium salt and the first electrolyte solution solvent can be converted according to the total mass of the two and the concentration of the lithium salt in the first electrolyte solution. The amounts of the monomer compound M1 and the monomer compound M2 can be converted according to the total mass of the monomer compound M1 and the monomer compound M2 and m/n, assuming that the molar ratio of the monomer compound M1 to the monomer compound M2 is equal to the polymerization degree ratio of the two repeating units in the polymer Poly in terms of numerical value. The mass ratio of the polymer Poly in the polymer layer to the first electrolyte solution can be estimated by parameter conversion according to Tables 1-3, assuming that the mass ratio of the polymer Poly in the polymer layer to the first electrolyte solution is numerically equal to the ratio of the total mass of the raw materials of the monomer composition to the total mass of the raw materials of the first electrolyte solution.

In contrast to Example 1, in Examples 2-6, at least the monomer compound M1 and the monomer compound M2 in the monomer composition are adjusted.

In contrast to Example 1, in Examples 7-10, at least the m/n value is adjusted.

In contrast to Example 1, in Examples 11-14, at least the first electrolyte solution content in the monomer-electrolyte solution mixture is adjusted.

In contrast to Example 1, in Examples 15-18, at least the lithium salt concentration of the first electrolyte solution in the monomer-electrolyte solution mixture is adjusted.

In contrast to Example 1, in Examples 19-22, at least in the thickness of the polymer layer is adjusted.

In contrast to Example 1, in Examples 23, the negative electrode sheet matrix was changed from a pure lithium sheet to a lithium-magnesium alloy, and the mass ratio of lithium to magnesium was 1:1.

**Comparative Example 1.** The preparation method is basically the same as that of Example 1, except that the negative electrode sheet was different. In this comparative example, a pure lithium sheet is used as the negative electrode sheet, that is, there is no polymer layer. The remaining preparation parameters were the same as those in Example 1.

**Comparative Example 2.** The polymer coating was applied physically.

The preparation method was basically the same as that of Example 1, except that the connection manner between the polymer layer and the lithium-containing layer was different.

In this comparative example, the polymer solution was sprayed onto the surface of a pure lithium sheet and dried to obtain a polymer coating with a thickness of about 0.1 micrometers, as shown in Tables 1-3. A polymer solution was prepared by mixing 6 g of a polymer in tetrahydrofuran (THF) solution and 4.3 g of a first electrolyte solution (a first electrolyte solution lithium salt and a first electrolyte solution solvent, the concentration of the first electrolyte solution lithium salt in the first electrolyte solution was 1.0mol/L), where the polymer was a copolymer of 2,2,3,3,4,4,5,5-octafluoropentane-2-cyanoacrylate and pentaethylene glycol monomethyl ether cyanoacrylate, and the weight-average molecular weight was 70 kDa (i.e., 70,000 Daltons). The polymer used in this example was the monomer compositions 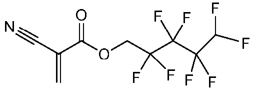 and 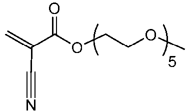 in Example 1. The two monomer raw materials were polymerized in the same amount ratio as in Example 1, the molecular weight of the product was controlled by adjusting the reaction temperature and time, and the obtained polymer was prepared into a polymer solution, which was then sprayed in this example.

### Comparative Example 3.

The preparation method is basically the same as that of Comparative Example 2, except that the coating amount of the polymer solution is different and the thickness of the formed polymer layer is different, and the thickness of the polymer layer in this example is about 1 micron. See Tables 1-3. The polymer was a copolymer of 2,2,3,3,4,4,5,5-octafluoropentane-2-cyanoacrylate and pentaethylene glycol monomethyl ether cyanoacrylate having the weight-average molecular weight of 68 kDa (i.e., 68,000 Daltons). The polymer used in this example was the monomer compositions 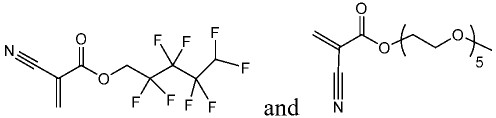 in Example 1. The two monomer raw materials were polymerized in the same amount ratio as in Example 1, the molecular weight of the product was controlled by adjusting the reaction temperature and time, and the obtained polymer was prepared into a polymer solution, which was then sprayed in this example.

### Comparative Example 4.

The preparation method was basically the same as that of Example 1, except that neither the monomer compound M1 nor the monomer compound M2 was provided with a cyano group. The monomer compositions are 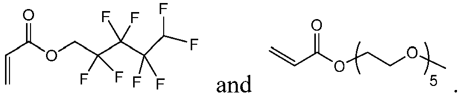 The remaining preparation parameters were the same as those in Example 1.

### Comparative Example 5.

The preparation method is basically the same as that in Example 1, except that a single monomer compound M1 ( 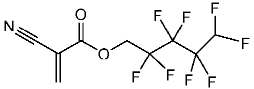 ) is used, and the EO block-containing monomer compound is omitted. The remaining preparation parameters were the same as those in Example 1.

### Comparative Example 6.

The preparation method is substantially the same as that in Example 1, except that a single monomer compound M2 ( 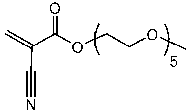 ) is used, and the monomer compound containing the fluorinated aliphatic chain Rf is omitted. The remaining preparation parameters were the same as those in Example 1.

### Comparative Example 7.

The preparation method is basically the same as that in Example 1, except that a single monomer 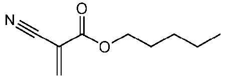 is used, and neither the fluorinated aliphatic chain Rf-containing monomer compound M1 nor the EO block-containing monomer compound M2 is included in the monomer. The remaining preparation parameters were the same as those in Example 1.

### Comparative Example 8.

The preparation method is basically the same as that in Example 1, except that the fluorinated aliphatic chain Rf and EO blocks were disposed in the same monomer compound, and the single monomer 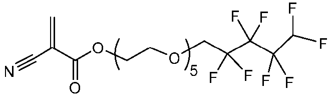 is used. The remaining preparation parameters were the same as those in Example 1.

### Comparative Example 9.

The preparation method is basically the same as that in Example 1, except that the monomer compound M2 was replaced with 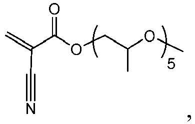 thereby replacing the EO blocks with polyoxypropylene PPO segments, for the rest of the parameters, refer to Example 1.

**Table 1.**

| No. | Monomer compound M1 | Fluorine substitution ratio (%) in fluorinated aliphatic chain Rf contained in M1 | m/n | Monomer compound M2 |
|---|---|---|---|---|
| Example 1 | 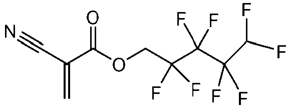 | 72.73 | 2 | 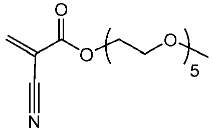 |
| Example 2 | 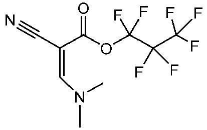 | 100 | 2 | 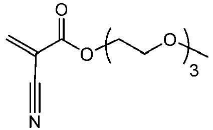 |
| Example 3 | 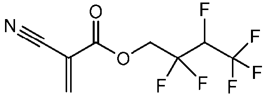 | 66.67 | 2 | 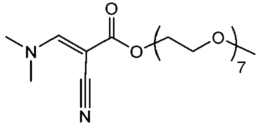 |
| Example 4 | 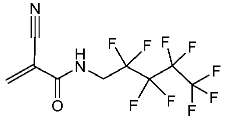 | 81.82 | 2 | 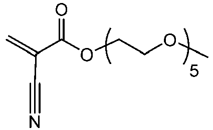 |
| Example 5 | 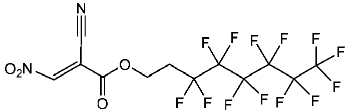 | 76.47 | 2 | 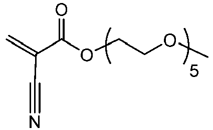 |
| Example 6 | 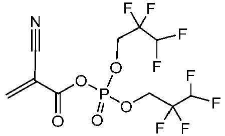 | 57.14 | 2 | 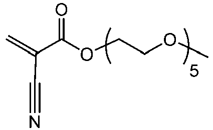 |
| Example 7 | The same as Example 1 | 72.73 | 1 | The same as Example 1 |
| Example 8 | The same as Example 1 | 72.73 | 5 | The same as Example 1 |
| Example 9 | The same as Example 1 | 72.73 | 0.5 | The same as Example 1 |
| Example 10 | The same as Example 1 | 72.73 | 8 | The same as Example 1 |
| Example 11 | The same as Example 1 | 72.73 | 2 | The same as Example 1 |
| Example 12 | The same as Example 1 | 72.73 | 2 | The same as Example 1 |
| Example 13 | The same as Example 1 | 72.73 | 2 | The same as Example 1 |
| Example 14 | The same as Example 1 | 72.73 | 2 | The same as Example 1 |
| Example 15 | The same as Example 1 | 72.73 | 2 | The same as Example 1 |
| Example 16 | The same as Example 1 | 72.73 | 2 | The same as Example 1 |
| Example 17 | The same as Example 1 | 72.73 | 2 | The same as Example 1 |
| Example 18 | The same as Example 1 | 72.73 | 2 | The same as Example 1 |
| Example 19 | The same as Example 1 | 72.73 | 2 | The same as Example 1 |
| Example 20 | The same as Example 1 | 72.73 | 2 | The same as Example 1 |
| Example 21 | The same as Example 1 | 72.73 | 2 | The same as Example 1 |
| Example 22 | The same as Example 1 | 72.73 | 2 | The same as Example 1 |
| Example 23 | The same as Example 1 | 72.73 | 2 | The same as Example 1 |
| Comparative Example 1 | / | / | / | / |
| Comparative Example 2 | A copolymer of 2,2,3,3,4,4,5,5-octafluoropentane-2-cyanoacrylate and pentaethylene glycol monomethyl ether cyanoacrylate was prepared, where the monomer compounds M1 and M2 used were the same as those in Example 1, and the molar ratio of M1 to M2 was the same as that in Example 1. | | | |
| Comparative example 3 | A copolymer of 2,2,3,3,4,4,5,5-octafluoropentane-2-cyanoacrylate and pentaethylene glycol monomethyl ether cyanoacrylate was prepared, where the monomer compounds M1 and M2 used were the same as those in Example 1, and the molar ratio of M1 to M2 was the same as that in Example 1. | | | |
| Comparative Example 4 | 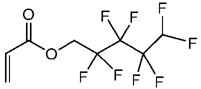 | 72.73 | 2 | 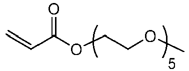 |
| Comparative Example 5 | 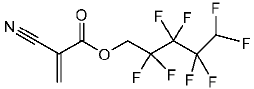 | 72.73 | / | / |
| Comparative Example 6 | / | / | / | 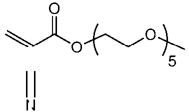 |
| Comparative Example 7 | 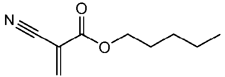 | 0 | / | / |
| Comparative Example 8 | 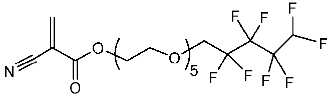 | 72.73 | / | / |
| Comparative Example 9 | 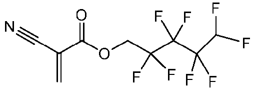 | 72.73 | 2 | 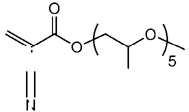 |

In Table 1, in each of the examples and the related comparative examples, the numerical value of the molar ratio of the raw materials of the monomer compound M1 and the monomer compound M2 is equal to the polymerization degree ratio m/n of the two repeating units in the target polymer Poly.

**Table 2.**

| No. | Concentration of the lithium salt in the first electrolyte solution (mol/L) | First electrolyte solution lithium salt | First electrolyte solution solvent | Total mass m20 (g) of the first electrolyte solution lithium salt and the first electrolyte solution solvent | Total mass m10 (g) of monomers M1 and M2 | Reaction temperature (°C) | Reaction time (h) |
|---|---|---|---|---|---|---|---|
| Example 1 | 1.0 | Lithium bisfluorosulfonylimide (LiFSI) | Dimethoxyethane (DME) | 4.3 | 6 | 30 | 3 |
| Example 2 | 1.0 | Lithium difluoro(oxalato)borate (LiDFOB) | Dimethoxyethane (DME) | 4.3 | 6 | 65 | 8 |
| Example 3 | 1.0 | Lithium difluoro(oxalato)borate (LiDFOB):lithium tetrafluoroborate (LiBF4) = 1:1, volume ratio | Fuoroethylene carbonate (FEC):diethyl carbonate (DEC) = 3:4, volume ratio | 4.3 | 6 | 50 | 5 |
| Example 4 | 1.0 | Lithium tetrafluoroborate (LiBF4) | Dimethoxyethane (DME) | 4.3 | 6 | 65 | 6 |
| Example 5 | 1.0 | Lithium bis(trifluoromethanesulfonyl) imide (LiTFSI) | Dimethoxyethane (DME) | 4.3 | 6 | 35 | 4 |
| Example 6 | 1.0 | Lithium hexafluorophosphate (LiPF6) | Ethylene carbonate (EC):diethyl carbonate: fluoroethylene carbonate (FEC) = 1:1:1, volume ratio | 4.3 | 6 | 75 | 6 |
| Example 7 | 1.0 | Lithium bisfluorosulfonylimide (LiFSI) | Dimethoxyethane (DME) | 4.3 | 6 | 30 | 3 |
| Example 8 | 1.0 | Lithium bisfluorosulfonylimide (LiFSI) | Dimethoxyethane (DME) | 4.3 | 6 | 30 | 2 |
| Example 9 | 1.0 | Lithium bisfluorosulfonylimide (LiFSI) | Dimethoxyethane (DME) | 4.3 | 6 | 30 | 5 |
| Example 10 | 1.0 | Lithium bisfluorosulfonylimide (LiFSI) | Dimethoxyethane (DME) | 4.3 | 6 | 30 | 2 |
| Example 11 | 1.0 | Lithium bisfluorosulfonylimide (LiFSI) | Dimethoxyethane (DME) | 2.6 | 6 | 30 | 1.5 |
| Example 12 | 1.0 | Lithium bisfluorosulfonylimide (LiFSI) | Dimethoxyethane (DME) | 9 | 6 | 30 | 4 |
| Example 13 | 1.0 | Lithium bisfluorosulfonylimide (LiFSI) | Dimethoxyethane (DME) | 1.5 | 6 | 30 | 1 |
| Example 14 | 1.0 | Lithium bisfluorosulfonylimide (LiFSI) | Dimethoxyethane (DME) | 24 | 6 | 30 | 6 |
| Example 15 | 0.5 | Lithium bisfluorosulfonylimide (LiFSI) | Dimethoxyethane (DME) | 4.3 | 6 | 30 | 4 |
| Example 16 | 5.0 | Lithium bisfluorosulfonylimide (LiFSI) | Dimethoxyethane (DME) | 4.3 | 6 | 30 | 7 |
| Example 17 | 0.2 | Lithium bisfluorosulfonylimide (LiFSI) | Dimethoxyethane (DME) | 4.3 | 6 | 30 | 3.5 |
| Example 18 | 8.0 | Lithium bisfluorosulfonylimide (LiFSI) | Dimethoxyethane (DME) | 4.3 | 6 | 30 | 8 |
| Example 19 | 1.0 | Lithium bisfluorosulfonylimide (LiFSI) | Dimethoxyethane (DME) | 4.3 | 6 | 30 | 2 |
| Example 20 | 1.0 | Lithium bisfluorosulfonylimide (LiFSI) | Dimethoxyethane (DME) | 4.3 | 6 | 30 | 4 |
| Example 21 | 1.0 | Lithium bisfluorosulfonylimide (LiFSI) | Dimethoxyethane (DME) | 4.3 | 6 | 30 | 1.5 |
| Example 22 | 1.0 | Lithium bisfluorosulfonylimide (LiFSI) | Dimethoxyethane (DME) | 4.3 | 6 | 30 | 6 |
| Example 23 | 1.0 | Lithium bisfluorosulfonylimide (LiFSI) | Dimethoxyethane (DME) | 4.3 | 6 | 30 | 3 |
| Comparative Example 1 | / | / | / | / | / | / | / |
| Comparative Example 2 | 1.0 | Lithium bisfluorosulfonylimide (LiFSI) | Dimethoxyethane (DME) | 3.5 | / | / | / |
| Comparative example 3 | 1.0 | Lithium bisfluorosulfonylimide (LiFSI) | Dimethoxyethane (DME) | 3.5 | / | / | / |
| Comparative Example 4 | 1.0 | Lithium bisfluorosulfonylimide (LiFSI) | Dimethoxyethane (DME) | 4.3 | 6 | 60 | 5 |
| Comparative Example 5 | 1.0 | Lithium bisfluorosulfonylimide (LiFSI) | Dimethoxyethane (DME) | 4.3 | 6 | 25 | 3 |
| Comparative Example 6 | 1.0 | Lithium bisfluorosulfonylimide (LiFSI) | Dimethoxyethane (DME) | 4.3 | 6 | 30 | 3 |
| Comparative Example 7 | 1.0 | Lithium bisfluorosulfonylimide (LiFSI) | Dimethoxyethane (DME) | 4.3 | 6 | 25 | 3 |
| Comparative Example 8 | 1.0 | Lithium bisfluorosulfonylimide (LiFSI) | Dimethoxyethane (DME) | 4.3 | 6 | 40 | 6 |
| Comparative Example 9 | 1.0 | Lithium bisfluorosulfonylimide (LiFSI) | Dimethoxyethane (DME) | 4.3 | 6 | 40 | 4 |

In each example, the mass ratio of the polymer Poly in the polymer layer to the first electrolyte solution may be calculated and estimated by using the following formula: m10/m20, that is, the sum (m10) of the mass of the monomer compound M1 and the mass of the monomer compound M2 in Table 2 is divided by the sum (m20) of the mass of the lithium salt and the mass of the solvent in the first electrolyte solution, where the respective amounts of the monomer compound M1 and the monomer compound M2 may be calculated by conversion according to m/n, assuming that the feeding molar ratio of the monomer compound M1 to the monomer compound M2 is numerically equal to the polymerization degree ratio of the two repeating units in the polymer Poly.

In each example, the mass proportion of the first electrolyte solution in the polymer layer may be calculated and estimated based on the following formula: m20/(m20+m10)×100%. See table 3.

**Table 3.**

| No. | Negative electrode sheet matrix | Polymer Poly | | Tg (°C) | Mass proportion of fluorine in polymer Poly (%) | Thickness of polymer layer (µm) | Mass proportion of first electrolyte solution in polymer layer |
|---|---|---|---|---|---|---|---|
| | | Molecular weight (kDa) | PDI | | | | |
| Example 1 | Lithium sheet | 71 | 1.4 | 47.3 | 31.9 | 0.1 | 41.7% |
| Example 2 | Lithium sheet | 68 | 1.6 | 49.2 | 31.0 | 0.1 | 41.7% |
| Example 3 | Lithium sheet | 61 | 1.6 | 45.3 | 24.2 | 0.1 | 41.7% |
| Example 4 | Lithium sheet | 52 | 1.7 | 51.2 | 34.6 | 0.1 | 41.7% |
| Example 5 | Lithium sheet | 56 | 1.8 | 43.6 | 37.8 | 0.1 | 41.7% |
| Example 6 | Lithium sheet | 48 | 1.7 | 51.7 | 25.6 | 0.1 | 41.7% |
| Example 7 | Lithium sheet | 79 | 1.4 | 51 | 23.7 | 0.1 | 41.7% |
| Example 8 | Lithium sheet | 68 | 1.3 | 53.4 | 40.3 | 0.1 | 41.7% |
| Example 9 | Lithium sheet | 86 | 1.8 | 40.6 | 15.6 | 0.1 | 41.7% |
| Example 10 | Lithium sheet | 62 | 1.3 | 55.8 | 43.1 | 0.1 | 41.7% |
| Example 11 | Lithium sheet | 71 | 1.4 | 47.3 | 31.9 | 0.1 | 30.2% |
| Example 12 | Lithium sheet | 71 | 1.4 | 47.3 | 31.9 | 0.1 | 60.0% |
| Example 13 | Lithium sheet | 71 | 1.4 | 47.3 | 31.9 | 0.1 | 20.0% |
| Example 14 | Lithium sheet | 71 | 1.4 | 47.3 | 31.9 | 0.1 | 80.0% |
| Example 15 | Lithium sheet | 71 | 1.4 | 47.3 | 31.9 | 0.1 | 41.7% |
| Example 16 | Lithium sheet | 71 | 1.4 | 47.3 | 31.9 | 0.1 | 41.7% |
| Example 17 | Lithium sheet | 71 | 1.4 | 47.3 | 31.9 | 0.1 | 41.7% |
| Example 18 | Lithium sheet | 71 | 1.4 | 47.3 | 31.9 | 0.1 | 41.7% |
| Example 19 | Lithium sheet | 67 | 1.4 | 49.6 | 31.9 | 0.05 | 41.7% |
| Example 20 | Lithium sheet | 67 | 1.4 | 49.6 | 31.9 | 5 | 41.7% |
| Example 21 | Lithium sheet | 67 | 1.4 | 49.6 | 31.9 | 0.02 | 41.7% |
| Example 22 | Lithium sheet | 67 | 1.4 | 49.6 | 31.9 | 8 | 41.7% |
| Example 23 | Lithium-magnesium alloy | 71 | 1.4 | 47.3 | 31.9 | 0.1 | 41.7% |
| Comparative Example 1 | Using pure lithium sheet as negative electrode sheet | / | / | / | / | / | / |
| Comparative Example 2 | Lithium sheet | 70 | 1.4 | 48.3 | 31.9 | 0.1 | 41.7% |
| Comparative Example 3 | Lithium sheet | 68 | 1.5 | 46.4 | 31.9 | 1 | 41.7% |
| Comparative Example 4 | Lithium sheet | 70 | 1.4 | 47.3 | 33.7 | 0.1 | 41.7% |
| Comparative Example 5 | Lithium sheet | 60 | 1.3 | 53.4 | 31.9 | 0.1 | 41.7% |
| Comparative Example 6 | Lithium sheet | 45 | 1.6 | 23.2 | / | 0.1 | 41.7% |
| Comparative Example 7 | Lithium sheet | 150 | 1.6 | 56.1 | / | 0.1 | 41.7% |
| Comparative Example 8 | Lithium sheet | 72 | 1.3 | 38.2 | 28.6 | 0.1 | 41.7% |
| Comparative Example 9 | Lithium sheet | 70 | 1.5 | 49.5 | 29.7 | 0.1 | 41.7% |

### Preparation of test sample

### 1. preparation of polymer layer film

The monomer compound M1 is 2,2,3,3,4,4,5,5-octafluoropentane-2-cyanoacrylate. The monomer compound M2 is pentaethylene glycol monomethyl ether cyanoacrylate. The lithium salt and the solvent in the first electrolyte solution are lithium bisfluorosulfonylimide (LiFSI) and dimethoxyethane (DME), respectively.
(1) At 25°C, the monomer compound M1, the monomer compound M2, and the lithium salt and the solvent of the first electrolyte were stirred uniformly at room temperature to obtain a uniform solution, where 2,2,3,3,4,4,5,5-octafluoropentane-2-cyanoacrylate and pentaethylene glycol monomethyl ether cyanoacrylate were mixed in the molar ratio of 2:1 (equal to m/n), lithium bisfluorosulfonylimide (LiFSI) and dimethoxyethane (DME) were mixed to form the first electrolyte solution with the lithium salt concentration of 1.0mol/L.
(2) 0.1g lithium powder was added to the uniform solution obtained in step (1), and stirred rapidly and uniformly. Then a glass plate was coated with the solution, and stood for reaction at 30°C for 3h, thereby obtaining a transparent polymer layer film with the thickness of 15 µm. For situ polymerization conditions, refer to Example 1.

### Structure and performance test

### 1. Characterization of components of polymer Poly in polymer layer

A lithium sheet containing a polymer layer was immersed in isopropanol. The lithium sheet was corroded and consumed. Generated lithium isopropoxide may be dissolved in isopropanol. A polymer precipitated due to its insolubility in isopropanol, and a solid sample of the polymer was obtained after centrifugal drying.

1.1. Fourier transform infrared spectroscopy (FT-IR) test: ATR mode, 4 cm⁻¹ resolution, 32 scans, wave quantity range 4000 cm⁻¹ to 400 cm⁻¹.

1.2. ¹H NMR nuclear magnetic test: The ¹ H resonance frequency was 400 MHz, deuterated dimethyl sulfoxide (DMSO-d6) was used as a solvent, and tetramethylsilane (TMS) was used as an internal standard.

1.3. Molecular weight test: A polymer sample was dissolved in NMP, and the molecular weight was tested by gel permeation chromatography (GPC), to obtain a weight-average molecular weight, a number-average molecular weight and a polydispersity index (PDI) of the molecular weights.

1.4. Thickness test of polymer layer: The thickness of a polymer layer was measured by using a laser thickness gauge.

### 2. Fluorine content

The content of fluorine in a polymer layer might be detected based on X-ray photoelectron spectroscopy (XPS).

### 3. Swelling parameter

### The swelling parameter of a polymer layer was tested by the following method:

A test temperature is 25°C. A lithium metal sheet containing a polymer layer was cut into 30 mm × 30 mm square samples, three parallel samples per group, and the mass W1 of each sample was weighed. Then, the sample was immersed in DME electrolyte solution with 1 mol/L LiFSI for 2h for swelling. The swollen sample was lightly wiped with filter paper to remove the residual electrolyte solution on a surface, and then the mass W2 of the swollen sample was weighed. The swelling ratio of the polymer layer is the percentage of a mass increase of the swollen sample to the mass of the original sample = (W2-W1)/W1×100%.

### 4. Ionic conductivity

A test temperature is 25°C. A polymer layer film was punched into a wafer with the diameter of Φ 16 mm. The polymer layer film wafer was immersed in an electrolyte solution for 1h and taken out, and the electrolyte solution on a film surface was wiped with filter paper. The ionic conductivity σ of the polymer layer film after swelling in the electrolyte solution was calculated by using a formula σ = d/RA, where d is the thickness of the film, measured by a micrometer, A is the area of the film, R is the impedance of the film, the impedance of a symmetrical battery is tested by using an electrochemical workstation, the test frequency is 10⁻⁶ Hz to 10⁻¹ Hz, the voltage amplitude is 5 mV, and the intersection of a Nyquist graph obtained by the test and a horizontal axis is the impedance R of the polymer layer.

### 5. Elastic modulus and elastic deformation

Elastic modulus: The test temperature is 25°C. A polymer layer film was cut into strips with the length L0 of 150 mm and the width of 20 mm. The elastic modulus of the polymer layer film was measured by a universal testing machine, where the tensile distance is 100 mm, and the tensile speed is 50 mm/min. A maximum tensile force of the polymer layer film was the elastic modulus.

Elastic deformation: The test temperature is 25°C. A polymer film with the initial length of L0 was stretched. The elastic deformation of the polymer layer film was calculated as (L-L0)/L0×100%, where L is the length of the film when it breaks.

### 6. Bonding performance test of polymer layer (degree of delamination)

The thickness of a polymer layer on a surface of lithium metal was controlled to be about 5 µm by controlling the reaction time, and a range of 50 mm×100 mm of the polymer layer was taken as a peeling test sample. 10×10 1 mm×1 mm small grids were scribed on a surface of a protective layer sample with a sharp blade (with a sharp angle of 15° to 30°), and each scribed line should be deep to reach the bottom layer of the protective layer. Fragments in a test region were brushed clean with a brush. The small grids to be tested were firmly stuck with an adhesive tape (3M 600 adhesive paper or equivalent) with the adhesion of 350 g/cm² to 400 g/cm², and the adhesive tape was rubbed with an eraser to increase the contact area and force between the adhesive tape and the test area. One end of the adhesive tape was grasped by a hand, and the adhesive paper was quickly torn off in the vertical direction (90°). The same test was performed twice at the same position. Finally, a magnifier was used for observing the situation of the grid region. If there is no peeling or peeling occurs in the protective layer, it is qualified. However, when there is peeling between the metal and the polymer layer, if the area is more than 65%, it is 0B grade; if the area is 35% to 65%, it is 1B grade; if the area is 15% to 35%, it is 2B grade; if the area is 5% to 15%, it is 3B grade; if the area is 5% or less, it is 4B grade; and if the edge of a cut is completely smooth, and there is no peeling at the grid edge, it is 5B grade.

### 7. Flexibility of polymer material

The glass transition temperature Tg of a polymer material was characterized by testing with a differential scanning calorimeter (DSC instrument). The smaller the Tg, the better the molecular weight flexibility. The temperature range of the DSC test is 35°C to 800°C, the heating rate is 5°C/ min, and the atmosphere is argon.

### 8. Performance test of negative electrode sheet

Volume expansion ratio of negative electrode sheet: The test temperature is 25°C. The thickness of a fresh lithium sheet was denoted as d1. After a battery was cycled for 50 cycles to a fully discharged state, the battery was disassembled, and the thickness of the lithium sheet was measured by using an optical microscope to be denoted as d2. The electrode expansion ratio of the negative electrode sheet was (d2-d1)/d1×100%.

### 9. Battery performance test

(1) Cycle Performance Test: The test temperature is 25°C A lithium metal battery was first charged to 4.25 V at a constant current density, and then discharged to 3.0 V to obtain a first cycle specific discharge capacity (Cd1). This charge and discharge were repeated for 50 cycles. The specific discharge capacity of the lithium metal battery after n cycles was denoted as Cdn. Capacity retention ratio = discharge specific capacity after n cycles (Cdn) / first cycle discharge specific capacity (Cd1)×100%. For the charging current density, refer to Table 4.
(2) Observation of lithium negative electrode surface: After a battery was cycled for 50 cycles to a fully discharged state, the battery was disassembled, and the uniformity of lithium deposition/dissolution and the flatness of a lithium negative electrode surface were observed under an optical microscope.

### Test results

The molecular weight, PDI and Tg of the polymer Ploy in the polymer layer, the mass proportion of fluorine in the polymer Poly, the mass proportion of the first electrolyte solution in the polymer layer, the thickness of the polymer layer, the swelling ratio of the polymer layer, the ionic conductivity, the elastic modulus and the elastic deformation, as well as test analysis results of the capacity retention ratio, lithium dendrites, volume expansion ratio and degree of delamination of a lithium metal secondary battery after 50 cycles prepared by using the negative electrode sheet containing the polymer layer of the present application can be seen in Tables 2 to 4.

**Table 4.**

| No. | Swelling ratio of polymer layer (%) | Ionic conductivity of polymer layer mS/cm | Elastic modulus of polymer layer MPa | Elastic deformation of polymer layer % | Charging current density of battery (mA/cm²) | Capacity Retention ratio after 50 Cycles (%) | Lithium dendrite | Volume expansion ratio of negative electrode sheet (%) | Degree of delamination |
|---|---|---|---|---|---|---|---|---|---|
| Example 1 | 35.6 | 1.9 | 33 | 206 | 3.5 | 95 | None | 8 | 5B grade |
| Example 2 | 34.8 | 1.8 | 36 | 193 | 3.5 | 93 | None | 12 | 5B grade |
| Example 3 | 39.6 | 2.5 | 31 | 246 | 3.5 | 97 | None | 6 | 5B grade |
| Example 4 | 32.9 | 2.3 | 38 | 198 | 3.5 | 97 | None | 5 | 5B grade |
| Example 5 | 39.1 | 2.4 | 33 | 258 | 3.5 | 97 | None | 6 | 5B grade |
| Example 6 | 39.8 | 2.5 | 30 | 231 | 3.5 | 96 | None | 8 | 5B grade |
| Example 7 | 39.5 | 2.4 | 29 | 238 | 3.5 | 92 | None | 12 | 5B grade |
| Example 8 | 33.8 | 1.1 | 41 | 169 | 3.5 | 91 | None | 12 | 5B grade |
| Example 9 | 43.5 | 2.1 | 19 | 300 | 1 | 85 | Minor | 91 | 5B grade |
| Example 10 | 33.1 | 0.85 | 46 | 147 | 0.3 | 71 | Severe | 115 | 5B grade |
| Example 11 | 32.3 | 0.97 | 37 | 182 | 3.5 | 90 | None | 15 | 5B grade |
| Example 12 | 19 | 3.4 | 21 | 158 | 2.5 | 89 | Minor | 84 | 5B grade |
| Example 13 | 45.8 | 0.12 | 39 | 236 | 0.1 | 63 | Severe | 128 | 5B grade |
| Example 14 | 8 | 4.2 | 12 | 58 | 0.3 | 76 | Severe | 109 | 5B grade |
| Example 15 | 37.3 | 1 | 36 | 269 | 3.5 | 90 | None | 13 | 5B grade |
| Example 16 | 28.7 | 3.1 | 20.3 | 162 | 1.5 | 87 | Minor | 92 | 5B grade |
| Example 17 | 39.2 | 0.3 | 38 | 287 | 0.2 | 74 | Severe | 113 | 5B grade |
| Example 18 | 21.1 | 3.9 | 11 | 113 | 0.1 | 68 | Severe | 121 | 5B grade |
| Example 19 | 40.8 | 4.7 | 26 | 287 | 2.5 | 89 | Minor | 87 | 5B grade |
| Example 20 | 32.4 | 0.94 | 39.6 | 183 | 1 | 83 | Minor | 102 | 5B grade |
| Example 21 | 42.3 | 4.9 | 19 | 302 | 0.3 | 79 | Severe | 109 | 5B grade |
| Example 22 | 23.7 | 0.11 | 41 | 156 | 0.1 | 65 | Severe | 126 | 5B grade |
| Example 23 | 35.6 | 1.9 | 33 | 206 | 3.5 | 95 | None | 8 | 5B grade |
| Comparative Example 1 | / | / | / | / | 0.3 | 63 | Severe | 112 | / |
| Comparative Example 2 | 36.1 | 1.7 | 9 | 51 | 0.2 | 58 | Severe | 126 | 3B grade |
| Comparative example 3 | 33.2 | 0.94 | 36.2 | 190 | 0.3 | 70 | Severe | 117 | 3B grade |
| Comparative Example 4 | 37.4 | 2 | 29 | 217 | 0.2 | 59 | Severe | 127 | 2B grade |
| Comparative Example 5 | 33.2 | 1.6 | 29 | 163 | 3 | 92 | None | 13 | 5B grade |
| Comparative Example 6 | 45 | 2.1 | 6 | 270 | 0.3 | 72 | Severe | 120 | 5B grade |
| Comparative Example 7 | 29.1 | 1.4 | 27 | 144 | 0.3 | 74 | Severe | 122 | 5B grade |
| Comparative Example 8 | 38.5 | 2.0 | 27 | 218 | 3 | 92 | None | 15 | 5B grade |
| Comparative Example 9 | 27.2 | 1.2 | 41 | 112 | 2.5 | 89 | Minor | 86 | 5B grade |

According to experimental test results, parameters such as the fluorine content of the protective layer film, the proportion of EO repeating units, the length of EO repeating units, the concentration of lithium salt in the first electrolyte solution, the content of the first electrolyte solution in the polymer layer, and the thickness of the polymer layer can be adjusted to obtain good ionic conductivity and good mechanical strength of the polymer layer, which was beneficial to the application of the protective layer in lithium metal batteries that were charged and discharged at high current density.

Examples 1-23 used the negative electrode sheet provided by the present application, where the negative electrode sheet includes a lithium-containing layer and a polymer layer, and a chemical bond is formed between the lithium-containing layer and the polymer layer. Polymer layers formed in Examples 1 to 23 had appropriate swelling ratios, elastic moduli, elastic deformations and ionic conductivities, and could be used in lithium metal batteries that are charged and discharged at high current density. Compared with Comparative Example 1 without a polymer layer, lithium metal secondary batteries prepared in Examples 1 to 23 all had improved cycle performance, and the formation of lithium dendrites was suppressed. Compared with Comparative Example 1, the volume expansion of the negative electrode sheets in Examples 1 to 9, 11 to 12, 15 to 16, 19 to 20 and 23 was significantly suppressed, the lithium metal secondary batteries had significantly improved cycle performance and significantly increased cycle capacity retention ratios, and there were only a small amount or no lithium dendrites, and the formation of lithium dendrites was significantly suppressed. It should be noted that the formation of lithium dendrites in Examples 10, 13 to 14, 17 to 18, 21 to 22 was also statistically reduced to some extent.

In Comparative Example 2 and Comparative Example 3, the lithium sheets were both physically coated with the polymer layers. The thicknesses of the polymer layers were about 0.1 µm and 1 µm, respectively. The results showed that, compared with Example 1 (the thickness of the polymer layer was about 0.1 µm), the bonding firmness of the polymer layers in Comparative Example 2 and Comparative Example 3 was significantly reduced, and therefore, the volume expansion of the negative electrode sheet was increased sharply, the cycle capacity retention ratio was significantly reduced, the cycle performance was significantly deteriorated, and severe lithium dendrite formation occurred. It can be seen that in the embodiments of the present application, the polymer layer with the relatively small thickness can be firmly attached to the lithium-containing layer, the cycle performance of the battery can be significantly improved, and the cycle capacity retention ratio can be greatly improved. In Comparative Example 3, the thickness of the physically coated polymer layer was increased to 1 µm. Although the volume expansion of the negative electrode sheet was alleviated compared with Comparative Example 1, the ionic conductivity of Comparative Example 3 was greatly reduced.

Compared with the polymerizing monomers M1 and M2 in Example 1, the polymerizing monomer in Comparative Example 4 did not contain the cyano group, resulting in that the polymer layer formed by in-situ polymerization was only physically attached to the lithium-containing layer without forming a chemical bond, so that the bonding firmness was significantly deteriorated, and further resulting in that the volume expansion of the negative electrode sheet was increased sharply, the cycle performance was significantly deteriorated, and severe lithium dendrite formation occurred.

Compared with the polymerizing monomers M1 and M2 in Example 1, the polymerizing monomer in Comparative Example 5 did not contain the EO block, that is, the polymerizing monomer M2 was omitted, which affected the adjustment of the flexibility and elasticity of the polymer layer, resulting in that the volume expansion of the negative electrode sheet was increased, the cycle capacity retention ratio was decreased, and the cycle performance was deteriorated.

Compared with the polymerizing monomers M1 and M2 in Example 1, the polymerizing monomer in Comparative Example 6 did not contain the fluorinated aliphatic chain Rf chain, that is, the polymerizing monomer M1 is omitted, which affected the adjustment of the lithium ion deposition morphology, resulting in that severe lithium dendrite formation occurred, the volume expansion of the negative electrode sheet was increased sharply, the cycle capacity retention ratio was significantly decreased, and the cycle performance was significantly deteriorated.

Compared with the polymerizing monomers M1 and M2 in Example 1, the polymerizing monomer in Comparative Example 7 had neither the fluorine-free aliphatic chain nor the EO block, which affected the adjustment of the lithium ion deposition morphology and the flexibility and elasticity of the polymer layer, resulting in that the volume expansion of the negative electrode sheet was increased sharply, the cycle capacity retention ratio was significantly decreased, the cycle performance was significantly deteriorated, and severe lithium dendrite formation occurred. In addition, the ionic conductivity of the polymer layer in Comparative Example 7 was also decreased.

Compared with the polymerizing monomers M1 and M2 in Example 1, in Comparative Example 8, the fluorinated aliphatic chain Rf chain and the EO block were disposed in the same monomer molecule, resulting in that the volume expansion of the negative electrode sheet was increased by nearly 1 time, the cycle capacity retention ratio was also reduced to some extent, and the cycle performance was deteriorated to some extent. This is probably because the steric hindrance of the fluorinated aliphatic chain Rf chain and the EO block within the side chain upon contacting the lithium-containing layer was increased, which affected the combination with the lithium-containing layer.

Compared with Example 1, side groups of the EO block in Comparative Example 9 were increased, which reduced the flexibility, and changed the coordination relationship with the first side chain (containing Rf), resulting in that a small amount of lithium dendrites were formed, the volume expansion of the negative electrode sheet was significantly increased, and the cycle capacity retention ratio was reduced to some extent. In addition, the ionic conductivity of the polymer layer in Comparative Example 9 was also decreased to some extent.

The technical features of the above-mentioned embodiments and examples may be combined arbitrarily, and all possible combinations of the technical features in the above-mentioned embodiments and examples are not described for concise description, however, it should be regarded that the combinations of the technical features are within the scope of the present specification as long as there is no inconsistency.

It should be noted that the present application is not limited to the above-described embodiments and examples. The above-described embodiments and examples are merely examples, and any embodiment having substantially the same configuration as the technical concept and exhibiting the same operation and effect within the scope of the claims of the present application is included in the technical scope of the present application. The above embodiments and examples merely illustrate several embodiments of the present application, which are described in detail, but are not to be construed as limiting the scope of the patent. In addition, various modifications that can be conceived by those skilled in the art may be made to the embodiments without departing from the subject matter of the present application, and other embodiments constructed by combining some of the constituent elements in the embodiments are also included in the scope of the present application. It should be noted that, for those skilled in the art, several variations and modifications may be made without departing from the concept of the present application, which are all within the protection scope of the present application. Therefore, the protection scope of the present application should be defined by the appended claims, and the description and the drawings may be used to interpret the claims.

## Claims

1. A lithium metal negative electrode material, comprising lithium-containing metal and a polymer Poly bonded to lithium metal in the lithium-containing metal, wherein the polymer Poly has a linear carbon chain, and a first side chain and a second side chain that are grafted to a side group of the linear carbon chain, the first side chain contains a fluorinated aliphatic chain Rf, the second side chain contains an EO block, and the EO block has the structure of *-(CH₂CH₂O)_{z}-, wherein z is a positive integer, and * indicates an attachment site pointing to the linear carbon chain.

2. The lithium metal negative electrode material according to claim 1, wherein in the structure of the polymer Poly, the quantity of the first side chains is m, and the quantity of the second side chains is n, wherein m and n each are independently an integer greater than or equal to 8; and
optionally, m and n each are independently an integer selected from 8 to 600.

3. The lithium metal negative electrode material according to claim 2, wherein the polymer Poly satisfies one or more of the following features:
the ratio of m to n satisfies 0.5 ≤ m/n ≤ 8, optionally 1 ≤ m/n ≤ 5, and further optionally 1 ≤ m/n ≤ 3;
m is an integer selected from 50 to 250, and optionally, m is an integer selected from 50 to 200; and
n is an integer selected from 25 to 200, and optionally, n is an integer selected from 40 to 150.

4. The lithium metal negative electrode material according to any one of claims 1 to 3, wherein z is an integer selected from 2 to 10; and
optionally, z is an integer selected from 3 to 7.

5. The lithium metal negative electrode material according to any one of claims 1 to 4, wherein the polymer Poly comprises a repeating unit of a structure represented by (U1) and a repeating unit of a structure represented by formula (U2): 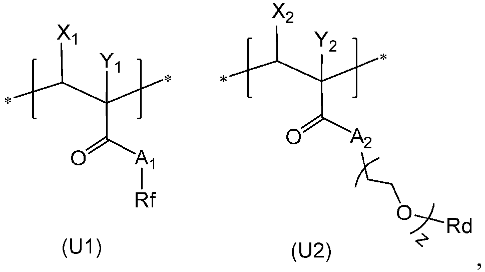 wherein
X₁ and X₂ each are independently H or an electron-withdrawing group;
Y₁ and Y₂ each are independently a cyano group, or a linking group formed by bonding a cyano group to lithium metal in the lithium-containing metal;
A₁ and A₂ each are independently O, S, or NR¹¹, and R¹¹ is H or C₁₋₃ alkyl;
Rd is hydrocarbyl or hydrocarbyl substituted by Q₁, Q₁ is selected from the following substituents: a cyano group, -C(=O)NH₂, -OC(=O)NHR⁶, and -S(=O)₂F, and R⁶ is H or C₁₋₆ alkyl; and
optionally, at least one of Y₁ and Y₂ is a linking group formed by bonding a cyano group to lithium metal in the lithium-containing metal.

6. The lithium metal negative electrode material according to claim 5, wherein in the structure of the polymer Poly, X₁ and X₂ each are independently H, or a cyano group, a nitro group, or - NR²¹R²² at each occurrence, and R²¹ and R²² each are independently H or C₁₋₃ alkyl;
optionally, R₂₁ and R₂₂ each are independently H or methyl; and
further optionally, both R₂₁ and R₂₂ are methyl.

7. The lithium metal negative electrode material according to claim 5 or 6, wherein in the structure of the polymer Poly, A₁ and A₂ each are independently O, S, or NH at each occurrence; and
Optionally, A₁ and A₂ each are independently O or NH at each occurrence.

8. The lithium metal negative electrode material according to any one of claims 5 to 7, wherein Rd is C₁₋₄ hydrocarbyl;
optionally, Rd is C₁₋₄ alkyl;
further optionally, Rd is C₁₋₃ alkyl; and
still further optionally, Rd is methyl.

9. The lithium metal negative electrode material according to any one of claims 5 to 8, wherein the structure of the polymer Poly comprises m repeating units represented by formula (U1) and n repeating units represented by formula (U2), and m and n are as defined in claim 2 or 3;
optionally, the m repeating units represented by formula (U1) and the n repeating units represented by formula (U2) are linearly arranged; and
further optionally, the polymer Poly has a general structure shown in formula (P1):

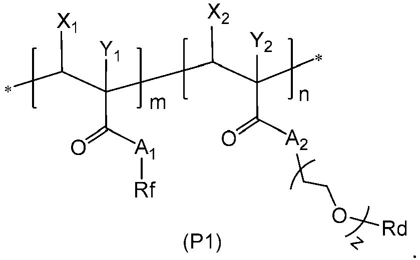

10. The lithium metal negative electrode material according to any one of claims 1 to 9, wherein the polymer Poly satisfies one or more of the following features:
the fluorine substitution ratio in any fluorinated aliphatic chain Rf is independently greater than or equal to 50%;
the quantity of fluorine atoms in any fluorinated aliphatic chain Rf is independently greater than or equal to 4; and
the mass proportion of fluorine in the polymer Poly is 15% to 44%.

11. The lithium metal negative electrode material according to claim 10, wherein the polymer Poly satisfies one or more of the following features:
the fluorine substitution ratio in any fluorinated aliphatic chain Rf is independently greater than or equal to 55%;
the quantity of fluorine atoms in any fluorinated aliphatic chain Rf is independently greater than or equal to 5, and optionally, the quantity of fluorine atoms in any fluorinated aliphatic chain Rf is independently 5 to 15; and
the mass proportion of fluorine in the polymer Poly is 15% to 41%, optionally 20% to 41%.

12. The lithium metal negative electrode material according to any one of claims 1 to 11, wherein the polymer Poly satisfies one or more of the following features:
any fluorinated aliphatic chain Rf independently contains 2 to 10 backbone carbon atoms; and
the quantity of carbon atoms in any fluorinated aliphatic chain Rf is independently an integer selected from 2 to 10.

13. The lithium metal negative electrode material according to claim 12, wherein the polymer Poly satisfies one or more of the following features:
any fluorinated aliphatic chain Rf independently contains 2 to 8 backbone carbon atoms, and optionally, any fluorinated aliphatic chain Rf independently contains 3 to 8 backbone carbon atoms; and
the quantity of carbon atoms in any fluorinated aliphatic chain Rf is independently an integer selected from 2 to 8, and optionally, the quantity of carbon atoms in any fluorinated aliphatic chain Rf is independently an integer selected from 3 to 8.

14. The lithium metal negative electrode material according to any one of claims 1 to 13, wherein in the structure of the polymer Poly, one, a plurality of, or all of fluorinated aliphatic chains Rf independently contain one or more heteroatoms selected from a group consisting of iodine, nitrogen, oxygen, sulfur, silicon, boron, and phosphorus;
optionally, the quantity of the heteroatoms in any one of one, a plurality of, or all of fluorinated aliphatic chains Rf is independently one or more; and
further optionally, the quantity of the heteroatoms in any one of one, a plurality of, or all of fluorinated aliphatic chains Rf is selected from 1, or 2 to 6.

15. The lithium metal negative electrode material according to claim 14, wherein in the structure of the polymer Poly, one, a plurality of, or all of fluorinated aliphatic chains Rf satisfy one or more of the following features:
the quantity of oxygen atoms in one, a plurality of, or all of fluorinated aliphatic chains Rf is 1, 2, 3, 4, or 5;
the quantity of nitrogen atoms in one, a plurality of, or all of fluorinated aliphatic chains Rf is 1, 2, or 3;
the quantity of sulfur atoms in one, a plurality of, or all of fluorinated aliphatic chains Rf is 1, 2, or 3;
the quantity of phosphorus atoms in one, a plurality of, or all of fluorinated aliphatic chains Rf is 1 or 2;
the quantity of iodine atoms in one, a plurality of, or all of fluorinated aliphatic chains Rf is 1, 2, 3, 4, 5, or 6;
the quantity of silicon atoms in one, a plurality of or all of fluorinated aliphatic chains Rf is 1 or 2; and
the quantity of boron atoms in one, a plurality of, or all of fluorinated aliphatic chains Rf is 1 or 2.

16. The lithium metal negative electrode material according to claim 14 or 15, wherein in the structure of the polymer Poly, one, a plurality of, or all of fluorinated aliphatic chains Rf contain one or more atoms or atomic groups selected from a group consisting of an iodine group, -NR¹²-, -O-, -S-, -S(O)₂-, >Si<, >B-, and >P(=O)-, and R¹² is H or C₁₋₃ alkyl;
optionally, R¹² is H or methyl; and
further optionally, R¹² is H.

17. The lithium metal negative electrode material according to any one of claims 14 to 16, wherein in the structure of the polymer Poly, one, a plurality of, or all of fluorinated aliphatic chains Rf contain one or more atoms or atomic groups selected from a group consisting of -O-, - S(O)₂-, and -(O=)P(O-)₂;
optionally, one, a plurality of, or all of fluorinated aliphatic chains Rf contain one or more -O-;
optionally, one, a plurality of, or all of fluorinated aliphatic chains Rf contain -S(O)₂F; and
optionally, one, a plurality of, or all of fluorinated aliphatic chains Rf contain -(O=)P(O-)₂.

18. The lithium metal negative electrode material according to any one of claims 1 to 17, wherein in the structure of the polymer Poly, any fluorinated aliphatic chain Rf is independently a linear structure or a branched structure.

19. The lithium metal negative electrode material according to any one of claims 1 to 18, wherein in the structure of the polymer Poly, any fluorinated aliphatic chain Rf is independently a saturated structure or an unsaturated structure.

20. The lithium metal negative electrode material according to any one of claims 1 to 19, wherein in the structure of the polymer Poly, the structure of any fluorinated aliphatic chain Rf is independently represented by formula (III-1), formula (III-2), or formula (III-3): 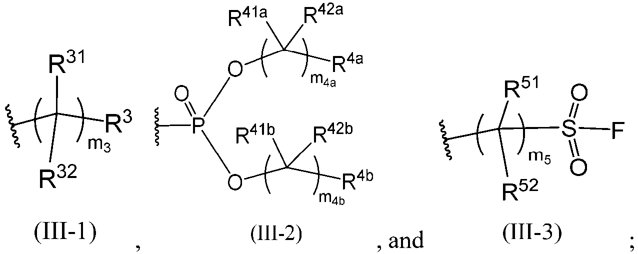 wherein
in formula (III-1), m₃ is an integer selected from 2 to 10, R³¹, R³², and R³ each are independently H or F at each occurrence, and the structure represented by formula (III-1) contains at least four F atoms;
in formula (III-2), m₄ₐ and m_{4b} each are independently an integer selected from 1 to 9, R^{41a}, R^{42a}, R^{4a}, R^{41b}, R^{42b}, and R^{4b} each are independently H or F at each occurrence, and the structure represented by formula (III-2) contains at least four F atoms; and
in formula (III-3), m₅ is an integer selected from 2 to 10, R⁵¹ and R⁵² each are independently H or F at each occurrence, and the structure represented by formula (III-3) contains at least four F atoms.

21. The lithium metal negative electrode material according to claim 20, wherein the polymer Poly satisfies one or more of the following features:
m₃ is an integer selected from 3 to 10, and optionally, m₃ is an integer selected from 3 to 8;
m₄ₐ and m_{4b} each are independently an integer selected from 2 to 9; optionally, m₄ₐ and m_{4b} each are independently an integer selected from 2 to 8; further optionally, m₄ₐ and m_{4b} each are independently an integer selected from 3 to 8; and still further optionally, m₄ₐ and m_{4b} each are independently an integer selected from 3 to 6; and
m₅ is an integer selected from 3 to 10, and optionally, m₅ is an integer selected from 3 to 8.

22. The lithium metal negative electrode material according to claim 20 or 21, wherein in the structure of the polymer Poly, the structures of fluorinated aliphatic chains Rf are all represented by formula (III-1), or the structures of fluorinated aliphatic chains Rf are all represented by formula (III-2), or the structures of fluorinated aliphatic chains Rf are all represented by formula (III-3).

23. The lithium metal negative electrode material according to any one of claims 20 to 22, wherein in the structure of the polymer Poly, the quantity of H atoms at each occurrence of formula (III-1) is 0, 1, 2, 3, or 4, the quantity of H atoms at each occurrence of formula (III-2) is 0, 1, 2, 3, 4, 5, or 6, and the quantity of H atoms at each occurrence of formula (III-3) is 0, 1, 2, 3, or 4;
optionally, the quantity of H atoms in formula (III-1) is 0;
optionally, the quantity of H atoms in formula (III-2) is 0; and
optionally, the quantity of H atoms in formula (III-3) is 0.

24. The lithium metal negative electrode material according to any one of claims 1 to 23, wherein in the structure of the polymer Poly, any fluorinated aliphatic chain Rf is independently any one of the following structures:

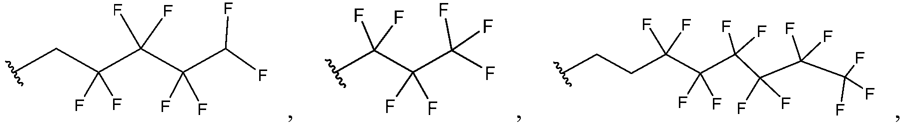

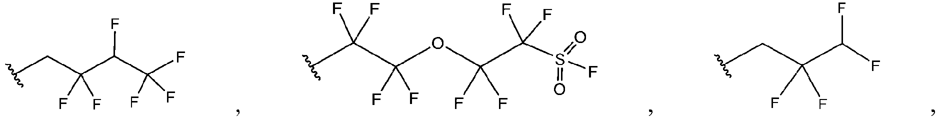

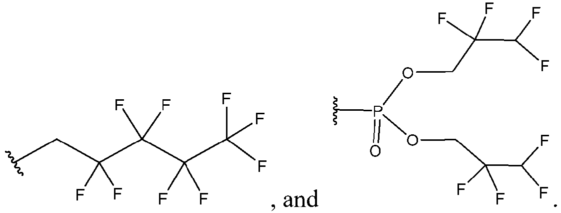

25. The lithium metal negative electrode material according to any one of claims 1 to 24, wherein the number-average molecular weight of the polymer Poly is selected from 10 kDa to 200 kDa;
optionally, the number-average molecular weight of the polymer Poly is selected from 40 kDa to 100 kDa; and
further optionally, the number-average molecular weight of the polymer Poly is selected from 50 kDa to 80 kDa.

26. The lithium metal negative electrode material according to any one of claims 1 to 25, wherein the lithium-containing metal comprises a lithium simple substance or a lithium alloy; and
optionally, the lithium alloy contains lithium, and further contains one or more elements of silver, magnesium, aluminum, gold, zinc, tin, copper, nickel, and titanium.

27. The lithium metal negative electrode material according to any one of claims 1 to 26, wherein the amount of the lithium metal in the lithium-containing metal relative to the polymer Poly is greater than or equal to a catalytic amount, and is measured in molar ratio.

28. A negative electrode sheet, comprising a lithium-containing layer and a polymer layer that are stacked, wherein the negative electrode sheet comprises the lithium metal negative electrode material according to any one of claims 1 to 27; and
the lithium-containing layer comprises lithium-containing metal in the lithium metal negative electrode material, and the polymer layer comprises a polymer Poly in the lithium metal negative electrode material.

29. The negative electrode sheet according to claim 28, wherein the lithium-containing layer is substantially composed of the lithium-containing metal;
optionally, the lithium-containing layer is made of a lithium simple substance; and
alternatively optionally, the lithium-containing layer is made of a lithium alloy.

30. The negative electrode sheet according to claim 28 or 29, wherein the polymer layer further comprises a first electrolyte solution, and the first electrolyte solution comprises a lithium salt and a first electrolyte solution solvent.

31. The negative electrode sheet according to any one of claims 28 to 30, wherein one or more of the following features are satisfied:
the lithium salt comprises one or more of lithium hexafluorophosphate, tetrafluoroboric acid, lithium bisfluorosulfonylimide, lithium bis(trifluoromethanesulphonyl)imide, lithium difluoro(oxalato)borate, lithium perchlorate, and lithium bis(oxalate)borate; and
the first electrolyte solution solvent comprises one or more of ethylene carbonate, propylene carbonate, dimethyl carbonate, diethyl carbonate, ethyl methyl carbonate, dipropyl carbonate, diphenyl carbonate, dibutyl carbonate, butylene carbonate, dimethoxyethane, tetrahydrofuran, dioxolane, methyl nonafluoro-n-butyl ether, 1,1,2,2-tetrafluoroethyl-2,2,3,3-tetrafluoropropyl ether, octafluoropentyl-tetrafluoroethyl ether, 1,2-bis(cyanoethoxy)ethane, diphenyl ether, and 18-crown-6.

32. The negative electrode sheet according to claim 30 or 31, wherein the concentration of the lithium salt in the first electrolyte solution is selected from 0.2 mol/L to 8 mol/L;
optionally, the concentration of the lithium salt in the first electrolyte solution is selected from 0.5 mol/L to 5 mol/L; and
further optionally, the concentration of the lithium salt in the first electrolyte solution is selected from 0.5 mol/L to 2 mol/L.

33. The negative electrode sheet according to any one of claims 30 to 32, wherein the mass proportion of the first electrolyte solution in the polymer layer is 20% to 80%;
optionally, the mass proportion of the first electrolyte solution in the polymer layer is 30% to 60%;
further optionally, the mass proportion of the first electrolyte solution in the polymer layer is 40% to 60%; and
still further optionally, the mass proportion of the first electrolyte solution in the polymer layer is 40% to 55%.

34. The negative electrode sheet according to any one of claims 30 to 33, wherein the mass ratio of the polymer Poly to the first electrolyte solution is 4:1 to 0.25:1;
optionally, the mass ratio of the polymer Poly to the first electrolyte solution is 3:1 to 0.5:1;
further optionally, the mass ratio of the polymer Poly to the first electrolyte solution is 2.5:1 to 1:1; and
still further optionally, the mass ratio of the polymer Poly to the first electrolyte solution is 7:3 to 2:1.

35. The negative electrode sheet according to any one of claims 30 to 34, wherein based on the first electrolyte solution, the swelling ratio of the polymer layer at 25°C is 8% to 65%;
further optionally, the swelling ratio of the polymer layer at 25°C is 15% to 55%;
still further optionally, the swelling ratio of the polymer layer at 25°C is 18% to 44%; and
yet further optionally, the swelling ratio of the polymer layer at 25°C is 30% to 40%.

36. The negative electrode sheet according to any one of claims 30 to 35, wherein based on the first electrolyte solution, ionic conductivity of the swollen polymer layer at 25°C is selected from 0.001 mS/cm to 5 mS/cm;
optionally, the ionic conductivity of the swollen polymer layer at 25°C is selected from 0.1 mS/cm to 5 mS/cm;
alternatively optionally, the ionic conductivity of the swollen polymer layer at 25°C is selected from 0.5 mS/cm to 5 mS/cm;
alternatively optionally, the ionic conductivity of the swollen polymer layer at 25°C is selected from 0.9 mS/cm to 4.8 mS/cm; and
alternatively optionally, the ionic conductivity of the swollen polymer layer at 25°C is selected from 0.95 mS/cm to 2.6 mS/cm.

37. The negative electrode sheet according to any one of claims 28 to 36, wherein the thickness of the polymer layer is 5 nm to 10 µm;
optionally, the thickness of the polymer layer is 0.02 µm to 8 µm;
further optionally, the thickness of the polymer layer is 0.05 µm to 8 µm;
still further optionally, the thickness of the polymer layer is 0.05 µm to 5 µm; and
yet further optionally, the thickness of the polymer layer is 0.1 µm to 5 µm.

38. The negative electrode sheet according to any one of claims 28 to 37, wherein the elastic modulus of the polymer layer at 25°C is 0.1 MPa to 65 MPa;
optionally, the elastic modulus of the polymer layer at 25°C is 0.5 MPa to 50 MPa;
further optionally, the elastic modulus of the polymer layer at 25°C is 10 MPa to 46 MPa;
still further optionally, the elastic modulus of the polymer layer at 25°C is 18 MPa to 41 MPa; and
yet further optionally, the elastic modulus of the polymer layer at 25°C is 29 MPa to 41 MPa.

39. The negative electrode sheet according to any one of claims 28 to 38, wherein the elastic deformation range of the polymer layer at 25°C is 55% to 350%;
optionally, the elastic deformation range of the polymer layer at 25°C is 150% to 350%;
further optionally, the elastic deformation range of the polymer layer at 25°C is 150% to 300%; and
still further optionally, the elastic deformation range of the polymer layer at 25°C is 168% to 280%.

40. A lithium metal secondary battery, comprising a positive electrode sheet, a separator, and the negative electrode sheet according to any one of claims 28 to 39, wherein the separator is disposed between the positive electrode sheet and the negative electrode sheet, and the polymer layer is disposed on a side that is of the negative electrode sheet and that is close to the separator.

41. The lithium metal secondary battery of claim 40, further comprising a second electrolyte, wherein a component of the second electrolyte may be the same as or different from that of the first electrolyte solution in the polymer layer.

42. An electric device, comprising the lithium metal secondary battery according to claim 40 or 41.

43. Use of a monomer composition in preparation of a negative electrode sheet or a lithium metal secondary battery, wherein the monomer composition comprises a first monomer represented by formula (M1) and a second monomer represented by formula (M2): 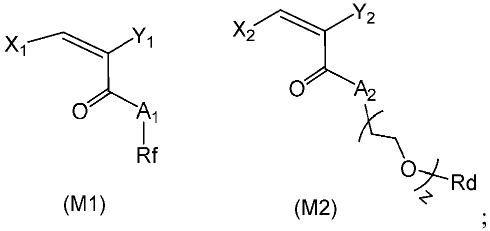
wherein X₁, X₂, Y₁, Y₂, A₁, A₂, Rf, and Rd each are as defined in any one of claims 5 to 25, z is as defined in claim 1 or 4, and at least one of Y₁ and Y₂ is a cyano group;
the negative electrode sheet comprises a lithium-containing layer, and the lithium-containing layer contains lithium metal; and
the first monomer and the second monomer are used to form a polymer layer bonded to the lithium metal in the negative electrode sheet.

44. The use according to claim 43, comprising the following steps: the first monomer and the second monomer are jointly in contact with the lithium metal in the lithium-containing layer, and form the polymer layer through an in-situ polymerization reaction.

45. The use according to claim 43 or 44, wherein the negative electrode sheet is as defined in any one of claims 27 to 40, and the lithium metal secondary battery is as defined in claim 40 or 41.

46. A preparation method for a negative electrode sheet, comprising the following steps of:
providing a negative electrode sheet matrix, wherein an outermost layer of at least a side of the negative electrode sheet matrix is a lithium-containing layer, and the lithium-containing layer comprises lithium metal; and further providing a reaction mixture containing a monomer composition and a first electrolyte solution; and
coating the reaction mixture on a surface of the lithium-containing layer on at least a side of the negative electrode sheet matrix, so that the monomer composition is in contact with at least a catalytic amount of lithium metal, and the monomer composition forms a polymer Poly bonded to the lithium metal in the lithium-containing layer through an in-situ polymerization reaction, wherein
the monomer composition is as defined in claim 43; and
the first electrolyte solution is as defined in any one of claims 30 to 34.

47. The preparation method according to claim 46, wherein the reaction temperature of the in-situ polymerization is selected from 30°C to 100°C;
optionally, the reaction temperature of the in-situ polymerization is selected from 30°C to 60°C; and
alternatively optionally, the reaction temperature of the in-situ polymerization is selected from 40 °C to 80°C.

48. The preparation method according to claim 46 or 47, wherein the reaction time of the in-situ polymerization is selected from 0.1h to 24h;
optionally, the reaction time of the in-situ polymerization is selected from 0.1h to 12h; and
further optionally, the reaction time of the in-situ polymerization is selected from 0.1h to 6h.

49. The preparation method according to any one of claims 46 to 48, wherein the polymer layer in any one of claims 27 to 40 is formed on a surface of the negative electrode sheet matrix.

50. The preparation method according to any one of claims 46 to 49, wherein the negative electrode sheet substrate is a pure lithium sheet or a lithium alloy; and
optionally, the mass proportion of lithium in the lithium alloy is greater than or equal to 50%.

51. The preparation method according to any one of claims 46 to 50, wherein the negative electrode sheet is as defined in any one of claims 27 to 40.
